# EUROPEAN PATENT APPLICATION

(11) **EP 4 644 766 A1**
(43) Date of publication of application: **05.11.2025**
(21) Application number: 24831062.5
(22) Date of filing: 28.06.2024
(51) Int. Cl.: F21S 8/06, F04D 29/42, H02K 7/14, H02K 11/30, H02K 5/22, F21V 23/00, F21V 33/00, F04D 25/08, F04D 29/28, F04D 29/62, F04D 29/44, F04D 29/30, F04D 29/66, F21Y 115/10

(54) **BLADELESS FAN LAMP**

(30) Priority: 29.06.2023 CN 202310786302; 29.06.2023 CN 202321686278 U; 29.06.2023 CN 202321695489 U; 29.06.2023 CN 202321688202 U; 15.09.2023 CN 202322523767 U
(71) Applicant: Ningbo Goneo Domestic Electric Appliance Co., Ltd., Ningbo, Zhejiang 315300 (CN)
(72) Inventor: XU, Yulong, Ningbo, Zhejiang 315300 (CN); LIAO, Junjie, Ningbo, Zhejiang 315300 (CN); LIN, Yinping, Ningbo, Zhejiang 315300 (CN)
(74) Representative: Yang, Shu
(86) International application number: PCT/CN2024/102743
(87) International publication number: WO 2025/002438

(57) **Abstract**

A bladeless fan lamp, comprising a fan mechanism (1), the fan mechanism (1) comprising a wind wheel (11) and a motor (12). An air inlet (111) is formed in the top of the wind wheel (11), and an air outlet (112) is formed in the side surface of the wind wheel (11), the air outlet (112) being arranged in the circumferential direction of the wind wheel (11); the motor (12) is connected to the wind wheel (11) so as to drive the wind wheel (11) to rotate. Such fan mechanism (1) can enlarge an air outlet area.

## Description

The present disclosure claims priority to the Chinese Patent Application No. 202310786302.5 entitled "BLADELESS FAN LAMP" filed on June 29, 2023, priority to the Chinese Utility Model Application No. 202321686278.X entitled "FAN ASSEMBLY AND BLOWING APPARATUS" filed on June 29, 2023, priority to the Chinese Utility Model Application No. 202321695489.X entitled "ANTI-SHAKE BLADELESS FAN LAMP" filed on June 29, 2023, priority to the Chinese Utility Model Application No. 202321688202.0 entitled "FAN MECHANISM WITH ANNULAR AIRFLOW AND HEAT DISSIPATION APPARATUS" filed on June 29, 2023, and priority to the Chinese Utility Model Application No. 202322523767.X entitled "CEILING FAN AND FAN LAMP WITH LONG AIR DELIVERY DISTANCE AND EVEN ANNULAR AIRFLOW" filed on September 15, 2023, the contents of which are herein incorporated by reference in their entirety.

### TECHNICAL FIELD

The present disclosure relates to the technical field of lighting, and in particular, relates to a bladeless fan lamp.

### BACKGROUND

A fan can accelerate the airflow in the environment. In daily life, a fan is an important tool for cooling and heat dissipation for people in high-temperature environments. With the development of the economy, bladeless fan technology has also been rapidly developed.

In the related art, a bladeless fan primarily uses a turbine-style fan wheel, and a motor rotor is directly connected to the turbine-style fan wheel to drive blades to rotate, thereby generating airflow.

### SUMMARY

The present disclosure provides a bladeless fan lamp. The bladeless fan lamp includes a fan mechanism, and the fan mechanism includes a fan wheel and a motor. An air inlet is formed on a top of the fan wheel, and an air outlet is formed on a side surface of the fan wheel, the air outlet being arranged along a circumferential direction of the fan wheel 11; and the motor is connected to the fan wheel to drive the fan wheel to rotate.

In some embodiments, the fan mechanism further includes a fan housing, the fan wheel and the motor are located within the fan housing, the fan wheel is spaced apart from the fan housing, and the motor is provided with a hollow shaft; and

the bladeless fan lamp further includes a lighting mechanism, the lighting mechanism includes a control assembly, a light-emitting assembly, and conductive members, where the conductive members pass through the hollow shaft and are electrically connected to the control assembly and the light-emitting assembly.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is an exploded view of a bladeless fan lamp according to an embodiment of the present disclosure;
FIG. 2 is a schematic assembly diagram of a fan wheel and a rotating motor in a bladeless fan lamp according to an embodiment of the present disclosure;
FIG. 3 is an exploded view of a fan mechanism and a lighting mechanism in a bladeless fan lamp according to an embodiment of the present disclosure;
FIG. 4 is a schematic assembly diagram of a fan mechanism and a suspension mechanism in a bladeless fan lamp according to an embodiment of the present disclosure;
FIG. 5 is a cross-sectional view taken along line A-A in FIG. 4;
FIG. 6 is a schematic assembly diagram of an outer rotor motor and a suspension mechanism in a bladeless fan lamp according to an embodiment of the present disclosure;
FIG. 7 is a first schematic assembly diagram of an outer rotor motor and a light-emitting assembly in a bladeless fan lamp according to an embodiment of the present disclosure;
FIG. 8 is a second schematic assembly diagram of an outer rotor motor and a light-emitting assembly in a bladeless fan lamp according to an embodiment of the present disclosure;
FIG. 9 is a schematic assembly diagram of a light source fixture and a connecting member in a bladeless fan lamp according to an embodiment of the present disclosure;
FIG. 10 is a schematic assembly diagram of an outer rotor motor and a connecting member in a bladeless fan lamp according to an embodiment of the present disclosure;
FIG. 11 is a first schematic structural diagram of a connecting member in a bladeless fan lamp according to an embodiment of the present disclosure;
FIG. 12 is a second schematic structural diagram of a connecting member in a bladeless fan lamp according to an embodiment of the present disclosure;
FIG. 13 is a schematic diagram of a setting position of an error-proofing part and an error-proofing structure in a bladeless fan lamp according to an embodiment of the present disclosure;
FIG. 14 is a schematic diagram of the cooperation between a first positioning structure and a second positioning structure in a bladeless fan lamp according to an embodiment of the present disclosure;
FIG. 15 is a cross-sectional assembly view of an inner rotor motor and a fan wheel in a bladeless fan lamp according to an embodiment of the present disclosure;
FIG. 16 is a cross-sectional assembly view of an inner rotor motor, a fan wheel, and a suspension mechanism in a bladeless fan lamp according to an embodiment of the present disclosure;
FIG. 17 is a schematic diagram of the arrangement of a sleeve within an inner rotor motor in a bladeless fan lamp according to an embodiment of the present disclosure;
FIG. 18 is a schematic diagram of the arrangement of a connecting rod within an inner rotor motor in a bladeless fan lamp according to an embodiment of the present disclosure;
FIG. 19 is a cross-sectional view of a fan mechanism in a bladeless fan lamp according to an embodiment of the present disclosure;
FIG. 20 is a cross-sectional view of a bladeless fan lamp according to an embodiment of the present disclosure;
FIG. 21 is a schematic assembly diagram of a rotating motor, a second sealing vibration damping member, and a fan wheel in a bladeless fan lamp according to an embodiment of the present disclosure;
FIG. 22 is a schematic assembly diagram of a fan wheel and a motor in a bladeless fan lamp according to an embodiment of the present disclosure;
FIG. 23 is a first schematic structural diagram of a bottom plate in a bladeless fan lamp according to an embodiment of the present disclosure;
FIG. 24 is a second schematic structural diagram of a bottom plate in a bladeless fan lamp according to an embodiment of the present disclosure;
FIG. 25 is a third schematic structural diagram of a bottom plate in a bladeless fan lamp according to an embodiment of the present disclosure;
FIG. 26 is a fourth schematic structural diagram of a bottom plate in a bladeless fan lamp according to an embodiment of the present disclosure;
FIG. 27 is a fifth schematic structural diagram of a bottom plate in a bladeless fan lamp according to an embodiment of the present disclosure;
FIG. 28 is a first schematic structural diagram of a fan wheel in a bladeless fan lamp according to an embodiment of the present disclosure;
FIG. 29 is a cross-sectional assembly view of a fan wheel and a motor in a bladeless fan lamp according to an embodiment of the present disclosure;
FIG. 30 is a second schematic structural diagram of a fan wheel in a bladeless fan lamp according to an embodiment of the present disclosure;
FIG. 31 is a sixth schematic structural diagram of a bottom plate in a bladeless fan lamp according to an embodiment of the present disclosure;
FIG. 32 is a schematic diagram of an arrangement position of a rotational vibration damping member in a bladeless fan lamp according to an embodiment of the present disclosure;
FIG. 33 is a first cross-sectional view of a bladeless fan lamp according to an embodiment of the present disclosure;
FIG. 34 is an enlarged view of portion A in FIG. 33;
FIG. 35 is an exploded view of a bladeless fan lamp according to an embodiment of the present disclosure;
FIG. 36 is an enlarged view of portion B in FIG. 33;
FIG. 37 is a second cross-sectional view of a bladeless fan lamp according to an embodiment of the present disclosure;
FIG. 38 is a schematic assembly diagram of a light-emitting assembly (with a lampshade omitted) and a second air duct component in a bladeless fan lamp according to an embodiment of the present disclosure;
FIG. 39 is a schematic diagram of an arrangement position of a vibration damping assembly in a bladeless fan lamp according to an embodiment of the present disclosure;
FIG. 40 is a schematic assembly diagram of a lampshade on an air duct assembly in a bladeless fan lamp according to an embodiment of the present disclosure;
FIG. 41 is a schematic assembly diagram of a light source fixture on a stator assembly in a bladeless fan lamp according to an embodiment of the present disclosure;
FIG. 42 is a first longitudinal cross-sectional view of a fan mechanism in a bladeless fan lamp according to an embodiment of the present disclosure;
FIG. 43 is a transverse cross-sectional view of a fan mechanism in a bladeless fan lamp according to an embodiment of the present disclosure;
FIG. 44 is a second longitudinal cross-sectional view of a fan mechanism in a bladeless fan lamp according to an embodiment of the present disclosure;
FIG. 45 is a first schematic structural diagram of a first air duct component (connected with a flow guide assembly) in a bladeless fan lamp according to an embodiment of the present disclosure;
FIG. 46 is a second schematic structural diagram of a first air duct component (connected with a flow guide assembly) in a bladeless fan lamp according to an embodiment of the present disclosure;
FIG. 47 is an exploded view of a fan mechanism in a bladeless fan lamp according to an embodiment of the present disclosure;
FIG. 48 is a bottom view of a fan mechanism (including hidden lines of blades) in a bladeless fan lamp according to an embodiment of the present disclosure;
FIG. 49 is a first exploded view of a bladeless fan lamp according to an embodiment of the present disclosure;
FIG. 50 is a first schematic structural diagram of a bladeless fan lamp according to an embodiment of the present disclosure;
FIG. 51 is a bottom view of a bladeless fan lamp according to an embodiment of the present disclosure;
FIG. 52 is a second schematic structural diagram of a bladeless fan lamp according to an embodiment of the present disclosure;
FIG. 53 is a first cross-sectional view of a bladeless fan lamp according to an embodiment of the present disclosure;
FIG. 54 is a second cross-sectional view of a bladeless fan lamp according to an embodiment of the present disclosure;
FIG. 55 is a third schematic structural diagram of a bladeless fan lamp according to an embodiment of the present disclosure;
FIG. 56 is a third cross-sectional view of a bladeless fan lamp according to an embodiment of the present disclosure;
FIG. 57 is a schematic diagram of a central angle occupied by both ends of a shielding tongue and a wind sensation radius according to some embodiments of the present disclosure;
FIG. 58 is a schematic diagram of a first wind direction of a bladeless fan lamp according to an embodiment of the present disclosure;
FIG. 59 is a schematic diagram of a second wind direction of a bladeless fan lamp according to an embodiment of the present disclosure;
FIG. 60 is a fourth schematic structural diagram of a bladeless fan lamp according to an embodiment of the present disclosure;
FIG. 61 is a schematic structural diagram of a flow guide member in a bladeless fan lamp according to an embodiment of the present disclosure;
FIG. 62 is a first cross-sectional view of a flow guide member in a bladeless fan lamp according to an embodiment of the present disclosure;
FIG. 63 is a second cross-sectional view of a flow guide member in a bladeless fan lamp according to an embodiment of the present disclosure;
FIG. 64 is a third cross-sectional view of a flow guide member in a bladeless fan lamp according to an embodiment of the present disclosure;
FIG. 65 is a second exploded view of a bladeless fan lamp according to an embodiment of the present disclosure;
FIG. 66 is a first schematic diagram of a demolding process of a flow guide member in a bladeless fan lamp according to an embodiment of the present disclosure;
FIG. 67 is a second schematic diagram of a demolding process of a flow guide member in a bladeless fan lamp according to an embodiment of the present disclosure;
FIG. 68 is a third schematic diagram of a demolding process of a flow guide member in a bladeless fan lamp according to an embodiment of the present disclosure;
FIG. 69 is a fourth schematic diagram of a demolding process of a flow guide member in a bladeless fan lamp according to an embodiment of the present disclosure;
FIG. 70 is a fifth schematic diagram of a demolding process of a flow guide member in a bladeless fan lamp according to an embodiment of the present disclosure;
FIG. 71 is a cross-sectional view of a bladeless fan lamp according to an embodiment of the present disclosure;
FIG. 72 is a first half cross-sectional view of a bladeless fan lamp according to an embodiment of the present disclosure;
FIG. 73 is a second half cross-sectional view of a bladeless fan lamp according to an embodiment of the present disclosure;
FIG. 74 is a first schematic structural diagram of a fan wheel in a bladeless fan lamp according to an embodiment of the present disclosure;
FIG. 75 is a second schematic structural diagram of a fan wheel in a bladeless fan lamp according to an embodiment of the present disclosure;
FIG. 76 is a first half cross-sectional view of a fan wheel in a bladeless fan lamp according to an embodiment of the present disclosure;
FIG. 77 is a second half cross-sectional view of a fan wheel in a bladeless fan lamp according to an embodiment of the present disclosure;
FIG. 78 is a schematic structural diagram of a blade in a bladeless fan lamp according to an embodiment of the present disclosure;
FIG. 79 is a cross-sectional view of a blade in a bladeless fan lamp according to an embodiment of the present disclosure; and
FIG. 80 is a half cross-sectional view of a bladeless fan lamp according to an embodiment of the present disclosure.

### Reference numerals:

1. fan mechanism; 11. fan wheel; 111. air inlet; 112. air outlet; 113. bottom plate; 1131. hub part; 11311. installation shaft hole; 11312. first through hole; 1132. connecting part; 1133. transition part; 1134. second circumferential edge; 114. top plate; 1141. first circumferential edge; 115. blade; 1151. leading edge; 11511. forward protrusion structure; 1152. trailing edge; 116. annular strengthening rib; 117. reinforcement rib; 118. first reinforcement structure; 1181. first reinforcement part; 1182. second reinforcement part; 11821. connecting rib; 1183. third reinforcement part; 1184. fourth reinforcement part; 1185. fifth reinforcement part; 1186. sixth reinforcement part; 119. second reinforcement structure; 1191. seventh reinforcement part; 12. motor; 121. hollow shaft; 122. inner stator assembly; 1221. stator shaft; 12211. external thread; 12212. error-proofing structure; 1222. stator sleeve; 123. rotor assembly; 1231. rotor sleeve; 1232. flange; 1233. rotor core; 1234. rotor flange; 12341. second through hole; 124. rotor shaft; 125. outer stator assembly; 126. main body part; 127; output shaft; 13. fan housing; 131. outer housing; 1311. air intake; 1312. air inlet grille; 132. air duct assembly; 1321. first air duct component; 13211. air inlet gap; 13212. bent part; 132121. vertical bent surface; 13213. first arc-shaped part; 1322. second air duct component; 13221. second connecting structure; 13222. second arc-shaped part; 1323. air duct space; 1324. annular opening; 13241. air outlet gap; 1325. support member; 1326. positioning member; 1327. first snap-fit component; 133. flow guide assembly; 1331. flow guide member; 13311. flow guide surface; 13312. first air guide part; 13313. second air guide part; 133131. first sub-air guide surface; 133132. first sub-air guide surface; 13314. transition surface; 13315. first connecting structure; 134. fourth fastener; 14. second fastener; 15. rotational vibration damping member; 2. lighting mechanism; 21. control assembly; 22. light-emitting assembly; 221. light source fixture; 2211. through opening; 2212. second positioning structure; 2213. central part; 2214. flanged part; 222. light-emitting element; 223. lampshade; 2231. second snap-fit component; 23. conductive member; 24. limiting member; 241. sleeve; 242. connecting rod; 243. wire clip; 25. fixing assembly; 251. connecting member; 2511. connecting plate; 25111. first opening; 25112. recessed part; 25113. second opening; 25114. third opening; 2512. limiting part; 2513. channel; 2514. error-proofing part; 2515. first flange part; 2516. second flange part; 2517. connecting rib; 2518. third flange part; 2519. first positioning structure; 252. first fastener; 26. vibration damping assembly; 261. first vibration damping member; 2611. first sub-vibration damping portion; 2612. second vibration damping portion; 262. second vibration damping member; 27. third fastener; 3. suspension mechanism; 31. hoisting housing; 311. through hole; 312. internal thread; 100. upper mold; 1001. protrusion; 200. lower mold; 2001. groove.

### DETAILED DESCRIPTION

The technical solutions in the embodiments of the present disclosure will be described hereinafter with reference to the accompanying drawings in the embodiments of the present disclosure, and it is apparent that the described embodiments are only a portion, but not all of the embodiments of the present disclosure. Based on the embodiments in the present disclosure, all other embodiments obtained by those of ordinary skill in the art without making creative efforts shall fall within the protection scope of the present disclosure.

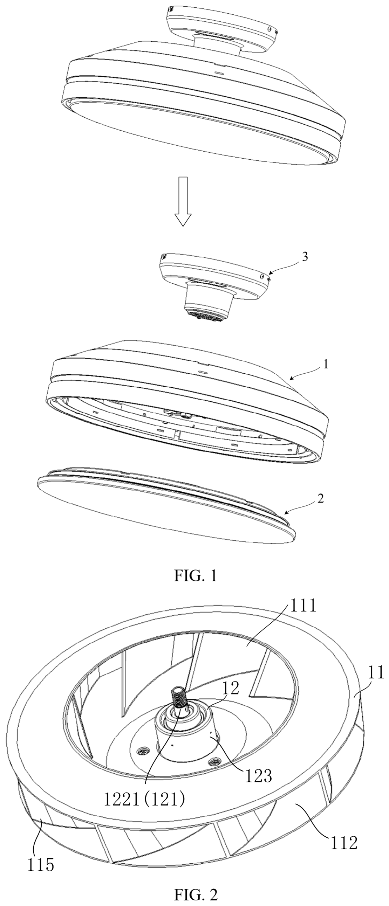

The embodiments relate to a bladeless fan lamp. As shown in FIGS. 1 and 2, the bladeless fan lamp includes a fan mechanism 1. The fan mechanism 1 includes a fan wheel 11 and a motor 12. An air inlet 111 is formed on a top of the fan wheel 11, and an air outlet 112 is formed on a side surface of the fan wheel 11; the air outlet 112 is arranged along a circumferential direction of the fan wheel 11. The motor 12 is connected to the fan wheel 11 to drive the fan wheel 11 to rotate.

By forming the air inlet 111 of the fan wheel 11 on the top and the air outlet 112 on the side surface of the fan wheel 11, the air inlet 111 and the air outlet 112 do not interfere with each other, such that the stability of the airflow of the fan wheel 11 is improved. In addition, the air outlet 112 of the fan wheel 11 is arranged along the circumferential direction of the fan wheel 11, such that the fan wheel 11 can evenly discharge air along its circumference, thereby increasing the air outlet area.

In the related art, a rotating motor 12 for driving turbine blades 115 to rotate is generally disposed on a central axis of an overall unit. A middle portion of the rotating motor 12 is an armature core, and a plurality of coil windings surround an outer side of the armature core. A light board in the fan lamp is usually arranged at the bottom of the overall unit. The wiring of the light board bypasses the outer side of the air duct and is fixed on an outer wall of the air duct through a wire clip to avoid the turbine blades 115. However, the wiring method for the light board is complicated and the winding distance is long, which results in increased material cost.

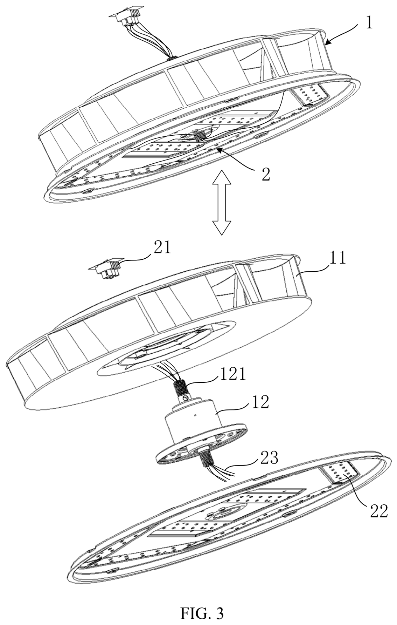

In this regard, the embodiments of the present disclosure provide a bladeless fan lamp, which is typically used in indoor environments. As shown in FIG. 3, the bladeless fan lamp includes a fan mechanism 1 and a lighting mechanism 2. The fan mechanism 1 includes a fan wheel 11 and a motor 12. The fan wheel 11 is driven by the motor 12. Since the motor 12 is configured to drive the fan wheel 11 to rotate, the motor 12 is also referred to as a rotating motor 12. The motor 12 is provided with a hollow shaft 121. The lighting mechanism 2 includes a control assembly 21, a light-emitting assembly 22, and a conductive member 23. The control assembly 21 and the light-emitting assembly 22 are respectively located at opposite sides of the rotating motor 12. The conductive member 23 passes through the hollow shaft 121 and is electrically connected to the control assembly 21 and the light-emitting assembly 22.

In the bladeless fan lamp according to the embodiments of the present disclosure, the fan wheel 11 is driven to rotate by the rotating motor 12 having the hollow shaft 121. The control assembly 21 and the light-emitting assembly 22 of the lighting mechanism 2 are respectively located at the opposite sides of the rotating motor 12. For the transmission of an electrical signal between the control assembly 21 and the light-emitting assembly 22, one end of the conductive member 23 is electrically connected to the control assembly 21, and the other end passes through the interior of the hollow shaft 121 of the rotating motor 12 and is electrically connected to the light-emitting assembly 22. Compared to the related art where the winding is done from the outer side of the air duct, the solution in the embodiments reduce the winding distance of the conductive member 23 because the wire directly threads through the interior of the hollow shaft 121 of the motor 12. As a result, the material cost of the conductive member 23 is effectively reduced, such that the cost of the bladeless fan lamp is further reduced. Moreover, since the winding distance is shorter and the wiring is simpler, the conductive members 23 are prevented from winding with each other, thereby enhancing safety.

To make the technical solutions and advantages of the present disclosure clearer, the following further describes and explains the structure of each portion of the bladeless fan lamp according to the embodiments of the present disclosure with reference to the accompanying drawings.

### (I) Installation method of the bladeless fan lamp

As shown in FIGS. 1 and 3, a bladeless fan lamp is provided according to the embodiments of the present disclosure. The bladeless fan lamp includes a fan mechanism 1, a lighting mechanism 2, and a suspension mechanism 3.

The suspension mechanism 3 is typically installed on a top of the fan mechanism 1 for suspending the bladeless fan lamp onto an installation carrier, which may be, for example, a ceiling. The fan mechanism 1 and the lighting mechanism 2 are configured respectively to provide a blowing function and a lighting function. The lighting mechanism 2 is installed on a bottom of the fan mechanism 1. In the embodiments of the present disclosure, the fan mechanism 1 and the lighting mechanism 2 are functionally independent from each other. The user may control the fan mechanism 1 and the lighting mechanism 2 separately to perform corresponding functions.

In the bladeless fan lamp according to the embodiments, the fan mechanism 1 includes a fan housing 13 as well as a fan wheel 11 and a rotating motor 12 which are located inside the fan housing 13. The fan wheel 11 is spaced apart from the fan housing 13. The fan mechanism 1 realizes the blowing function by the fan wheel 11. The blades 115 of the fan wheel 11 are hidden inside the housing of the overall unit, so it prevents the danger of accidental contact with exposed blades 115, thereby enhancing safety and protection. Such a fan light whose blades 115 are not visible to the user is referred to as a bladeless fan lamp.

The fan wheel 11 is driven by the motor 12 to rotate and blow air. The motor 12 is provided with a hollow shaft 121. The hollow shaft 121 is adapted to allow the conductive member 23 to pass through, such that the conductive member 23 can electrically connect the control assembly 21 and the light-emitting assembly 22 of the lighting mechanism 2 in a simpler wiring method. Moreover, because of the short winding distance of the conductive member 23, the material is saved and the cost is reduced.

In the embodiments of the present disclosure, the hollow shaft 121 of the motor 12 is a stator shaft 1221 or a rotor shaft 124. The related structure of the bladeless fan lamp will be described hereinafter with respect to the two possible scenarios.

As shown in FIG. 2, in the first possible scenario, the motor 12 is an outer rotor motor 12 and the hollow shaft 121 is the stator shaft 1221. The outer rotor motor 12 includes a rotor assembly 123. The rotor assembly 123 surrounds an outer side of the stator shaft 1221 and is connected to the fan wheel 11.

After the outer rotor motor 12 is activated, the hollow stator shaft 1221 remains stationary, the rotor assembly 123 rotates around the axis of the stator shaft 1221, and the fan wheel 11, driven by the rotor assembly 123, synchronously rotates to generate airflow. In some embodiments, both ends of the hollow stator shaft 1221 extend from opposite sides of the rotor assembly 123 and are connected to the suspension mechanism 3 and the lighting mechanism 2, respectively.

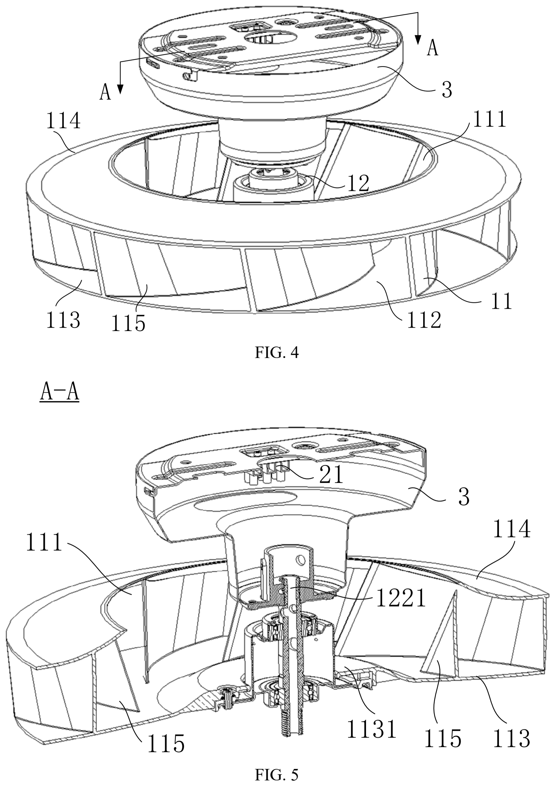

As shown in FIGS. 4 and 5, in some embodiments of the present disclosure, the suspension mechanism 3 and the control assembly 21 are located on the same side of the outer rotor motor 12. The suspension mechanism 3 is connected to the stator shaft 1221. An interior of the suspension mechanism 3 communicates with an interior of the stator shaft 1221, such that the conductive member 23 can pass through the interior of the stator shaft 1221 and extend to the interior of the suspension mechanism 3. In some embodiments, the control assembly 21 is installed inside the suspension mechanism 3, and the control assembly 21 and the light-emitting assembly 22 are respectively located on opposite sides of the motor 12.

In the bladeless fan lamp, power leads of the outer rotor motor 12 and the lighting mechanism 2 are led out from the suspension mechanism 3 so as to be connected to an external circuit embedded in the ceiling for power. The control assembly 21 of the lighting mechanism 2 is installed inside the suspension mechanism 3 and is electrically connected to the light-emitting assembly 22 through the conductive member 23 so as to control the light-emitting assembly 22 to emit light for illumination.

In some embodiments, as shown in FIGS. 4 and 5, the suspension mechanism 3 is located above the air inlet 111 on the fan wheel 11. Moreover, a dimension, in a radial direction of the fan wheel 11, of the suspension mechanism 3 may be smaller than a diameter of the air inlet 111. Exemplarily, there is spacing in a height direction between the suspension mechanism 3 and the air inlet 111, allowing the fan wheel 11 to draw air through the air inlet 111 as well as through the suspension mechanism 3 and the air inlet 111. Therefore, setting a radial dimension of the suspension mechanism 3 to be smaller than the diameter of the air inlet 111 can prevent the suspension mechanism 3 from obstructing the air intake of the fan wheel 11. In some embodiments, the radial dimension of the suspension mechanism 3 is understood as the maximum dimension of the suspension mechanism 3 in the radial direction of the fan wheel 11.

In some embodiments, as shown in FIG. 5, the bottom of the suspension mechanism 3 can pass through the air inlet 111 and is accommodated in the height space of the fan wheel 11. In this way, the dimension of the bladeless fan lamp in the height direction is reduced.

The height space of the fan wheel 11 may be understood as the whole space enclosed between a lower edge and an upper edge of the fan wheel 11 in the height direction. The height space of the fan wheel includes not only the internal space of the fan wheel but also the space enclosed by the curvature of the external housing of the fan wheel itself.

In some embodiments, as shown in FIGS. 4 and 5, the fan wheel 11 includes a bottom plate 113, a top plate 114, and blades 115. The bottom plate 113 and the top plate 114 are arranged oppositely along a height direction. The air inlet 111 is formed on the top plate 114, and the bottom plate 113 is located below the top plate 114 and is opposite the air inlet 111. The height direction is parallel to the rotation axis of the fan wheel 11. The blades 115 are connected between the bottom plate 113 and the top plate 114. Exemplarily, as shown in FIGS. 4 and 5, the bottom plate 113 limits the lower edge of the fan wheel 11 in the height direction, and the top plate 114 limits the upper edge of the fan wheel 11 in the height direction. Therefore, a space formed by the gap between the bottom plate 113 and the top plate 114 may be a portion of the height space of the fan wheel 11. In addition, as shown in FIG. 5, the bottom plate 113 may partially protrude toward the top plate 114 so as to form a hub part 1131. In this way, other plate bodies connected in a circumferential direction of the hub part 1131 in the bottom plate 113 may limit the lower edge of the fan wheel 11 in the height direction so as to form a height space. In this case, one side, away from the air inlet 111, of the protruding hub part 1131 and the other plate bodies around the hub part 1131 enclose a protruding space, which is a portion of the height space of the fan wheel.

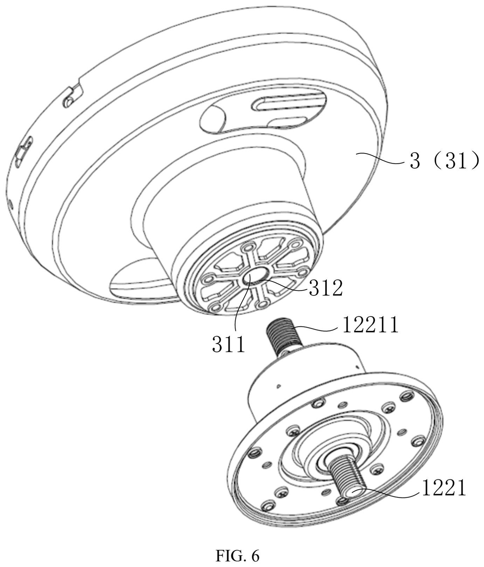

Referring to FIG. 6, in some embodiments, one end, close to the suspension mechanism 3, of the stator shaft 1221 is provided with an external thread 12211, and the suspension mechanism 3 is provided with an internal thread 312. The stator shaft 1221 and the suspension mechanism 3 are cooperatively connected by the external thread 12211 and the internal thread 312, and the connection method is simple and reliable.

In some embodiments, as shown in FIG. 6, the suspension mechanism 3 may include a hoisting housing 31. A through hole 311 is formed at a bottom of the hoisting housing 31. The stator shaft 1221 may extend into the interior of the hoisting housing 31 through the through hole 311. The internal thread 312 is provided on the inner wall of the through hole 311 to cooperate with the external thread 12211 on the outer wall of the stator shaft 1221.

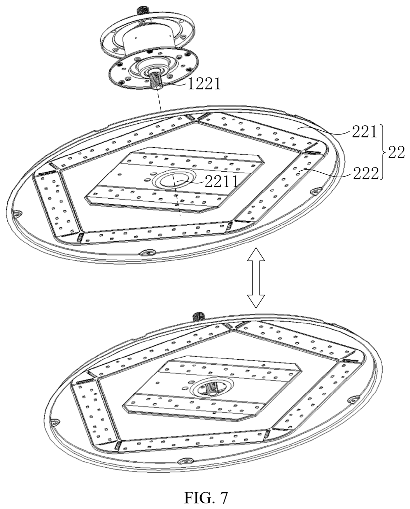

In some embodiments of the present disclosure, as shown in FIG. 7, the light-emitting assembly 22 includes a light source fixture 221 and a light-emitting element 222. The light source fixture 221 is connected to a stator shaft 1221 and is spaced apart from a rotor assembly 123. A through opening 2211 is formed in a middle position of the light source fixture 221, and the stator shaft 1221 is located within the through opening 2211. The light-emitting element 222 is installed on one side, facing away from the fan wheel 11, of the light source fixture 221.

The light source fixture 221 may be, for example, a lamp panel. The lamp panel is not in contact with the fan wheel 11 and the rotor assembly 123. Therefore, while the rotating motor 12 is operated, the lamp panel remains stationary. One side, facing away from the fan wheel 11, of the lamp panel, is provided with an installation position for the light-emitting element 222. The light-emitting element 222 is installed in a corresponding installation position on the lamp panel. The light-emitting element 222 may be, for example, an LED light board for providing illumination light. The conductive member 23 is adapted to be connected between the control assembly 21 and the LED light board.

Optionally, as shown in FIG. 7, there are a plurality of light-emitting elements 222, and the plurality of the light-emitting elements 222 are symmetrically distributed on the light source fixture 221 to ensure even light emission. The symmetric mode of the plurality of light-emitting elements 222 on the light source fixture 221 may be axial symmetry, and a symmetry axis passes through a central point of the light source fixture 221. Alternatively, the symmetric mode may also be central symmetry about the center point of the light source fixture 221. Optionally, a plurality of LED light boards are connected, by connecting lines, in series or in parallel.

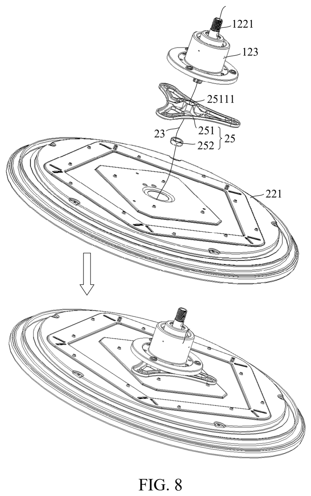

The light source fixture 221 is directly or indirectly connected to the stator shaft 1221. In some embodiments of the present disclosure, as shown in FIG. 8, the lighting mechanism 2 further includes a fixing assembly 25. The fixing assembly 25 is connected to at least one of the stator shaft 1221 and the light source fixture 221.

A first opening 25111 is formed on the fixing assembly 25, and the stator shaft 1221 runs through the first opening 25111, or the conductive members 23 extending from the interior of the stator shaft 1221 pass through the first opening 25111.

In some embodiments, the fixing assembly 25 is connected to the light source fixture 221 and the stator shaft 1221 respectively, such that the light source fixture 221 is assembled to the stator shaft 1221. The fixing assembly 25 is not in contact with the rotor assembly 123 and the fan wheel 11, such that in the case that the rotor assembly 123 rotates around the stator shaft 1221, both of the light source fixture 221 and the fixing assembly 25, which are connected to the stator shaft 1221, remain stationary. Exemplarily, the connection method between the fixing assembly 25 and the light source fixture 221 or the stator shaft 1221 includes, but is not limited to, at least one of the bolted connection, the threaded connection, the snap-fit connection, the riveting, the welding, or the interference fitting.

In some embodiments of the present disclosure, with continued reference to FIG. 8, the fixing assembly 25 includes at least one connecting member 251 or at least one first fastener 252. Each connecting member 251 is provided with one first opening 25111 described above, and the connecting member 251 is sleeved on the stator shaft 1221 through the first opening 25111. The first fastener 252 is cooperatively connected to the stator shaft 1221 to fix the at least one connecting member 251 on the stator shaft 1221. The first fastener 252 is located on one side, away from the rotor assembly 123, of the connecting member 251 and abuts against the connecting member 251. Alternatively, the connecting member 251, the light source fixture 221 and the first fastener 252 are sequentially arranged along a direction away from the rotor assembly 123, and the first fastening member 252 abuts against the light source fixture 221.

In one possible situation,, the light source fixture 221 and the connecting member 251 are fixedly connected, and the connecting member 251 is fastened to the stator shaft 1221 by the first fastener 252. Exemplarily, the connecting member 251 is sleeved on the stator shaft 1221 through the first opening 25111. The first fastener 252 abuts against the connecting member 251 and cooperates with the stator shaft 1221, such that the connecting member 251 is securely connected to the stator shaft 1221. The light source fixture 221 may be connected to the connecting member 251 by a screw.

In another possible situation,, the light source fixture 221 and the connecting member 251 abut against each other, and both the light source fixture 221 and the connecting member 251 are tightly fastened to the stator shaft 1221 by the first fastener 252. Exemplarily, the connecting member 251 is sleeved on the stator shaft 1221 through the first opening 25111. The light source fixture 221 is sleeved on the stator shaft 1221 through the through opening 2211 and is located on one side, away from the rotor assembly 123 (or the fan wheel 11), of the connecting member 251. The first fastener 252 is located on one side, away from the rotor assembly 123 (or the fan wheel 11), of the light source fixture 221 and abuts against the light source fixture 221. In this case, the light source fixture 221 and the connecting member 251 also abut against each other under the action of the abutting force of the first fastener 252. Moreover, the first fastener 252 cooperates with the stator shaft 1221, such that the connecting member 251 and the light source fixture 221 are securely connected to the stator shaft 1221. In this case, the connecting member 251 and the light source fixture 221 may be not connected to each other so as to simplify assembly. Alternatively, the connecting member 251 and the light source fixture 221 may also be connected to each other to improve the fixation reliability and stability of the light source fixture 221.

The at least one connecting member 251 may be located between the light source fixture 221 and the fan wheel 11 and/or the at least one connecting member 251 is located on one side, away from the fan wheel 11, of the light source fixture 221.

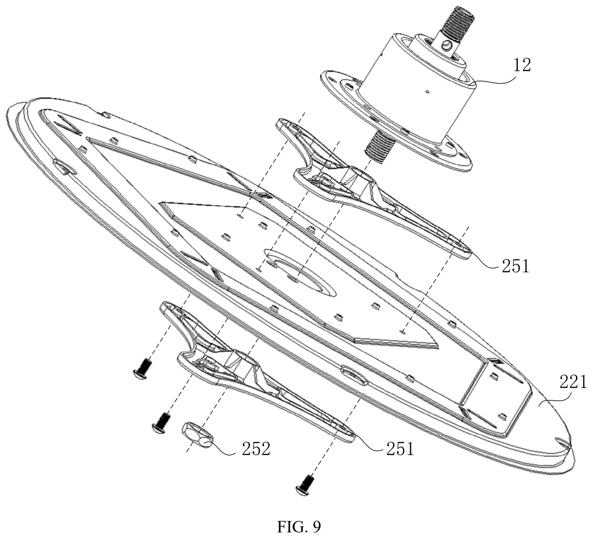

In some embodiments of the present disclosure, there may be more than one connecting members 251. As shown in FIG. 9, among the more than one connecting members 251, there are two connecting members 251 adjacent to the light source fixture 221 and located respectively on opposite sides of the light source fixture 221 and the light source fixture 221 is connected to the two connecting members 251 respectively.

The number of the connecting member 251 is the same as the number of the first fastener 252, such that each connecting member 251 is fixed in conjunction with one first fastener 252. Alternatively, the number of the connecting member 251 may be less than the number of the first fastener 252. Exemplarily, as shown in FIG. 9, the fixing assembly 25 includes two connecting members 251 and one first fastener 252, with the first fastener 252 located on one side, away from the fan wheel 11, of both the two connecting members 251.

The more than one connecting members 251 are distributed on opposite sides of the light source fixture 221 and the light source fixture 221 is sandwiched between the more than one connecting members 251. Exemplarily, as shown in FIG. 9, there are two connecting members 251, and the light source fixture 221 and the two connecting members 251 are all sleeved on the stator shaft 1221, and the light source fixture 221 is sandwiched between the two connecting members 251. The first fastener 252 is located on one side, away from the rotor assembly 123, of all the light source fixture 221 and the two connecting members 251, abuts against an adjacent connecting member 251, and cooperates with the stator shaft 1221, thereby securely connecting both the two connecting members 251 and the light source fixture 221 to the stator shaft 1221.

The light source fixture 221 is also connected to two adjacent connecting members 251. Exemplarily, as shown in FIG. 9, a via hole is formed on the light source fixture 221, and via holes are also formed on the two connecting members 251 respectively; the via hole on the light source fixture 221 corresponds to positions of the via holes on the two connecting members 251, and a fastening bolt runs through all the three via holes, thus connecting the light source fixture 221 and the two connecting members 251 together. By sandwiching and connecting the light source fixture 221 with a plurality of connecting members 251, the connection stability and reliability of the light source fixture 221 can be improved.

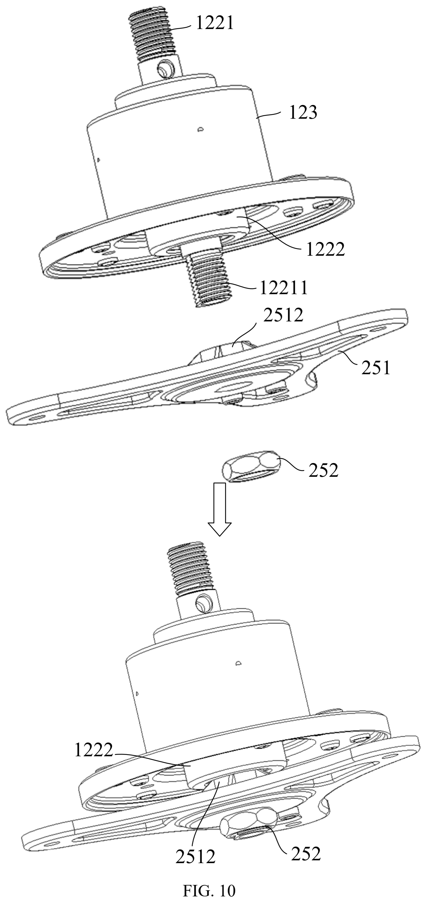

In some embodiments of the present disclosure, the structure of the motor 12 is as shown in FIG. 10. The motor 12 further includes a stator sleeve 1222, and the stator sleeve 1222 is connected to an outer side of the stator shaft 1221. Moreover, the stator shaft 1221 runs through and connects with the stator sleeve 1222, and the rotor assembly 123 surrounds an outer side of the stator sleeve 1222. The stator shaft 1221 and the stator sleeve 1222 are collectively referred to as the inner stator assembly 122, and the rotor assembly 123 is sleeved on an outer side of the inner stator assembly 122.

The stator shaft 1221 extends out of the stator sleeve 1222 and is provided with an external thread 12211 at one end close to the light source fixture 221. The first fastener 252 is a nut. The nut and the stator shaft 1221 are in thread fit so as to fasten at least one of the connecting member 251 and the light source fixture 221 between the stator sleeve 1222 and the nut.

In the embodiments, a portion of the stator shaft 1221 extends out of the stator sleeve 1222. The connecting member 251, the light source fixture 221, and the nut are all sleeved on the extended portion of the stator shaft 1221. Moreover, the nut and the external thread 12211 on the stator shaft 1221 are in thread fit by the internal thread 312 so as to fasten at least one of the connecting member 251 and the light source fixture 221 to the stator shaft 1221.

Taking the structure shown in FIG. 10 as an example, it should be noted that in the example, the connecting member 251 is fastened in a sandwiched manner between the stator sleeve 1222 and the nut. When fixing the connecting member 251, one end, away from the nut, of the connecting member 251 needs to abut against the stator sleeve 1222, while the other end abuts against the nut.

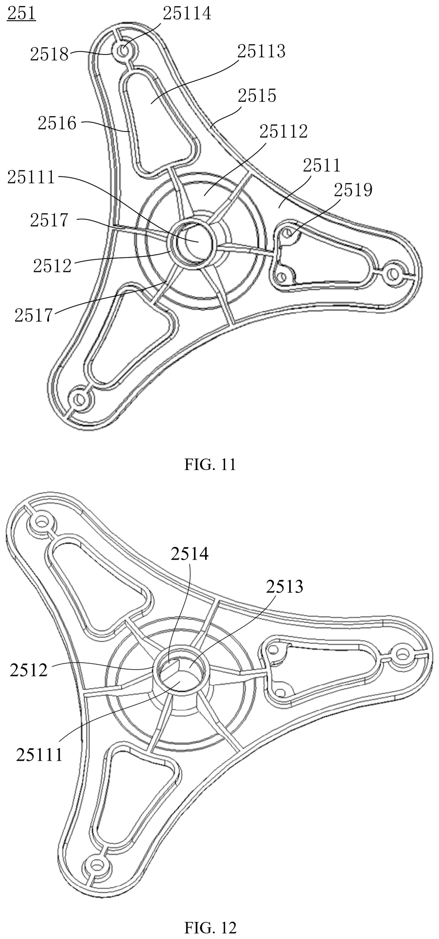

FIG. 11 illustrates the structure of a connecting member 251. Referring to FIG. 11, in some embodiments of the present disclosure, the connecting member 251 includes a connecting plate 2511 and a limiting part 2512. The first opening 25111 is located on the connecting plate 2511. The limiting part 2512 is connected to one side, close to the rotor assembly 123, of the connecting plate 2511 and abuts against the stator sleeve 1222, so as to create space between the connecting member 251 and the rotor assembly 123.

The limiting part 2512 is configured to limit a relative position between the connecting member 251 and the rotor assembly 123. As shown in FIGS. 10 and 11, the limiting part 2512 abuts against the stator sleeve 1222, such that portions of the connecting member 251 except the limiting part 2512 are kept away from the rotor assembly 123. Although a distance between the limiting part 2512 and the rotor assembly 123 is relatively close, the limiting part is not in contact with the rotor assembly 123 since the limiting part abuts against the stator sleeve 1222. Thus, the connecting member 251 is entirely not in contact with the rotor assembly 123, thereby avoiding friction with the rotor assembly 123 and mutual interference. Exemplarily, as shown in FIG. 10, one side, away from the connecting plate 2511, of the limiting part 2512 extends into the stator sleeve 1222. Moreover, a radial dimension of one side, close to the connecting plate 2511, of the limiting part 2512 is greater than an inner diameter of the stator sleeve 1222, such that one side, close to the connecting plate 2511, of the limiting part 2512 can be exposed outside the stator sleeve 1222 and abut against a lower edge of the stator sleeve 1222.

In the embodiments of the present disclosure, as shown in conjunction with FIGS. 8 and 11, the connecting plate 2511 is connected to the light source fixture 221. In the axial direction of the stator shaft 1221, the distance between the light source fixture 221 and the rotor assembly 123 is greater than the distance between the limiting part 2512 and the rotor assembly 123, thereby ensuring that the light source fixture 221 is not in contact with the rotor assembly 123, and avoiding mutual interference between the light source fixture 221 and the rotatable rotor assembly 123.

In the embodiments of the present disclosure, the limiting part 2512 can be of any shape and can be connected to any position on one side, facing the rotor assembly 123, of the connecting plate 2511, as long as the distance between the portions of the connecting member 251 except the limiting part 2512 and the rotor assembly 123 can be increased.

Optionally, as shown in FIG. 11, the limiting part 2512 may be arranged around the first opening 25111, and the stator shaft 1221 runs through the limiting part 2512. In this case, an end surface, away from the connecting plate 2511, of the limiting part 2512 is an annular end surface, and the annular end surface is suitable for abutting against the annular end surface of the stator sleeve 1222 and thus has an excellent stability. Moreover, since the stator shaft 1221 passes through the inner side of the annular end surface, which can provide a certain limitation, the connecting member 251 is less prone to becoming skewed under the action of the abutting force, thereby improving the reliability of the abutting fit.

In some embodiments, the connecting plate 2511 is provided with a recessed part 25112 located in a central area, and the recessed part 25112 is further away from the outer rotor motor 12 (or rotor assembly 123) than other portions of the connecting plate 2511. The first opening 25111 may be formed at a central position of the recessed part 25112. When the limiting part 2512 surrounding the first opening 25111 abuts against the stator sleeve 1222, the forces on various portions of the connecting plate 2511 are relatively balanced.

In some embodiments, referring to FIG. 12, the limiting part 2512 may be connected to the edge of the first opening 25111 and cooperates with the first opening 25111 to form a channel 2513 suitable for allowing the stator shaft 1221 to run through. The shape and size of the channel 2513 are adapted to match the shape and size of the stator shaft 1221, and the stator shaft 1221 located within the channel 2513 is in contact with the inner wall of the channel 2513, thereby improving the coaxiality of the assembly of the connecting member 251 and the stator shaft 1221.

The common stator shaft 1221 is cylindrical, and when installing the connecting member 251, the connecting member 251 may rotate relative to the stator shaft 1221 through the first opening 25111. The rotation cannot be completely avoided even with the abutting force provided by the first fastener 252. However, the connecting member 251 also abuts against or connects with the light source fixture 221 in the light-emitting assembly 22, and the light source fixture 221 must be prevented from rotating relative to the stator shaft 1221.

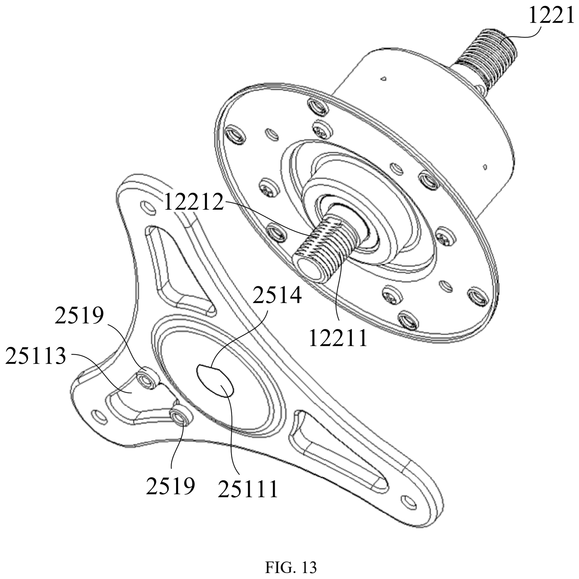

To address the above issue, in some embodiments of the present disclosure, as shown in FIGS. 12 and 13, the connecting member 251 may further include an error-proofing part 2514. The error-proofing part 2514 is located inside the channel 2513 formed by the first opening 25111 and the limiting part 2512 and is connected to at least a portion of the channel 2513. The stator shaft 1221 is provided with an error-proofing structure 12212, and the error-proofing structure 12212 cooperates with the error-proofing part 2514 to limit the rotation of the stator shaft 1221 relative to the connecting member 251.

As shown in FIG. 13, the error-proofing structure 12212 is, for example, a flat groove formed on the stator shaft 1221. One end of the flat groove extends to the end, close to the light-emitting assembly 22, of the stator shaft 1221. The flat groove can be created by cutting away a portion of the external thread 12211 on the stator shaft 1221. The error-proofing part 2514 is a protrusion with the shape and size adapted to those of the flat groove.

In the case of assembling the connecting member 251 onto the stator shaft 1221, the error-proofing part 2514 may be aligned with a position of the error-proofing structure 12212, and then the stator shaft 1221 is inserted into the channel 2513, such that the error-proofing part 2514 and the error-proofing structure 12212 are engaged with each other. In this case, due to the shape constraints of the error-proofing part 2514 and the error-proofing structure 12212, the stator shaft 1221 and the connecting member 251 cannot rotate relative to each other.

In some embodiments of the present disclosure, as shown in FIG. 11, the connecting member 251 further includes a first flange 1232 part. The first flange 1232 part is connected to the edge of the connecting plate 2511 and protrudes towards the rotor assembly 123. The first flange 1232 part, the connecting plate 2511, and the limiting part 2512 are connected by a connecting rib 2517.

The first flange 1232 part is configured to enhance the structural strength of the edge portion of the connecting plate 2511.

The first flange 1232 part, the connecting plate 2511, and the limiting part 2512 are connected by at least one connecting rib 2517, such that in an aspect, the structural strength of the limiting part 2512 can be enhanced, thereby improving the reliability of the abutment between the connecting member 251 and the stator sleeve 1222; in another aspect, the structural strength of the connecting plate 2511 can be enhanced, thereby improving the connection reliability between the connecting member 251 and the light source fixture 221, making the plate body of the connecting plate 2511 less prone to breakage.

Optionally, the connecting plate 2511, the first flange 1232 part, the limiting part 2512, and the connecting rib 2517 are integrally formed to further enhance the structural strength of the connecting member 251.

In some embodiments of the present disclosure, a second opening 25113 is further formed on the connecting plate 2511; the connecting member 251 further includes a second flange 1232 part, and the second flange 1232 part is connected to the edge of the second opening 25113 and protrudes towards the rotor assembly 123. The second flange 1232 part is connected to at least one of the first flange 1232 part and the limiting part 2512 through the connecting rib 2517, and the connecting rib 2517 is also connected to the connecting plate 2511.

The second opening 25113 is configured to reduce the weight of the connecting member 251, and the second flange 1232 part is configured to enhance the structural strength of the connecting plate 2511 at the edge of the second opening 25113. The second flange 1232 part is connected to at least one of the first flange 1232 part and the limiting part 2512 through the connecting rib 2517, which can further provide structural strength to the connecting member 251.

In some embodiments of the present disclosure, the connecting member 251 and the light source fixture 221 are connected through a fastener. Accordingly, a third opening 25114 is formed on the connecting plate 2511 to allow the fastener to pass through. The connecting member 251 further includes a third flange 1232 part, the third flange 1232 part is connected to the edge of the third opening 25114, and the third flange 1232 part is also connected to at least one of the first flange 1232 part, the second flange 1232 part, and the limiting part 2512 through the connecting rib 2517, and the connecting rib 2517 is also connected to the connecting plate 2511.

The third flange 1232 part is configured to enhance the structural strength of the connecting plate 2511 at the edge of the third opening 25114. The third flange 1232 part, connected to at least one of the first flange 1232 part, the second flange 1232 part, and the limiting part 2512 through the connecting rib 2517, which can further provide structural strength to the connecting member 251.

It should be noted that the dimensions of the first flange 1232 part, the second flange 1232 part, and the third flange 1232 part in the height direction are all smaller than the dimension of the limiting part 2512 in the height direction, such that the first flange 1232 part, the second flange 1232 part, and the third flange 1232 part are further away from the rotor assembly 123 than the limiting part 2512. The height direction is parallel to the axis of the stator shaft 1221.

In some embodiments, there are a plurality of the second openings 25113, the second flange 1232 parts, the third openings 25114, the third flange 1232 parts, and the connecting ribs 2517. Moreover, the connecting member 251 has a centrally symmetric structure with the center of symmetry located on the axis of the first opening 25111 (in the case of assembly, the axis of the first opening 25111 coincides with the axis of the stator shaft 1221).

Exemplarily, as shown in FIG. 11, the connecting plate 2511 is in a triangular star shape, with the first opening 25111 located at the exact central position of the connecting plate 2511; a second opening 25113 is formed in a middle portion of each of the three corners of the connecting plate 2511, and a third opening 25114 is formed on one side, away from the first opening 25111, of each second opening 25113. The third opening 25114 and the second opening 25113 do not communicate, and opening directions of the first opening 25111, the second opening 25113 and the third opening 25114 are all the same. The limiting part 2512 is connected to the edge of the first opening 25111, the outer edge of the connecting plate 2511 is connected to the first flange 1232 part, the edge of each second opening 25113 is connected to the second flange 1232 part, and the edge of each third opening 25114 is connected to the third flange 1232 part. The connecting plate 2511 is further provided with a plurality of connecting ribs 2517 distributed circumferentially along the limiting part 2512. Among the plurality of connecting ribs 2517, there is at least one connecting rib 2517 extending along the radial direction of the first opening 25111 and sequentially connecting the limiting part 2512, the second flange 1232 part, the third flange 1232 part, and the first flange 1232 part. Additionally, among the plurality of connecting ribs 2517, there is also at least one connecting rib 2517 extending along the radial direction of the first opening 25111 and connecting the limiting part 2512 and the first flange 1232 part. Among the plurality of connecting ribs 2517 directly connected to the limiting part 2512, an angle between any two connecting ribs 2517 is equal.

To facilitate the assembly of the connecting member 251 and the light source fixture 221, in some embodiments, as shown in FIG. 13, the connecting plate 2511 is further provided with a first positioning structure 2519, and the light source fixture 221 is provided with a second positioning structure 2212. The first positioning structure 2519 and the second positioning structure 2212 cooperate to limit the relative position of the connecting plate 2511 and the fixture.

Optionally, the first positioning structure 2519 is one of a protrusion and a recess and the second positioning structure 2212 is the other one. The recess is a through groove or a non-through groove.

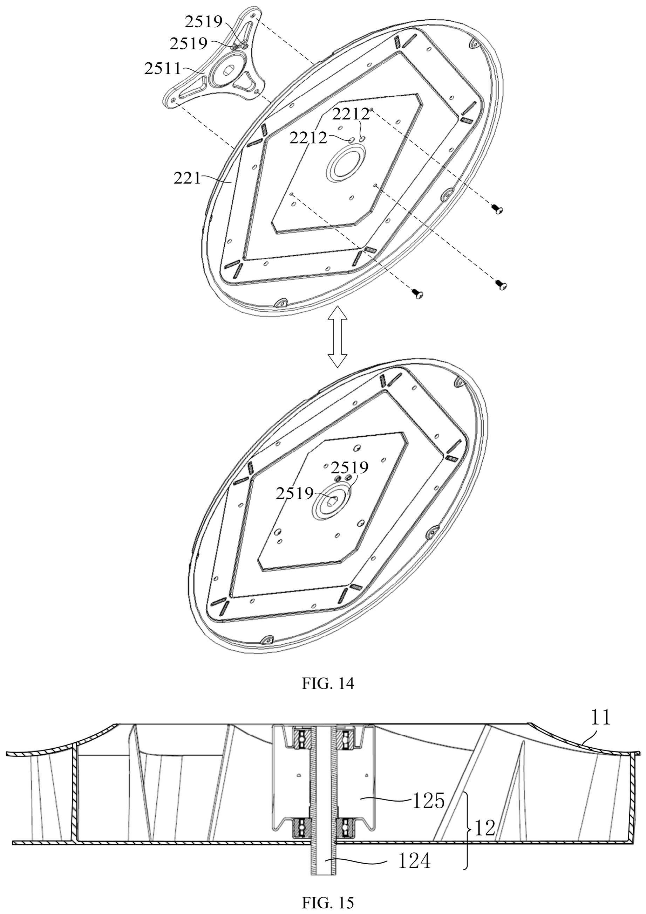

For an example, as shown in FIG. 14, the first positioning structure 2519 is a protrusion and the second positioning structure 2212 is a through groove. The protrusion extends from the connecting plate 2511 in a direction away from the rotor assembly 123 and is adapted to snap into a corresponding through groove on the light source fixture 221. The protrusion is located within one of the second openings 25113 and is connected to the connecting plate 2511 and/or the second flange 1232 part. A position of the through groove on the light source fixture 221 corresponds to a position of the protrusion.

As shown in FIG. 15, in the second possible scenario, in the second possible scenario, the motor 12 is an inner rotor motor 12, the hollow shaft 121 is a rotor shaft 124, and the rotor shaft 124 is connected to the fan wheel 11. The inner rotor motor 12 includes an outer stator assembly 125, the outer stator assembly 125 surrounds an outer side of the rotor shaft 124, and a gap is provided between the outer stator assembly 125 and the fan wheel 11.

After the inner rotor motor 12 is activated, the hollow rotor shaft 124 rotates, and the fan wheel 11 which is driven by the rotor shaft 124 rotates synchronously and generates airflow, while the stator assembly remains stationary.

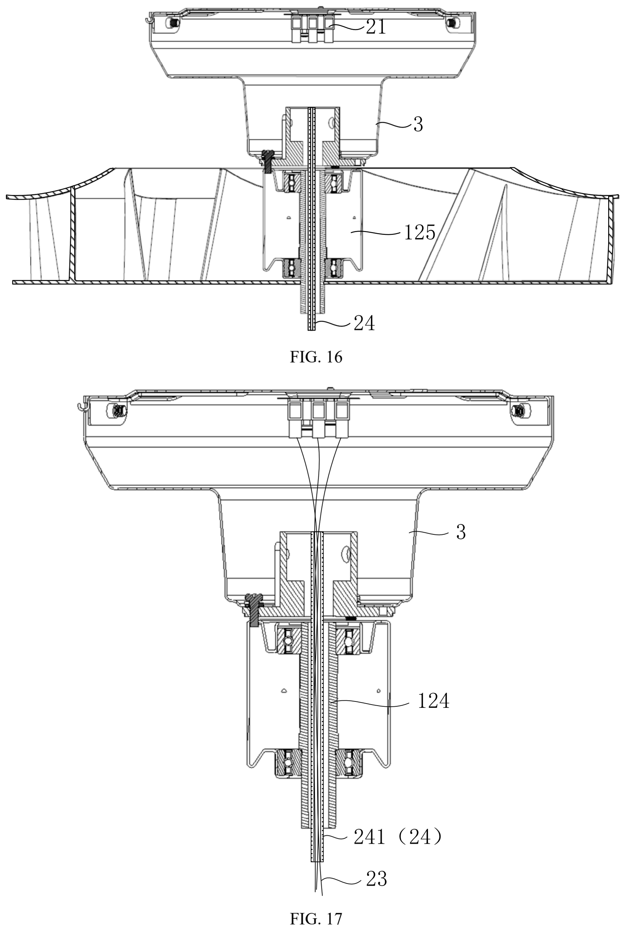

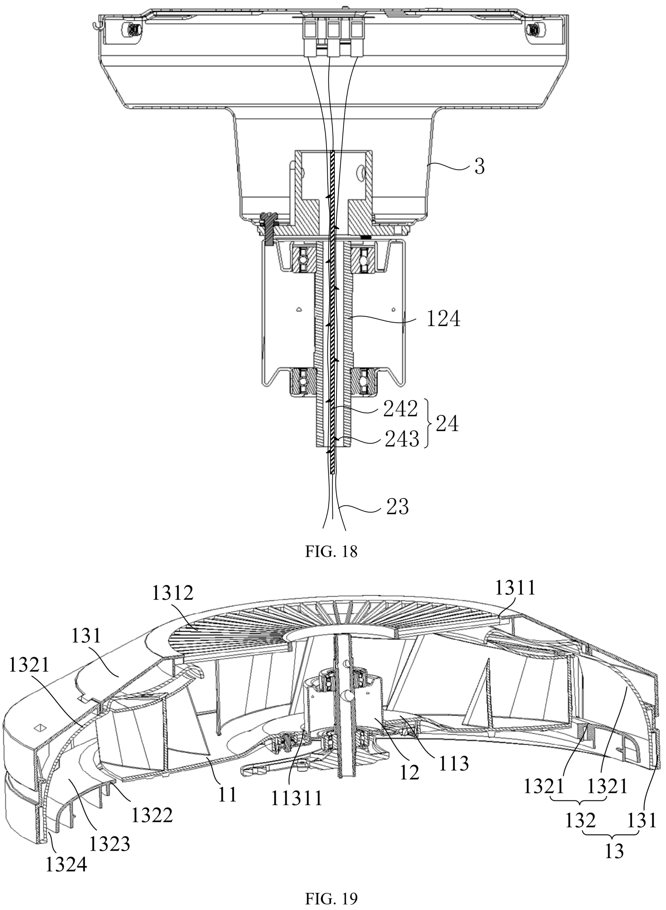

As shown in FIG. 19, the fan mechanism 1 includes a fan housing 13, the fan wheel 11 and motor 12 are located on an inner side of the fan housing 13 and are spaced apart from the fan housing 13. The light-emitting assembly 22 is connected to the fan housing 13. The suspension mechanism 3 is connected to the fan housing 13, and the control assembly 21 is installed inside the suspension mechanism 3. As shown in FIG. 16, the lighting mechanism 2 further includes a limiting member 24, and the limiting member 24 is connected to the suspension mechanism 3 and is configured to limit the position of the conductive member 23 within the rotor shaft 124.

The conductive member 23 typically uses a wire. It is easy to understand that in the case that the hollow shaft 121 is a rotor shaft 124, the rotor shaft 124 rotates at a high speed during operation, which may cause the wire passing through the rotor shaft to be winded or worn, thereby leading to safety accidents. To address the issue, a limiting member 24 is additionally provided in the embodiments of the present disclosure. The limiting member 24 can limit the position of the conductive member 23 inside the rotor shaft 124, preventing the conductive member 23 from rotating with the rotor shaft 124 or causing friction and wear with the rotor shaft 124, thereby enhancing safety.

In the embodiments of the present disclosure, the limiting member 24 can separate the conductive member 23 and the rotor shaft 124, thereby preventing the rotor shaft 124 from affecting the conductive member 23.

In some embodiments, as shown in FIG. 17, the limiting member 24 includes a sleeve 241, the sleeve 241 is connected to the suspension mechanism 3, and the interior of the sleeve 241 communicates with the interior of the suspension mechanism 3. The sleeve 241 runs through the rotor shaft 124, and there is a gap between the sleeve 241 and the inner wall of the rotor shaft 124. The conductive member 23 passes through the interior of the sleeve 241.

The sleeve 241 is made of a rigid material, and compared to a flexible wire, the position of the sleeve 241 is easier to control and constrain. As shown in FIG. 17, the sleeve 241 is fixed to the suspension mechanism 3 and is located inside the rotor shaft 124. There is a certain distance maintained between the sleeve 241 and the inner wall of the rotor shaft 124, and they are not in contact with each other and thus the sleeve 241 remains stationary regardless of whether the rotor shaft 124 is rotating at high speed. By threading the wire through the interior of the sleeve 241, the separation between the wire and the rotor shaft 124 is achieved, thereby preventing safety incidents caused by wire entanglement and wear.

In other embodiments, as shown in FIG. 18, the limiting member 24 also includes a connecting rod 242. The connecting rod 242 is connected to the suspension mechanism 3 and runs through the rotor shaft 124. There is a gap between the connecting rod 242 and the inner wall of the rotor shaft 124. A portion of the conductive member 23 extends from the interior of the suspension mechanism 3 and is fixed to an outer wall of the connecting rod 242. There is a gap between the conductive member 23 and the inner wall of the rotor shaft 124.

The connecting rod 242 is made of a rigid material. Compared to a flexible wire, the position and the extending direction of the connecting rod 242 are more controllable. As shown in FIG. 18, the connecting rod 242 is fixed to the suspension mechanism 3 and is located inside the rotor shaft 124. The connecting rod 242 is not in contact with the rotor shaft 124 and thus the connecting rod 242 remains stationary regardless of whether the rotor shaft 124 is rotating at high speed. An opening is formed at a bottom of the suspension mechanism 3, the conductive member 23 passes through the opening and is wound or fixed onto the connecting rod 242. Because there is a gap between the conductive member 23 fixed on the connecting rod 242 and the inner wall of the rotor shaft 124, safety accidents caused by wire entanglement and wear are prevented.

Optionally, as shown in FIG. 18, several wire clips 243 are provided on the connecting rod 242, and the conductive member 23 is fixed to the connecting rod 242 through the wire clips 243.

In summary, in the bladeless fan lamp according to the embodiments of the present disclosure, since the motor 12 is provided with a hollow stator shaft 1221 or a hollow rotor shaft 124, the conductive member 23 for connecting the control assembly 21 and the light-emitting assembly 22 of the lighting mechanism 2 can pass through the interior of the hollow shaft 121, thereby avoiding long-distance wiring, making the wiring simpler, enhancing safety, and reducing the material cost of the conductive member 23 and lowering the cost of the bladeless fan lamp.

In some embodiments of the present disclosure, as shown in FIG. 19, the fan housing 13 includes an outer housing 131 (also referred to as a cover piece), a first air duct component 1321, and a second air duct component 1322. The first air duct component 1321 and the second air duct component 1322 are located inside the outer housing 131 and are arranged around the air outlet 112 of the fan wheel 11. The first air duct component 1321 and the second air duct component 1322 are collectively referred to as the air duct assembly 132. The first air duct component 1321 is adjacent to the top of the fan wheel 11, and the second air duct component 1322 is adjacent to the bottom of the fan wheel 11. An air duct space 1323 surrounding the air outlet 112 is formed between the first air duct component 1321 and the second air duct component 1322. One end, away from the fan wheel 11, of the first air duct component 1321 as well as one end, away from the fan wheel 11, of the second air duct component 1322 are close to each other and a gap is provided therebetween. The gap forms an annular opening 1324 and plays a role of a vent of the air duct space 1323 (or the bladeless fan lamp) for discharging the airflow blown by the fan wheel 11.

In the embodiments of the present disclosure, the top of the fan wheel 11 refers to the upper portion, i.e., a portion closer to the suspension mechanism 3, and the bottom refers to the lower portion, i.e., a portion closer to the light-emitting assembly 22.

The fan mechanism 1 according to the embodiments of the present disclosure is an air outlet mechanism with hidden blades 115, and the fan wheel 11 is located inside the fan housing 13. Accordingly, the air duct space 1323 is also formed inside the fan housing 13. As shown in FIG. 19, the top of the fan housing 13 is an air inlet grille 1312, and the air inlet 111 of the fan wheel 11 communicates with the outside through the air inlet grille 1312. Exemplarily, an air intake 1311 is formed on the top of the outer housing 131, and the air inlet grille 1312 is arranged at the air intake 1311. The air intake 1311 is located on the outer side of the air inlet 111 on the fan wheel 11 and is opposite the air inlet 111, thus air intake 1311 is also referred to as an external air inlet 111. In some embodiments, a diameter of the air intake 1311 is larger than a diameter of the air inlet 111. The air duct space 1323 is formed by the cooperation of the first air duct component 1321 and the second air duct component 1322, and is located between the air outlet 112 of the fan wheel 11 and the inner wall of the fan housing 13, and has an annular shape. Through the combination of the fan wheel 11 with the first air duct component 1321 and the second air duct component 1322, airflow is drawn in from the top of the fan mechanism 1, then blown by the fan wheel 11 onto the inner wall of the first air duct component 1321, and then expelled through the annular opening 1324 (also referred to as the air duct outlet). This creates an annular airflow that is directed towards the ground, resulting in a gentler air outlet.

Referring to FIG. 19, the first air duct component 1321 and the second air duct component 1322 enclose the air duct space 1323 along the radial direction of the fan wheel 11. The farther the first air duct component 1321 and the second air duct component 1322 are from the fan wheel 11, the closer they are to each other, thus the farther the formed air duct space 1323 is away from the fan wheel 11 in the radial direction, the smaller the cross-sectional area thereof is, such that it helps to concentrate the airflow blown out from the fan wheel 11 and improve the air outlet efficiency and the air delivery distance at the air duct outlet. The air duct outlet is enclosed by the end, away from the fan wheel 11, of the first air duct component 1321 and the end, away from the fan wheel 11, of the second air duct component 1322. The outlet direction points downward, such that the airflow blows onto users located below the bladeless fan lamp.

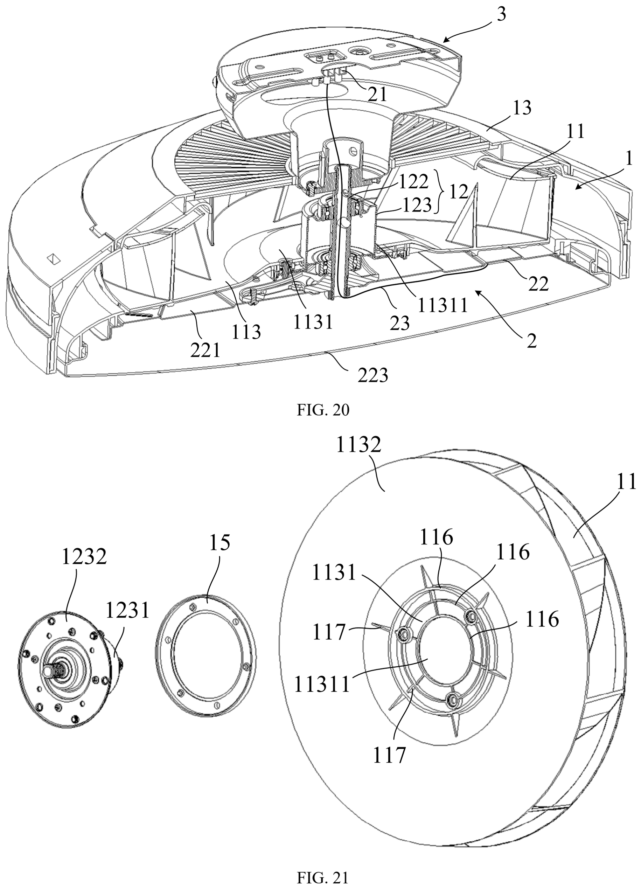

In the embodiments of the present disclosure, as shown in FIG. 20, the first air duct component 1321 and the second air duct component 1322 also surround the light-emitting assembly 22. An edge portion of the light source fixture 221 is cooperatively connected to one end, close to the fan wheel 11, of the second air duct component 1322, so as to further enhance connection reliability and prevent detachment due to vibration. Meanwhile, since the second air duct component 1322 is also provided on the radial outer side of the lamp panel, light leakage can also be prevented.

Based on the above, it is evident that the light source fixture 221 is connected to the stator shaft 1221 and is spaced apart from the fan wheel 11, such that when the fan wheel 11 rotates, the light source fixture 221 can remain stationary. On this basis, the light source fixture 221 is cooperatively connected to the second air duct component 1322 in the fan housing 13 to prevent both of them from detaching due to vibrations. Therefore, it is evident that the fan housing 13, which includes the second air duct component 1322, remains stationary relative to the light source fixture 221 and does not rotate with the fan wheel 11. In other words, in the bladeless fan lamp according to the embodiments of the present disclosure, the fan wheel 11 is spaced apart from the fan housing 13, such that when the fan wheel 11 rotates, the fan housing 13 remains stationary.

In the embodiments of the present disclosure, as shown in FIG. 20, the light-emitting assembly 22 may further include a lampshade 223. The fan cover is located on one side, away from the light source fixture 221, of the light-emitting element 222 and is spaced apart from the light-emitting element 222 by a distance. The lampshade 223 is also cooperatively connected to one end, away from the fan wheel 11, of the second air duct component 1322. By setting the lampshade 223, in an aspect, it can avoid human eyes from looking directly at the light-emitting element 222 and play an eyes protection effect, and in another aspect, it can prevent dust from entering the interior of the lighting mechanism 2, which could cause the light-emitting element 222 failure.

Based on FIG. 20, it is evident that the suspension mechanism 3 is located above the fan housing 13, and the bottom of the suspension mechanism 3 extends into the fan housing 13, for example, through the air intake 1311 formed on the outer housing 131 into the fan housing 13. An air inlet grille 1312 is provided on the top of the fan housing 13, and the air inlet grille 1312 surrounds the bottom of the suspension mechanism 3. There is a gap in the height direction between the suspension mechanism 3 and the fan housing 13. The height direction is parallel to the axis of the hollow shaft 121. In some embodiments, as shown in FIG. 21, the fan wheel 11 includes a hub part 1131 which is positioned opposite the air inlet 111 of the fan wheel 11 and is configured to install and fix the motor 12. The hub part 1131 may be, for example, arranged on the bottom plate 113 of the fan wheel 11 and protrude in the direction of the top plate 114. An installation shaft hole 11311 is formed on the hub part 1131, and a portion of the motor 12 passes through the installation shaft hole 11311 and is located inside the fan wheel 11. The motor 12 is provided with a flange 1232 connected to the rotor and arranged along the circumferential direction of the rotor. At least a portion of the flange 1232 is connected to or abuts against one side, facing the light-emitting assembly 22, of the hub part 1131. Exemplarily, the flange 1232 and the hub part 1131 are connected together by a screw.

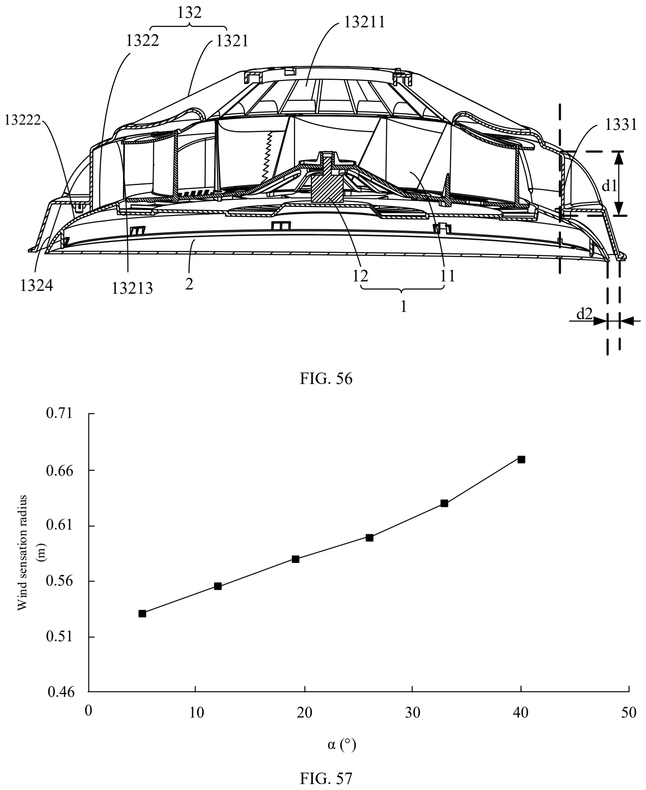

In conjunction with FIGS. 20 and 21, it is evident that the rotor assembly 123 may also be located on one side, close to the light-emitting assembly 22, of the bottom plate 113. The stator shaft 1221 in the motor 12 extends into the height space of the fan wheel 11 and is further connected to the suspension mechanism 3. In some embodiments, in the case that the rotor assembly 123 is located on one side, close to the light-emitting assembly 22, of the bottom plate 113, the rotor assembly 123 may be also located within the height space of the fan wheel 11. As shown in FIG. 56, the central portion of the bottom plate 113 of the fan wheel 11 protrudes upward to form the hub part 1131. As the main body part 126, the rotor assembly 123 of the motor 12 is connected on the recessed side of the hub part 1131, and the rotor assembly 123 is located within the recessed space formed by the hub part 1131, and the recessed space is a portion of the height space of the impeller 11.

Exemplarily, the rotor assembly 123 includes a rotor sleeve 1231 and a flange 1232. The flange 1232 is connected to the rotor sleeve 1231 and arranged circumferentially along the rotor sleeve 1231. At least a portion of the flange 1232 is connected to or abuts against one side, facing the light-emitting assembly 22, of the hub part 1131, and a portion of the rotor sleeve 1231 passes through the installation shaft hole 11311 and is located inside the fan wheel 11. In this case, it is evident from FIGS. 20 and 21 that a portion of the rotor sleeve 1231 is accommodated within the space formed by the bottom plate 113 and the top plate 114 of the fan wheel 11. In the case that the rotor assembly 123 is located within the height space, a height dimension of the portion of the rotor assembly 123 located within the height space is greater than a height dimension of the portion of the rotor assembly 123 located outside the height space. In this way, by accommodating the rotor assembly 123 in the motor 12 inside the fan wheel 11, the dimension of the bladeless fan lamp in the height direction is reduced, which is beneficial for product miniaturization.

In other embodiments, the rotor assembly 123 may also be located on one side, close to the light-emitting assembly 22, of the bottom plate 113. The stator shaft 1221 in the motor 12 extends into the height space of the fan wheel 11 and is further connected to the suspension mechanism 3. Alternatively, at least a portion of the flange 1232 is connected to or abuts against one side, facing away from the light-emitting assembly 22, of the hub part 1131, and the entire rotor sleeve 1231 is located inside the fan wheel 11, such that the entire rotor assembly 123 can be hidden within the height space of the fan wheel 11.

In some embodiments, a plurality of annular strengthening ribs 116 are concentrically arranged on one side, facing the light-emitting assembly 22, of the hub part 1131 of the fan wheel 11, and the annular strengthening ribs 116 are arranged around the installation shaft hole 11311. In other words, the bottom plate 113 further includes a plurality of annular strengthening ribs 116 which are connected to the hub part 1131, arranged around the installation shaft hole 11311 and concentrically arranged with the installation shaft hole 11311. Moreover, two adjacent annular strengthening ribs 116 are connected by a reinforcement rib 117. In some embodiments, the flange 1232 of the rotating motor 12 is connected to or abuts against at least one annular strengthening rib 116.

As shown in FIG. 21, the hub part 1131 is provided with a plurality of annular strengthening ribs 116 and a plurality of reinforcement ribs 117. The plurality of annular strengthening ribs 116 are concentrically arranged with the installation shaft hole 11311 so as to enhance the strength of the hub part 1131. Optionally, heights of the plurality of annular strengthening ribs 116 are different from each other. The closer the annular strengthening rib 116 is to the axis of the hub part 1131, the smaller the diameter of the annular strengthening rib 116 is, and the lower the height of the annular strengthening rib 116 is. The farther the annular strengthening rib 116 is from the axis of the hub part 1131, the larger the diameter of the annular strengthening rib is and the higher the height of the annular strengthening rib is. The height of the outermost annular strengthening rib 116 is less than the protruding height of the hub part 1131 into the interior of the fan wheel 11. Two adjacent annular strengthening ribs 116 are connected by at least one reinforcement rib 117 to further increase the strength of the hub part 1131.

In some embodiments, the bottom plate 113 of the fan wheel 11 further includes a connecting part 1132, and the connecting part 1132 is connected to the outer edge of the hub part 1131. The connecting part 1132 and the outermost annular strengthening rib 116 are connected by the reinforcement rib 117.

For example, in the bottom plate 113 shown in FIG. 21, the hub part 1131 is provided with three annular strengthening ribs 116 from inside to outside. The first annular strengthening rib 116 and the second annular strengthening rib 116 are connected by six reinforcement ribs 117, and the six reinforcement ribs 117 are evenly arranged along the circumferential direction of the annular strengthening ribs 116. The second annular strengthening rib 116 and the third annular strengthening rib 116 are also connected by six reinforcement ribs 117, and the six reinforcement ribs 117 correspond to positions of the six reinforcement ribs 117 on the inner side. The third annular strengthening rib 116 is connected to the connecting part 1132 by six reinforcement ribs 117, and the six reinforcement ribs 117 correspond to positions of the twelve reinforcement ribs 117 on the inner side. The reinforcement structure of the bladeless fan lamp is detailed in section (II).

In the case of assembling the motor 12, the flange 1232 of the motor 12 abuts against at least one annular strengthening rib 116 and a reinforcement rib 117, such that it is ensured that the hub part 1131 has better structural strength and can be reliably connected. Exemplarily, the motor 12 is fixed to the hub part 1131 by means of a bolt. As shown in FIG. 21, through holes are formed at intersections of the second annular strengthening rib 116 and the reinforcement ribs 117, through holes are also formed at the corresponding positions on the flange 1232, and bolts and nuts pass through the corresponding holes to install the motor 12 onto the fan wheel 11.

Optionally, a spring washer is further sleeved on the bolt. In the tightened state, the spring washer is sandwiched between the head of the bolt and the flange 1232, and the spring washer is configured to increase the connection and fastening tightness between the flange 1232 and the fan wheel 11.

Optionally, as shown in FIG. 21, a rotational vibration damping member 15 is further provided between the flange 1232 of the motor 12 and the bottom plate 113 of the fan wheel 11. The rotational vibration damping member 15 is also referred to as a sealing vibration damping member, which can include, for example, a sealing ring.

In other embodiments of the present disclosure, the bottom plate 113 of the fan wheel 11 may be connected to the flange 1232 of the rotating motor 12 through an in-mold injection molding process. In practice, the connected rotor and flange 1232 can be placed into the injection mold of the fan wheel 11, and then injection molding material is added to the mold, such that after the injection molding, the bottom plate 113 of the fan wheel 11 wraps around the outside of the flange 1232 to achieve a tight connection between the fan wheel 11 and the flange 1232. Subsequently, other pieces of the motor 12 are installed onto the rotor. Optionally, at least one protrusion is provided on one side facing the light-emitting assembly 22 and/or on one side facing away from the light-emitting assembly 22 of the flange 1232. The protrusion is configured to increase the contact area between the flange 1232 and the hub part 1131 of the fan wheel 11, thereby increasing the injection molding firmness between the hub part 1131 of the fan wheel 11 and the flange 1232, and improving the strength and service life of the injection-molded product.

The above section (I) describes the installation methods between the assemblies of the bladeless fan lamp, such as the fan mechanism 1, the lighting mechanism 2, and the suspension mechanism 3, as well as the internal wiring method of the bladeless fan lamp. Based on the above embodiments, the present disclosure further improves the internal structure of at least one of the fan mechanism 1, the lighting mechanism 2, and the suspension mechanism 3 to achieve better reinforcement, anti-shake, and airflow effects. The following describes the reinforcement structure, anti-shake structure, and air outlet structure of the bladeless fan lamp. It is understood that the structural improvements between sections (I) to (IV) may be combined to provide a bladeless fan lamp with optimized performance in multiple aspects.

### (II) Reinforcement structure of the bladeless fan lamp

In the related art, a bladeless fan primarily uses a turbine-style fan wheel 11, and a rotor of a motor 12 is directly connected to the turbine-style fan wheel 11, so as to drive the blades 115 to rotate and generate airflow. However, due to the high rotational speed of the fan wheel 11 during fan operation, significant stress is generated at a place where the rotor and the fan wheel 11 are connected, which easily leads to breakage and damage at the connection, and severely affects the service life of the fan.

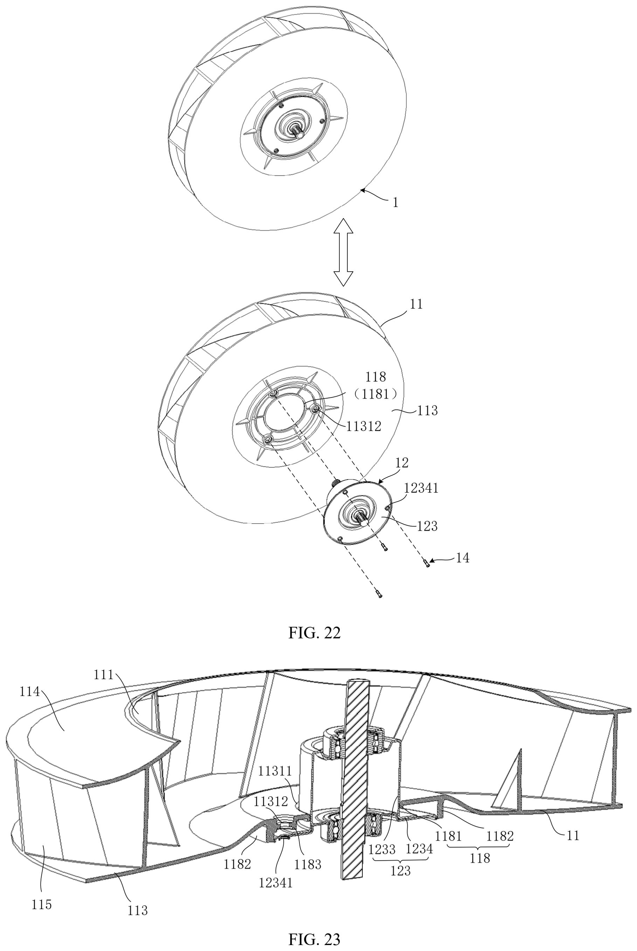

The embodiments of the present disclosure provide a fan mechanism 1. The fan mechanism 1 can be, for example, the fan mechanism 1 in the bladeless fan lamp provided in section (I). As shown in FIG. 22, the fan mechanism 1 includes a fan wheel 11 and a motor 12. The fan wheel 11 includes a bottom plate 113 and a first reinforcement structure 118. A first through hole 11312 is formed on the bottom plate 113, and the first reinforcement structure 118 is connected to the bottom plate 113 and surrounds at least a portion of the first through hole 11312. The motor 12 includes a rotor assembly 123 (also referred to as a rotor), and a second through hole 12341 is formed on the rotor assembly 123. The fan wheel 11 and the rotor assembly 123 are securely connected by a second fastener 14 passing through the first through hole 11312 and the second through hole 12341. As shown in FIGS. 22 and 23, an installation area of the rotor assembly 123 on the bottom plate 113 is located within an area enclosed by the first reinforcement structure 118 on the bottom plate 113. Exemplarily, an orthographic projection of the rotor assembly 123 on a projection plane is located within an orthographic projection of the first reinforcement structure 118 on the projection plane, where the projection plane is perpendicular to the rotation axis of the fan wheel 11, for example, parallel to a plane where the bottom plate 113 is located.

In some embodiments, at least a portion of the first reinforcement structure 118 is located between the fan wheel 11 and the rotor assembly 123, and abuts against the rotor assembly 123. As described above, in the embodiments, the air inlet 111 of the fan wheel 11 is located at the top, and the air outlet 112 is located on the side surface of the fan wheel 11 and is formed circumferentially. The bottom plate 113 of the fan wheel 11 is opposite the air inlet 111.

The fan mechanism 1 according to the embodiments of the present disclosure includes a fan wheel 11 and a motor 12 for driving the fan wheel 11 to rotate. A first through hole 11312 is formed on the bottom plate 113 of the fan wheel 11, and a second through hole 12341 is formed on the rotor assembly 123 of the motor 12. A fastener may pass through the first through hole 11312 and the second through hole 12341 and connect the bottom plate 113 and the rotor assembly 123 together. A first reinforcement structure 118 is further connected to the bottom plate 113 of the fan wheel 11, and the first reinforcement structure 118 is configured to increase the structural strength and rigidity of the bottom plate 113. An installation area of the rotor assembly 123 on the bottom plate 113 is arranged within an area enclosed by the first reinforcement structure 118 on the bottom plate 113, such that the portion on the bottom plate 113 for connecting with the rotor assembly 123 is less prone to breakage. In some embodiments, in the case that the bottom plate 113 and the rotor assembly 123 are securely connected, the rotor assembly 123 abuts against one side, away from the bottom plate 113, of the first reinforcement structure 118. Further, since the first reinforcement structure 118 is arranged around the first through hole 11312, the structural strength and rigidity of the plate body around the first through hole 11312 can be enhanced. Therefore, in the case that the fan wheel 11 rotates under the drive of the motor 12, the portion on the bottom plate 113 for connecting with the rotor assembly 123 is less prone to breakage, thereby improving the service life of the fan mechanism 1.

In some embodiments of the present disclosure, referring to FIG. 23, an installation shaft hole 11311 is formed on the bottom plate 113, and the installation shaft hole 11311 is spaced apart from the first through hole 11312. The rotor assembly 123 is connected to one side, away from the air inlet 111, of the bottom plate 113, and a portion of the rotor assembly 123 runs through the installation shaft hole 11311 so as to be located inside the fan wheel 11.

The first reinforcement structure 118 includes a first reinforcement part 1181, and the first reinforcement part 1181 is connected to an edge of the installation shaft hole 11311. That is, the first reinforcement part 1181 is directly arranged on an inner wall surface of the installation shaft hole 11311. The first reinforcement part 1181 is, for example, one of the plurality of annular strengthening ribs 116 mentioned above, and thus the first reinforcement part 1181 is also referred to as the first reinforcement rib. In some embodiments, the first reinforcement part 1181 is in contact with a portion of the rotor assembly 123 that runs through the installation shaft hole 11311.

The installation shaft hole 11311 is configured to install the motor 12. The rotor assembly 123 of the motor 12 passes through the installation shaft hole 11311, such that a portion of the rotor assembly 123 is located inside the fan wheel 11, and the remaining portion is located outside the fan wheel 11. A first reinforcement part 1181 is provided on the bottom plate 113 of the fan wheel 11. The first reinforcement part 1181 is connected to the edge of the installation shaft hole 11311 to increase the structural strength and rigidity of the plate body around the installation shaft hole 11311 on the bottom plate 113. As shown in FIG. 23, in the case that the rotor assembly 123 of the motor 12 is inserted into the installation shaft hole 11311 for assembly, the rotor assembly 123 will be in contact with the first reinforcement part 1181, which limits the position of the rotor assembly 123 within the installation shaft hole 11311, thereby improving the coaxiality between the rotor assembly 123 of the motor 12 and the installation shaft hole 11311 on the fan wheel 11.

Optionally, the first reinforcement part 1181 is an annular strengthening rib 116 which is circumferentially closed.

In some embodiments of the present disclosure, the first reinforcement structure 118 further includes a second reinforcement part 1182. The second reinforcement part 1182 is located on one side, away from the installation shaft hole 11311, of the first through hole 11312 and is arranged to surround the installation shaft hole 11311. The center of the second reinforcement part 1182 is located on the axis of the installation shaft hole 11311. The second reinforcement part 1182 abuts against the portion of the rotor assembly 123 outside the installation shaft hole 11311. In some embodiments, the second reinforcement part 1182 is in direct contact with the portion, which is located outside the installation shaft hole 11311, of the rotor assembly 123.

As shown in FIG. 23, a distance between the second reinforcement part 1182 and the installation shaft hole 11311 is greater than a distance between the first through hole 11312 and the installation shaft hole 11311, so the second reinforcement part 1182 is located on one side, away from the installation shaft hole 11311, of the first through hole 11312. In the case that the rotor assembly 123 of the motor 12 is inserted into the installation shaft hole 11311 for assembly, a portion of the rotor assembly 123 is limited to the outside of the installation shaft hole 11311 and abuts against the first reinforcement part 1181, and the second through hole 12341 formed on the portion can cooperate with the first through hole 11312 on the bottom plate 113. Moreover, the portion is also in contact with the second reinforcement part 1182, thereby limiting the relative position between the rotor assembly 123 and the fan wheel 11. This further improves the coaxiality between the rotor assembly 123 of the motor 12 and the installation shaft hole 11311 on the fan wheel 11.

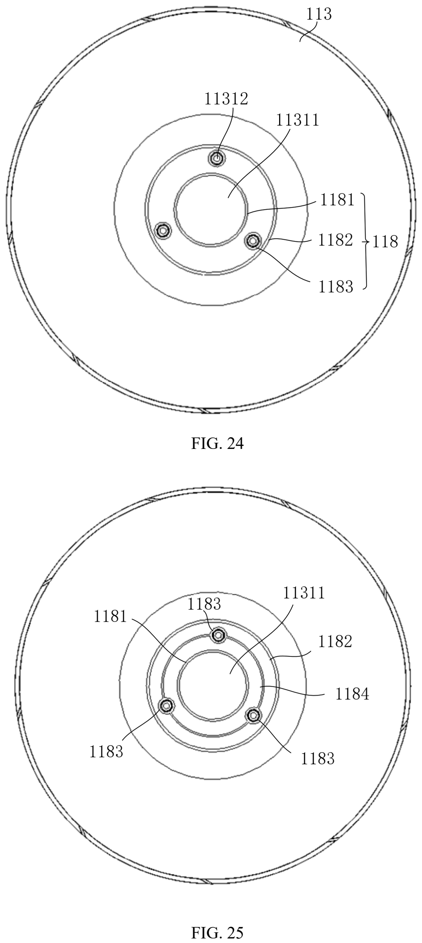

In some embodiments of the present disclosure, referring to FIGS. 23 and 24, the rotor assembly 123 includes a rotor core 1233 and a rotor flange 1234, and the rotor core 1233 and the rotor flange 1234 are fixedly connected. The second through hole 12341 is formed on the rotor flange 1234. The rotor core 1233 is located within the installation shaft hole 11311, and the first reinforcement part 1181 surrounds the rotor core 1233. The rotor flange 1234 is located on one side, away from the bottom plate 113, of the first reinforcement part 1181, and a circumferential edge of the rotor flange 1234 is located on one side, close to the first reinforcement part 1181, of the second reinforcement part 1182.

Based on FIGS. 23 and 24, it is evident that the second reinforcement part 1182 defines an edge of an area enclosed by the first reinforcement structure 118 on the bottom plate 113. Thus, the area enclosed by the first reinforcement structure 118 on the bottom plate 113 can be determined as the area enclosed by the second reinforcement part 1182 on the bottom plate 113.

Based on FIGS. 23, it is evident that the rotor flange 1234 is connected to the bottom of the rotor core 1233. A central portion of the rotor flange 1234 encloses a bottom end of the rotor core 1233 to form the rotor sleeve 1231 mentioned above. An edge portion surrounding the central portion of the rotor flange 1234 may serve as the flange 1232 mentioned above.

In some embodiments, the rotor core 1233 is in contact with the side wall, away from the second reinforcement part 1182, of the first reinforcement part 1181. The rotor flange 1234 abuts against one side, away from the bottom plate 113, of the first reinforcement part 1181 and is in contact with the side wall, close to the first reinforcement part 1181, of the second reinforcement part 1182. In other embodiments, the rotor core 1233 may be spaced apart from the first reinforcement part 1181 to prevent the first reinforcement part 1181 from interfering with the rotation of the rotor core 1233. The rotor flange 1234 is spaced apart from one side, away from the bottom plate 113, of the first reinforcement part 1181, and the rotor flange 1234 is in contact with the side wall, close to the first reinforcement part 1181, of the second reinforcement part 1182.

As shown in FIG. 23, the diameter of the rotor core 1233 is slightly smaller than the aperture of the installation shaft hole 11311. The rotor flange 1234 is fixedly connected to one end of the rotor core 1233, and the diameter of the rotor flange 1234 is larger than the inner diameter of the installation shaft hole 11311. During installation, the rotor core 1233 is inserted into the installation shaft hole 11311. In this case, the outer side wall of the rotor core 1233 is either in contact with or spaced apart from the inner side wall of the first reinforcement part 1181. A flange surface of the rotor flange 1234 abuts against an end surface of the first reinforcement part 1181 and/or the second reinforcement part 1182, and the outer edge of the rotor flange 1234 is in contact with the inner side wall of the second reinforcement part 1182. The second through hole 12341 is located on the rotor flange 1234 and corresponds to the position of the first through hole 11312 formed on the bottom plate 113 of the fan wheel 11. The second fastener 14 passes through the first through hole 11312 and the second through hole 12341 and securely connects the fan wheel 11 and the motor 12. The flange surface of the rotor flange 1234 refers to a surface that abuts against the first reinforcement structure 118 and is penetrated by the second through hole 12341.

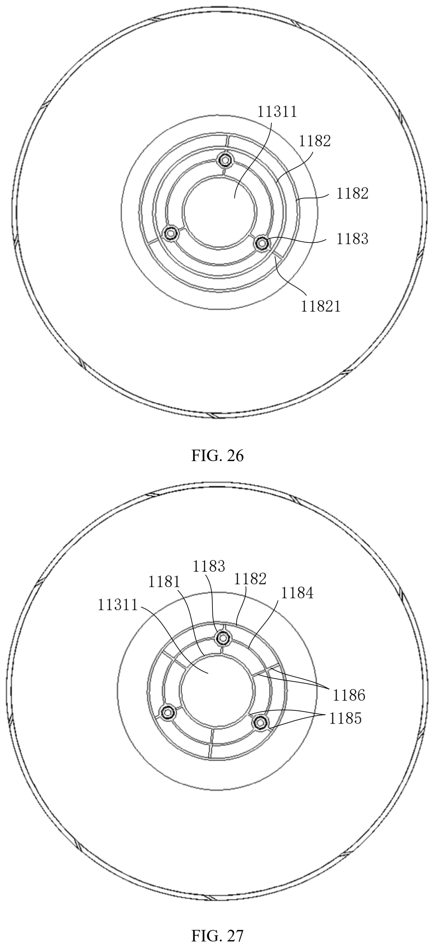

In the embodiments of the present disclosure, there is one or more than one second reinforcement parts 1182. For example, referring to FIG. 25, there is only one second reinforcement part 1182, and the one second reinforcement part 1182 surrounds the outer side of the first through hole 11312 and the installation shaft hole 11311. For another example, referring to FIG. 26, there are more than one second reinforcement parts 1182. In this case, a plurality of second reinforcement parts 1182 are arranged sequentially along the radial direction of the installation shaft hole 11311, and each second reinforcement part 1182 surrounds the installation shaft hole 11311. In this case, the second reinforcement part 1182 located on the innermost circle (i.e., the second reinforcement part 1182 with the smallest diameter) is adjacent to the first through hole 11312, and the rotor flange 1234 is adapted to be in contact with the second reinforcement part 1182 located on the outermost circle (i.e., the second reinforcement part 1182 with the largest diameter).

The second reinforcement part 1182 is, for example, one of the plurality of annular strengthening ribs 116 mentioned above, thus the second reinforcement part 1182 may be also referred to as the second reinforcement rib. Optionally, the second reinforcement part 1182 is an annular strengthening rib 116 that is closed along the circumferential direction, and in the case that there are more than one second reinforcement parts 1182, the more than one second reinforcement parts 1182 are arranged concentrically and nested sequentially.

Optionally, in the case that there are more than one second reinforcement parts 1182, at least one connecting rib 11821 (also referred to as reinforcement rib 117) is connected between two adjacent second reinforcement parts 1182, and the at least one connecting rib 11821 extends along the radial direction of the installation shaft hole 11311.

The reinforcement rib 117, as well as the other second reinforcement parts 1182 except for the second reinforcement part 1182 located on the outermost circle, are configured to further increase the structural strength and rigidity of the plate body, around the installation shaft hole 11311, of the bottom plate 113, so as to prevent deformation and warping of the plate body, and reducing the stress within the plate body.

Optionally, in the height direction, the dimension of the first reinforcement part 1181 is smaller than the dimension of the second reinforcement part 1182, where the height direction is parallel to the axis of the installation shaft hole 11311.

As shown in FIG. 23, the dimension of the first reinforcement part 1181 in the height direction is smaller, and the dimension of the second reinforcement part 1182 in the height direction is larger. The rotor flange 1234 starts from the middle position of the fan wheel 11, passes by the surface, away from the bottom plate 113, of the first reinforcement part 1181 and extends towards the edge position of the fan wheel 11 until it is in contact with or is adjacent to the side wall, close to the first reinforcement part 1181, of the second reinforcement part 1182. In this case, the flange surface of the rotor flange 1234 abuts against the surface, away from the bottom plate 113, of the first reinforcement part 1181.

Optionally, as shown in FIG. 23, from the first reinforcement part 1181 towards the second reinforcement part 1182, the dimension of the first reinforcement structure 118 in the height direction gradually increases, where the height direction is parallel to the axis of the installation shaft hole 11311.

"The dimension gradually increasing in the height direction" refers to the dimension of the first reinforcement structure 118 gradually increases along the height direction. This includes both a continuous increase of height dimension and an intermittent increase of height dimension, as long as the height dimension of the portion, farther from the installation shaft hole 11311, of the first reinforcement structure 118 is not less than the height dimension of the portion, closer to the installation shaft hole 11311, of the first reinforcement structure. For example, in FIG. 23, from the first reinforcement part 1181 towards the second reinforcement part 1182, the height dimension increases and then remains constant, and then increases again. Overall, the first reinforcement structure 118 as a whole presents an effect that the height dimension gradually increases from the middle position towards the edge position of the fan wheel 11, and thus matches the height of the flange surface of the rotor flange 1234.

Referring to FIG. 24, in some embodiments of the present disclosure, the first reinforcement structure 118 further includes a third reinforcement part 1183, and the third reinforcement part 1183 is an annular structure that is closed in the circumferential direction along the first through hole 11312.

The third reinforcement part 1183 is an annular strengthening rib 116, and thus the third reinforcement part 1183 is also referred to as the third reinforcement rib. The annular reinforcement part is provided around the first through hole 11312, thus enhancing the structural strength and rigidity of the plate body portion of the bottom plate 113, which surrounds the first through hole 11312 in the circumferential direction, such that in the case that the rotor assembly 123 drives the bottom plate 113 to rotate, the bottom plate 113 is less prone to breakage. Moreover, even if the bottom plate 113 fractures at the edge of the first through hole 11312, the crack will be blocked by the third reinforcement part 1183, making the crack less likely to extend to the plate body portion on the outer side of the third reinforcement part 1183. As a result, the service life of the fan mechanism 1 is significantly increased.

In the embodiments, the third reinforcement part 1183 is connected to the edge of the first through hole 11312. Alternatively, as shown in FIG. 23, there is a certain distance between the third reinforcement part 1183 and the edge of the first through hole 11312.

In some embodiments of the present disclosure, there are at least two third reinforcement parts 1183, and the at least two third reinforcement parts 1183 are distributed circumferentially along the installation shaft hole 11311. The first reinforcement structure 118 further includes a fourth reinforcement part 1184, and both ends of the fourth reinforcement part 1184 are connected to two adjacent third reinforcement parts 1183 in the circumferential direction of the installation shaft hole 11311, respectively.

Exemplarily, referring to FIG. 25, three third reinforcement parts 1183 are arranged in the circumferential direction of the installation shaft hole 11311, and any two adjacent third reinforcement parts 1183 are connected by one fourth reinforcement part 1184. The fourth reinforcement part 1184 is configured to increase the structural strength and rigidity of the plate body of the bottom plate 113 between two adjacent third reinforcement parts 1183. Meanwhile, the fourth reinforcement part 1184 also serves to prevent deformation and warping of this portion of the bottom plate 113, reducing the stress within the plate body.

In some embodiments of the present disclosure, the centers of at least two third reinforcement parts 1183 are located on the same concentric circle of the installation shaft hole 11311, and the fourth reinforcement part 1184 is an arc-shaped reinforcement part extending circumferentially along the concentric circle.

As shown in FIG. 25, the fourth reinforcement part 1184 is an arc-shaped reinforcement part, and the extending directions of a plurality of arc-shaped reinforcement parts are located on one concentric circle of the installation shaft hole 11311. The fourth reinforcement part 1184 with an arc-shaped design cooperates with the third reinforcement part 1183 to further enhance the structural strength and rigidity of the plate body around the installation shaft hole 11311.

In some embodiments of the present disclosure, the first reinforcement structure 118 further includes at least one of a fifth reinforcement part 1185 and a sixth reinforcement part 1186; and both the fifth reinforcement part 1185 and the sixth reinforcement part 1186 extend along the radial direction of the installation shaft hole 11311. Two ends of the fifth reinforcement part 1185 are respectively connected to the first reinforcement part 1181 and the third reinforcement part 1183, or to the second reinforcement part 1182 and the third reinforcement part 1183. Two ends of the sixth reinforcement part 1186 are respectively connected to the first reinforcement part 1181 and the fourth reinforcement part 1184, or to the second reinforcement part 1182 and the fourth reinforcement part 1184.

As shown in FIG. 27, the fifth reinforcement part 1185 is configured to further increase the structural strength and rigidity of the plate body portion of the bottom plate 113 between the third reinforcement part 1183 and the first reinforcement part 1181, as well as the structural strength and rigidity of the plate body portion of the bottom plate 113 between the third reinforcement part 1183 and the second reinforcement part 1182. This prevents deformation and warping of the plate body and reduces the stress within the plate body.

The sixth reinforcement part 1186 is configured to further increase the structural strength and rigidity of the plate body portion of the bottom plate 113 between the first reinforcement part 1181 and the fourth reinforcement part 1184, as well as the structural strength and rigidity of the plate body portion of the bottom plate 113 between the second reinforcement part 1182 and the fourth reinforcement part 1184. This prevents deformation and warping of the plate body and reduces the stress within the plate body.

Optionally, there are a plurality of fifth reinforcement parts 1185. There exist two fifth reinforcement parts 1185 among the plurality of fifth reinforcement parts 1185 which are respectively located on opposite sides of the same third reinforcement part 1183, and extending directions of the two fifth reinforcement parts 1185 both pass through the center of the same third reinforcement part 1183.

As shown in FIG. 27, a plurality of third reinforcement parts 1183 and a plurality of arc-shaped fourth reinforcement parts 1184 cooperate to present an overall annular structure. A first annular gap is formed between the annular first reinforcement part 1181 and the overall annular structure composed of the plurality of third reinforcement parts 1183 and the plurality of fourth reinforcement parts 1184; and a second annular gap is formed between the annular second reinforcement part 1182 and the overall annular structure composed of the plurality of third reinforcement parts 1183 and the plurality of fourth reinforcement parts 1184. A plurality of fifth reinforcement parts 1185 are arranged circumferentially within the first annular gap, and a plurality of fifth reinforcement parts 1185 are also arranged circumferentially within the second annular gap. At least one third reinforcement part 1183 is simultaneously connected to two fifth reinforcement parts 1185, and the two fifth reinforcement parts 1185 are located in the first annular gap and the second annular gap, respectively. Moreover, the extending directions of the two fifth reinforcement parts 1185 are the same, and they both pass through the center of the third reinforcement part 1183 to which they are connected.

Optionally, there are a plurality of sixth reinforcement parts 1186. There exist two sixth reinforcement parts 1186 among the plurality of sixth reinforcement parts 1186 that are respectively located on opposite sides of the fourth reinforcement part 1184, and both are connected at the middle position of the fourth reinforcement part 1184.

Continuing to refer to FIG. 27, a plurality of sixth reinforcement parts 1186 are arranged circumferentially within the first annular gap, and a plurality of sixth reinforcement parts 1186 are also arranged circumferentially within the second annular gap. At least one fourth reinforcement part 1184 is simultaneously connected to two sixth reinforcement parts 1186, and the two sixth reinforcement parts 1186 are located in the first annular gap and the second annular gap, respectively. Moreover, extending directions of the two sixth reinforcement parts 1186 are the same. The two sixth reinforcement parts 1186 are both connected at the middle position of the fourth reinforcement part 1184, such that each one of the two sixth reinforcement parts 1186 is equidistant from the two first reinforcement parts 1181 respectively located at both ends of the fourth reinforcement part 1184.

As shown in FIG. 27, the third reinforcement parts 1183, the fifth reinforcement parts 1185 and the sixth reinforcement parts 1186 are evenly arranged along the circumferential direction of the installation shaft hole 11311, such that the first reinforcement structure 118 is a centrally symmetric structure, and a center of symmetry is located on an axis of the installation shaft hole 11311, thereby ensuring that the plate body around the installation shaft hole 11311 is uniformly reinforced overall, which further guarantees the reinforcement effect.

In the fan mechanism 1 according to some embodiments of the present disclosure, as shown in FIGS. 22 and 23, the diameter of the rotor flange 1234 is smaller than the diameter of the second reinforcement part 1182 located in the innermost circle. In this case, the rotor flange 1234 abuts against the first reinforcement part 1181, the third reinforcement part 1183, the fourth reinforcement part 1184, as well as the fifth reinforcement part 1185 and sixth reinforcement part 1186 located within the first annular gap of the first reinforcement structure 118. The rotor flange may also abut against at least part of the fifth reinforcement part 1185 and the sixth reinforcement part 1186 located within the second annular gap.

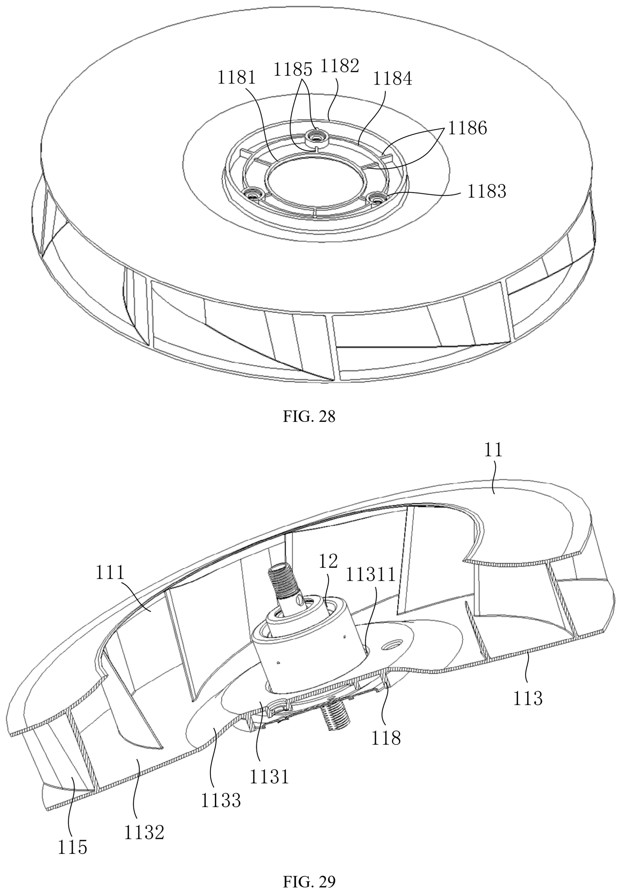

In some embodiments, as shown in FIG. 28, in the height direction, the dimension of the first reinforcement part 1181 is the smallest, and the dimensions of the fifth reinforcement part 1185 and sixth reinforcement part 1186 connected to the first reinforcement part 1181 are equal to the dimension of the first reinforcement part 1181. The dimensions of the third reinforcement part 1183 and the fourth reinforcement part 1184 are equal and both are larger than the dimension of the first reinforcement part 1181. The dimensions of the fifth reinforcement part 1185 and sixth reinforcement part 1186 located within the second annular gap are equal and both are equal to the dimension of the third reinforcement part 1183. The dimensions of a plurality of second reinforcement parts 1182 are equal and larger than the dimension of the third reinforcement part 1183. The dimension of the reinforcement rib 117 located between adjacent second reinforcement parts 1182 is equal to the dimension of the second reinforcement part 1182, and thus the first reinforcement structure 118 overall presents a structure with gradually increasing dimension in the height direction.

In the embodiments of the present disclosure, the direction from the bottom plate 113 of the fan wheel 11 along the rotation axis towards the top of the fan wheel 11 is defined as the height direction, and the closer to the top of the fan wheel 11, the higher the height. Different portions of the first reinforcement structure 118 have different heights and are adapted to the shape of the flange surface of the rotor flange 1234.

In the above embodiments, the first reinforcement structure 118 may be a reinforcement rib. In other embodiments, the first reinforcement structure 118 may also be a reinforcement plate.

In some embodiments of the present disclosure, as shown in FIG. 29, the bottom plate 113 includes a hub part 1131 and a connecting part 1132, and the hub part 1131 and the connecting part 1132 are sequentially connected from the center to the edge of the bottom plate 113. The hub part 1131 is configured to install the motor 12, and both the installation shaft hole 11311 and the first reinforcement structure 118 are located on the hub part 1131. The connecting part 1132 is configured to connect the blades 115 of the fan wheel 11. The height of the hub part 1131 is higher than the height of the connecting part 1132, and the height direction is parallel to the rotation axis of the fan wheel 11.

As shown in FIG. 29, compared to the connecting part 1132, the hub part 1131 is closer to the top of the fan wheel 11, that is, the hub part 1131 has a greater height. The first reinforcement structure 118 is connected on one side, away from the top of the fan wheel 11, of the hub part 1131. Optionally, a bottom of the first reinforcement structure 118 and a bottom surface of the connecting part 1132 are at the same height, where the bottom of the first reinforcement structure 118 refers to the portion facing away from the hub part 1131, and the bottom surface of the connecting part 1132 refers to a surface facing away from the top of the fan wheel 11.

In some embodiments, as shown in FIG. 29, the bottom plate 113 is opposite the air inlet 111, and the rotor assembly 123 is connected to one side, away from the air inlet 111, of the bottom plate 113 and partially passes through the installation shaft hole 11311 and is located within the fan wheel 11. In other embodiments, the rotor assembly 123 is located on one side, away from the air inlet 111, of the bottom plate 113 and is connected to the bottom plate 113, such that the rotor assembly 123 can be entirely located below the bottom plate 113. In this case, the hub part 1131 protrudes in the direction towards the air inlet 111 relative to the connecting part 1132, and the rotor assembly 123 located below the bottom plate 113 is located within the height space formed by the protrusion of the hub part 1131. Alternatively, in other embodiments, the rotor assembly 123 is connected to one side, facing the air inlet 111, of the bottom plate 113, and the rotor assembly 123 is entirely located within the fan wheel 11.

As shown in FIG. 29, the bottom plate 113 further includes a transition part 1133, and the transition part 1133 is connected between the hub part 1131 and the connecting part 1132. In some embodiments, the transition part 1133 is oblique relative to the hub part 1131 and is oblique relative to the connecting part 1132.

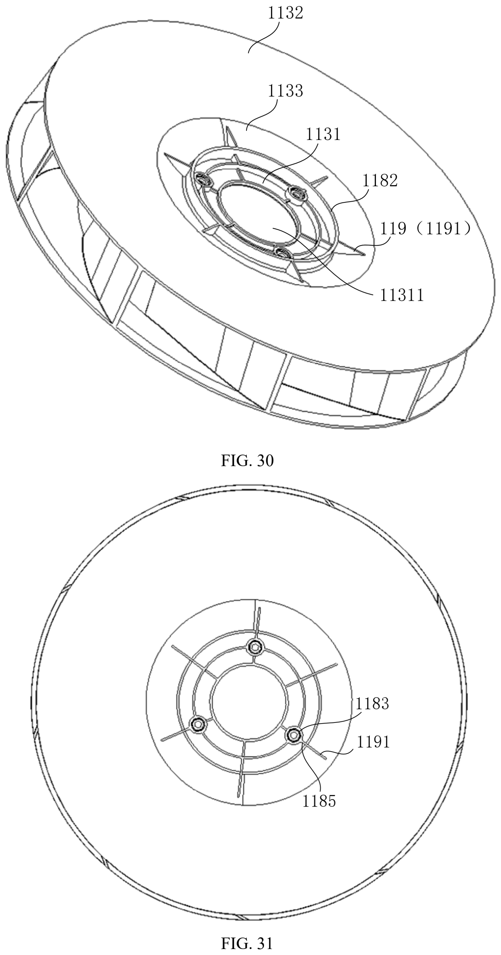

In some embodiments of the present disclosure, as shown in FIG. 30, the fan mechanism 1 further includes a second reinforcement structure 119. The second reinforcement structure 119 is arranged on the transition part 1133 and is connected to the second reinforcement part 1182. The second reinforcement structure 119 is configured to enhance the structural strength and rigidity of the transition part 1133.

Exemplarily, the second reinforcement structure 119 is connected to the second reinforcement part 1182 located at the outermost circle. In the embodiments, in the case that there is only one second reinforcement part 1182, the second reinforcement part 1182 is both the "second reinforcement part 1182 located at the innermost circle" and the "second reinforcement part 1182 located at the outermost circle". In the case that there is more than one second reinforcement part 1182, the "second reinforcement part 1182 located at the outermost circle" refers to the second reinforcement part 1182 with the largest diameter.

Based on FIG. 30, it is evident that the second reinforcement structure 119 and the first reinforcement structure 118 are located on the same side of the bottom plate 113, for example, on one side, facing away from the air inlet 111, of the bottom plate 113. The first reinforcement structure 118 is arranged on the hub part 1131 of the bottom plate 113, and the second reinforcement structure 119 is arranged on the transition part 1133 of the bottom plate, so the second reinforcement structure 119 is located outside the area enclosed by the first reinforcement structure 118 on the bottom plate 113.

Optionally, continuing to refer to FIG. 30, the second reinforcement structure 119 includes at least one seventh reinforcement part 1191. Each seventh reinforcement part 1191 extends along the radial direction of the installation shaft hole 11311, and the farther the seventh reinforcement part 1191 is from the installation shaft hole 11311, the smaller the dimension of the seventh reinforcement part in the height direction becomes. The seventh reinforcement part 1191 and the connecting rib 11821 can serve as one of the reinforcement ribs 117 described in section (I) above.

As shown in FIG. 30, the cross-sectional shape of the seventh reinforcement part 1191 is triangular, and the base of the triangle is connected to the second reinforcement part 1182 located at the outermost circle. The apex angle of the triangle extends in a direction in which the third reinforcement part 1183 is away from the installation shaft hole 11311, and the extending direction of the base of the triangle is parallel to the height direction.

In some embodiments of the present disclosure, each seventh reinforcement part 1191 passes through the center of the corresponding third reinforcement part 1183, and at least one fifth reinforcement part 1185 is arranged between the seventh reinforcement part 1191 and the corresponding third reinforcement part 1183. The extending direction of the at least one fifth reinforcement part 1185 is the same as the extending direction of the seventh reinforcement part 1191.

As shown in FIG. 31, each seventh reinforcement part 1191 is provided in correspondence with a third reinforcement part 1183. The seventh reinforcement part 1191 extends along the radial direction of the installation shaft hole 11311 and passes through the center of the corresponding third reinforcement part 1183. A fifth reinforcement part 1185 is further arranged between the corresponding seventh reinforcement part 1191 and the third reinforcement part 1183. The fifth reinforcement part 1185 and the seventh reinforcement part 1191 are located on the same radial direction of the installation shaft hole 11311.

In some embodiments of the present disclosure, in addition to enhancing the structural strength and rigidity of the bottom plate 113 by arranging the first reinforcement structure 118 and the second reinforcement structure 119 to prevent breakage at the place where the bottom plate 113 and the rotor flange 1234 are connected, it may also prevent breakage and damage at the connection by reducing the interaction force between the bottom plate 113 and the rotor flange 1234.

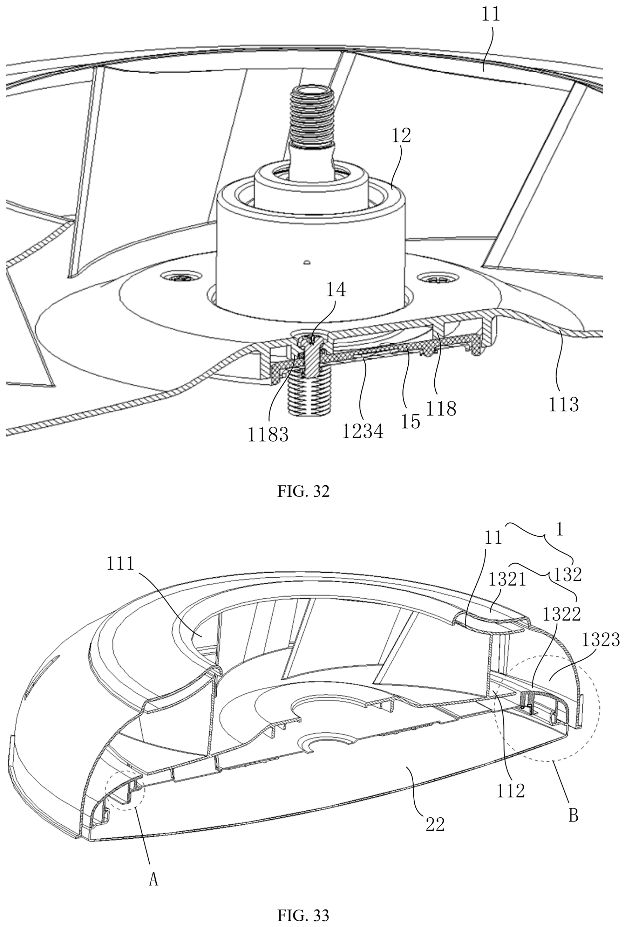

As shown in FIG. 32, the fan mechanism 1 further includes a vibration damping member, which is sandwiched between the first reinforcement structure 118 of the fan wheel 11 and the rotor assembly 123 of the motor 12.

The vibration damping member can provide a certain cushioning and vibration damping effect, and protect the fan wheel 11 and the bottom plate 113 to a certain extent, so that it is not easy to break and damage. Exemplarily, the vibration damping member is arranged between the first reinforcement structure 118 and the rotor flange 1234, and is located between the first through hole 11312 and the second through hole 12341. Therefore, it is evident that the vibration damping member is arranged in the fan wheel 11 for damping the rotating fan wheel 11, and thus the vibration damping member may be referred to as the rotational vibration damping member 15.

As shown in FIG. 32, the rotational vibration damping member 15 is arranged between the first reinforcement structure 118 and the rotor flange 1234 and is located between the first through hole 11312 and the second through hole 12341. The second fastener 14 passes through the rotational vibration damping member 15. The rotational vibration damping member 15 abuts against one side, away from the bottom plate 113, of the third reinforcement part 1183 of the first reinforcement structure 118, and the circumferential edge of the rotational vibration damping member 15 is located between one side, close to the first reinforcement part 1181, of the second reinforcement part 1182 and the circumferential edge of the rotor flange 1234. As described above, the first reinforcement structure 118 includes a plurality of arc-shaped third reinforcement parts 1183. The extending directions of the plurality of third reinforcement parts 1183 are located on a concentric circle of the installation shaft hole 11311, and the concentric circle passes through the first through hole 11312.

In summary, in the fan mechanism 1 according to the embodiments of the present disclosure, a first through hole 11312 is formed on the bottom plate 113 of the fan wheel 11, and a second through hole 12341 is formed on the rotor flange 1234 of the motor 12. A fastener can pass through the first through hole 11312 and the second through hole 12341 to connect the bottom plate 113 and the rotor flange 1234 together, thereby achieving the connection between the fan wheel 11 and the motor 12. The first reinforcement structure 118 is arranged on the hub part 1131 of the bottom plate 113 of the fan wheel 11, and the second reinforcement structure 119 is arranged on the connecting part 1132 of the bottom plate 113. The first reinforcement structure 118 and the second reinforcement structure 119 cooperate to significantly enhance the structural strength and rigidity of the bottom plate 113, making the bottom plate less prone to deformation and warping in the case of being driven to rotate by the motor 12, and even less prone to breakage and damage. Moreover, a vibration damping member is arranged between the first reinforcement structure 118 and the rotor flange 1234, which further protects the bottom plate 113 of the fan wheel 11, thereby greatly extending the service life of the fan mechanism 1.

The embodiments of the present disclosure further provide a blowing apparatus. The blowing apparatus includes the fan mechanism 1 described in any one of the above embodiments. The blowing apparatus is, for example, a bladeless fan lamp.

In the blowing apparatus (bladeless fan lamp) according to the embodiments of the present disclosure, the use of the fan mechanism 1 significantly enhances the structural strength and rigidity of the bottom plate 113 of the fan wheel 11. As a result, in the case that the fan wheel 11 rotates under the drive of the motor 12, the portion on the bottom plate 113 for connecting with the rotor assembly 123 is less prone to deformation and warping, and even less prone to breakage and damage, thereby extending the service life of the fan mechanism 1.

### (III) Anti-shake structure of the bladeless fan lamp

In the related art, the blowing function and lighting function of a fan lamp are accomplished separately by the fan module and the lamp module, which are typically directly connected. However, once the blowing function is activated, the high-speed rotating blades in the fan module could easily cause high-frequency vibrations in the overall unit, which not only generates noise but also results in the light provided by the lamp module to be unstable.

In the above embodiments, a rotational vibration damping member 15 which is sandwiched between the rotor assembly 123 of the motor 12 and the bottom plate 113 of the fan wheel 11 is arranged within the fan mechanism 1 to reduce vibrations between the motor 12 and the fan wheel 11. In the embodiments of the present disclosure, a vibration damping assembly 26 is further arranged within the lighting mechanism 2 to reduce the impact of the vibration generated during the operation of the fan mechanism 1 on the lighting mechanism 2, particularly on the light-emitting assembly 22 within the lighting mechanism 2, thereby achieving the anti-shake function of the bladeless fan lamp.

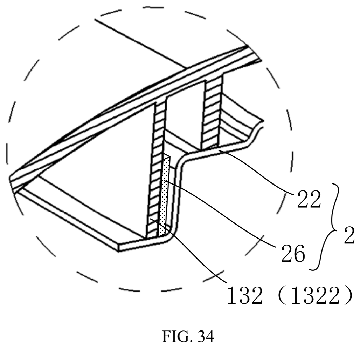

The embodiments of the present disclosure provide a bladeless fan lamp capable of achieving an anti-shake function. As shown in FIGS. 33 and 34, the bladeless fan lamp includes a fan mechanism 1 and a lighting mechanism 2. The fan mechanism 1 includes an air duct assembly 132 and a fan wheel 11. The air duct assembly 132 is arranged around the fan wheel 11 and configured to enclose an air duct space 1323 (also referred to as the air duct); and the air duct space 1323 communicates with the air outlet 112 of the fan wheel 11. The lighting mechanism 2 includes a light-emitting assembly 22 and a vibration damping assembly 26. The light-emitting assembly 22 is located outside the air duct and is connected to the air duct assembly 132, and the light-emitting assembly 22 is spaced apart from the fan wheel 11. The vibration damping assembly 26 is located between the light-emitting assembly 22 and the air duct assembly 132, and/or between the light-emitting assembly 22 and the fan wheel 11.

The bladeless fan lamp according to the embodiments of the present disclosure includes a fan mechanism 1 and a lighting mechanism 2. The fan mechanism 1 can form an annular air duct space 1323, and the airflow generated by the fan wheel 11 is blown out through the air duct to achieve the blowing function. The lighting mechanism 2 is arranged outside the air duct space 1323 to avoid obstructing the airflow. The lighting mechanism 2 includes a light-emitting assembly 22 and a vibration damping assembly 26. The light-emitting assembly 22 is configured to emit light to achieve the lighting function. The vibration damping assembly 26 is arranged between the air duct assembly 132 and the light-emitting assembly 22, and/or between the fan wheel 11 and the light-emitting assembly 22 so as to separate the fan mechanism 1 from the light-emitting assembly 22. Therefore, in the case that the fan wheel 11 rotates at a high speed, the vibration damping assembly 26 can play a role of cushioning and vibration damping, thereby effectively mitigating the overall unit shaking caused by the high-speed rotating fan wheel 11 during the operation of the fan mechanism 1, reducing the noise of the operational overall unit, and ensuring the stability of the light when both the blowing function and the lighting function are simultaneously enabled.

In some embodiments of the present disclosure, as shown in FIG. 33, the light-emitting assembly 22 is located on one side, close to the fan wheel 11, of the air duct assembly 132 and is below the fan wheel 11.

In the embodiments, referring to FIG. 33, the air inlet 111 of the fan wheel 11 is located at the top of the fan wheel 11, and the air outlet 112 is formed circumferentially on the side surface of the fan wheel 11. The air duct assembly 132 is arranged circumferentially around the fan wheel 11 and communicates with the air outlet 112 of the fan wheel 11 to ensure that the airflow generated by the fan wheel 11 can enter the air duct.

Optionally, the number of blades 115 in the fan wheel 11 is odd. Setting the number of blades 115 to an odd number can reduce resonance noise. Exemplarily, the number of blades 115 may be nine.

Optionally, the fan wheel 11 is a backward-inclined fan wheel 11. Compared to a forward-inclined fan wheel 11, the backward-inclined fan wheel 11 has lower noise.

Since fan lamps are usually suspended from indoor ceilings, the light-emitting assembly 22 is typically located at the very bottom of the overall unit. Exemplarily, the light-emitting assembly 22 is located below the fan wheel 11, and in this case, the air duct assembly 132 also surrounds the periphery of the light-emitting assembly 22. The fan wheel 11 can rotate at a high speed under the drive of a driving member (such as a motor 12) to generate airflow. In the embodiments, the light-emitting assembly 22 is not connected to the fan wheel 11, and there is a certain distance therebetween to avoid the impact of the high-speed rotating fan wheel 11 on the light-emitting assembly 22.

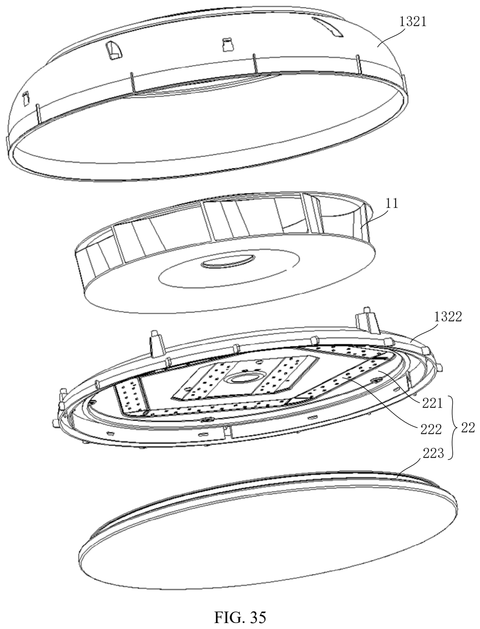

As shown in FIG. 35, in some embodiments, the light-emitting assembly 22 includes a light source fixture 221, a light-emitting element 222, and a lampshade 223. The edge portion of the light source fixture 221 is connected to the air duct assembly 132, and the light-emitting element 222 is installed on one side, away from the fan wheel 11, of the light source fixture 221. The lampshade 223 is located on one side, away from the light source fixture 221, of the light-emitting element 222 and is connected to the air duct assembly 132.

The light source fixture 221 is, for example, a lamp panel, and at least one installation position for the light-emitting element 222 is arranged on one side, facing away from the fan wheel 11, of the lamp panel. The light-emitting element 222 is installed in the corresponding installation position on the lamp panel, and the light-emitting element 222 includes, for example, at least one LED light board for providing illumination light. As shown in FIGS. 33 to 35, the lampshade 223 is located below the light-emitting element 222 and is connected to the air duct assembly 132. The lampshade 223 can serve to protect human eyes and can protect the human eyes from the damage caused by looking directly at the light-emitting element 222. The lampshade can also avoid the malfunction of the light-emitting element 222 caused by the dust entering the lighting mechanism 2 .

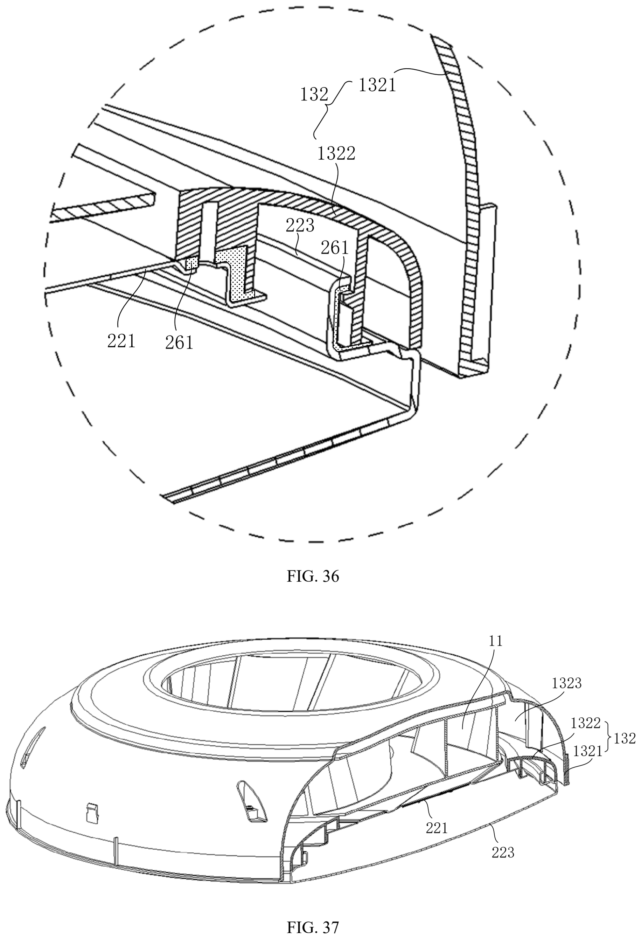

In some embodiments of the present disclosure, as shown in FIG. 37, the air duct assembly 132 includes a first air duct component 1321 and a second air duct component 1322. The first air duct component 1321 and the second air duct component 1322 are spaced apart and enclose the air duct. The first air duct component 1321 is located on one side, away from the fan wheel 11, of the second air duct component 1322, and the second air duct component 1322 is spaced apart from the fan wheel 11. The light source fixture 221 is connected to one end, adjacent to the fan wheel 11, of the second air duct component 1322, and the lampshade 223 is connected to one end, away from the fan wheel 11, of the second air duct component 1322.

As shown in FIG. 36, the light source fixture 221 and the air duct assembly 132 are arranged independently of each other. The vibration damping assembly 26 includes a first vibration damping member 261, and the first vibration damping member 261 is sandwiched at the place where the light source fixture 221 and the second air duct component 1322 are connected. In other embodiments, the light source fixture 221 and the second air duct component 1322 are an integrated component, and thus there is no need to arrange the vibration damping member between the light source fixture 221 and the second air duct component 1322. In this case, the light source fixture 221 may serve as a portion of the air duct assembly 132. The first vibration damping member 261 may be sandwiched between the lampshade 223 and the integrated component, that is, the first vibration damping member 261 is sandwiched at the place where the lampshade 223 and the air duct assembly 132 are connected. As shown in FIG. 36, the first vibration damping member 261 is sandwiched at the place where the lampshade 223 and the second air duct component 1322 are connected. Exemplarily, the edge of the lampshade 223 is bent in the direction towards the rotation axis of the fan wheel 11 to form a folded edge along the vertical direction. The second air duct component 1322 is provided with a protruding rib that extends circumferentially, and the protruding rib abuts against the folded edge of the lampshade 223. The first vibration damping member 261 is sandwiched between the folded edge of the lampshade 223 and the protruding rib of the second air duct component 1322.

In some embodiments, in the case that the light source fixture 221 and the second air duct component 1322 are an integrated component, a vibration damping member may be arranged between the integrated component and the first air duct component 1321. Exemplarily, a protrusion structure is arranged on the inner side of the first air duct component 1321, such as a flow guide member 1331 which will be described hereinafter. The bottom end of the flow guide member 1331 abuts against the second air duct component 1322 within the integrated component. A vibration damping member may be arranged at a position where the flow guide member 1331 and the integrated component are connected.

The first air duct component 1321 and the second air duct component 1322 are spaced apart, and serve as opposite air duct walls and an air duct space 1323 suitable for airflow is formed between them. Neither the first air duct component 1321 nor the second air duct component 1322 is connected to the fan wheel 11, and there is a certain gap between them and the fan wheel 11 to avoid mutual interference with the high-speed rotating fan wheel 11. Both the light source fixture 221 and the lampshade 223 are connected to the second air duct component 1322 for fixation.

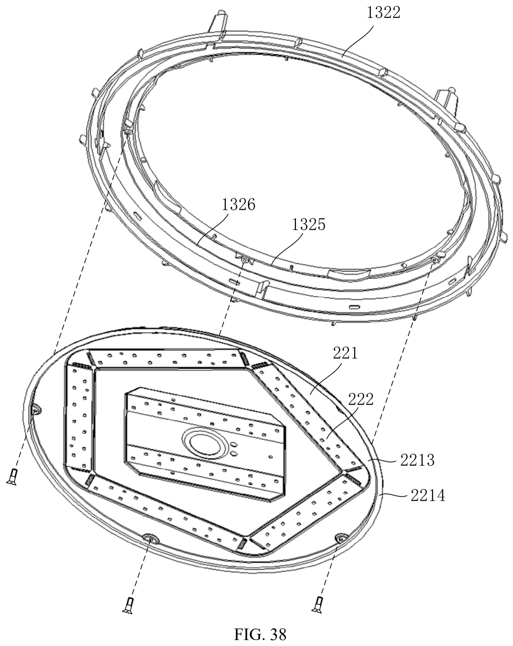

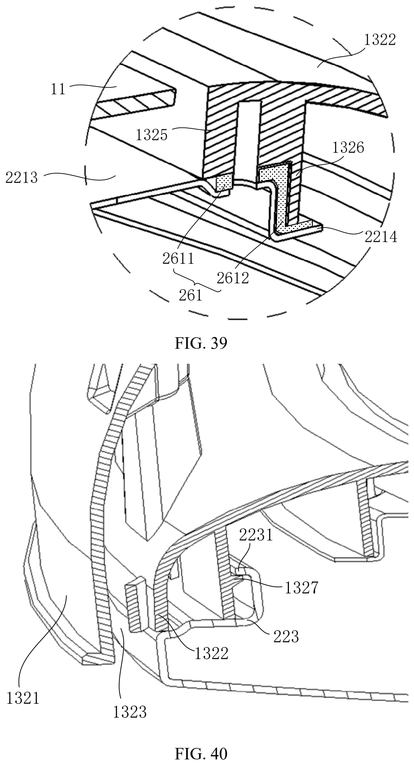

As shown in FIG. 38, in some embodiments, the second air duct component 1322 is provided with a support member 1325 and a positioning member 1326. Both the support member 1325 and the positioning member 1326 are connected to one side, facing away from the air duct space 1323, of the second air duct component 1322, and the support member 1325 is closer to the fan wheel 11 than the positioning member 1326. The light source fixture 221 includes a central part 2213 and a flanged part 2214, and the central part 2213 is configured to install the light-emitting element 222 and the flanged part 2214 connected to the outer circumference of the central part 2213. As shown in FIG. 39, the central part 2213 is located on one side, away from the second air duct component 1322, of the support member 1325 and is connected to the support member 1325; and the flanged part 2214 is located on one side, away from the second air duct component 1322, of the positioning member 1326. The support member 1325 is arranged on the second air duct component 1322 and may also be referred to as the support part, and the positioning member 1326 may also be referred to as the positioning part.

The support member 1325 is configured to cooperatively connect with the central part 2213 of the light source fixture 221, thereby achieving the installation and fixation of the light source fixture 221 on the second air duct component 1322. The positioning member 1326 can cooperate with the flanged part 2214 of the light source fixture 221 to limit the position of the light source fixture 221, and enhance the convenience and alignment accuracy of the connection between the light source fixture 221 and the second air duct component 1322.

Exemplarily, as shown in FIG. 38, the light source fixture 221 is overall circular. The central part 2213 is located at the middle position of the light source fixture 221 and is circular; and the flanged part 2214 is located at the edge position of the light source fixture 221, connected to the outer circumference of the central part 2213, and is annular. Both the support member 1325 and the positioning member 1326 are arranged along the circumferential direction of the second air duct component 1322, and an inner diameter of the positioning member 1326 is slightly larger than a diameter of the central part 2213 of the light source fixture 221, while an outer diameter of the positioning member 1326 is smaller than an outer diameter of the flanged part 2214. In the case of assembling the light source fixture 221 onto the second air duct component 1322, it is only necessary to directly place the light source fixture 221 into the inner circle enclosed by the positioning member 1326, and then adjust the position of the central part 2213 relative to the support member 1325. In this case, the flanged part 2214 of the light source fixture 221 overlaps on the surface, away from the second air duct component 1322, of the positioning part.

Optionally, as shown in FIG. 38, the central part 2213 and the support member 1325 are connected by fasteners. For example, screw holes are formed on the central part 2213 and the support member 1325, respectively; and screws pass through the two screw holes to connect the light source fixture 221 and the second air duct component 1322 together.

In some embodiments of the present disclosure, the lampshade 223 is detachably fixed to the second air duct component 1322 in a snap-fit method. As shown in FIG. 40, the second air duct component 1322 is further provided with a first snap-fit component 1327, and the first snap-fit component 1327 is connected to one side, away from the air duct, of the second air duct component 1322; and the lampshade 223 is provided with a second snap-fit component 2231, and the second snap-fit component 2231 is snap-fitted with the first snap-fit component 1327.

In some embodiments of the present disclosure, the vibration damping assembly 26 may be arranged only at the place where the air duct assembly 132 and the lighting mechanism 2 are connected, and may also be arranged at any possible contact position between the air duct assembly 132 and the lighting mechanism 2.

As shown in FIG. 36, the vibration damping assembly 26 includes a first vibration damping member 261, and the first vibration damping member 261 is sandwiched at the place where the light source fixture 221 and the air duct assembly 132 are connected, and/or sandwiched at the place where the lampshade 223 and the air duct assembly 132 are connected.

As shown in FIG. 39, the first vibration damping member 261 includes at least one of a first damping portion and a second vibration damping portion 2612. The first vibration damping member 261 may be configured to be sandwiched between the light source fixture 221 and the second air duct component 1322. The first damping portion is sandwiched between the central part 2213 of the light source fixture 221 and the positioning member 1326 on the second air duct component 1322, and the second vibration damping portion 2612 is sandwiched between the flanged part 2214 of the light source fixture 221 and the positioning member 1326.

As described above, the fan wheel 11, during operation, could easily cause high-frequency vibrations in the overall unit due to its high-speed rotation. The arrangement of the first vibration damping member 261 can reduce vibration of the overall unit and prevent resonance. Optionally, the first vibration damping member 261 (at least one of the first damping portion and the second vibration damping portion 2612) is selected from soft vibration damping members such as rubber rings or silicone rings, and closely fit with the contacting structures. In this case, the soft vibration damping members can also provide a sealing function, and effectively prevent dust from being blown into the interior of the lighting mechanism 2 from the outlet of the air duct.

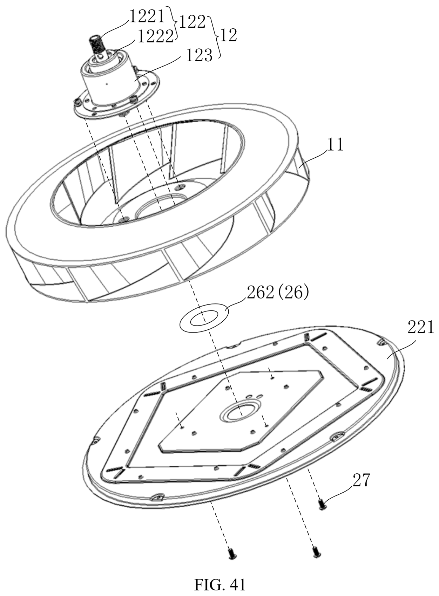

In some embodiments of the present disclosure, as described above and shown in FIG. 41, the fan mechanism 1 further includes an outer rotor motor 12. The outer rotor motor 12 is located inside the fan wheel 11 and includes an inner stator assembly 122 and a rotor assembly 123. The inner stator assembly 122 of the outer rotor motor 12 is connected to the light source fixture 221, and the rotor assembly 123 of the outer rotor motor 12 is sleeved on the outer side of the inner stator assembly 122 and connected to the fan wheel 11 to drive the fan wheel 11 to rotate. The vibration damping assembly 26 includes a second vibration damping member 262which is sandwiched between the inner stator assembly 122 and the light source fixture 221.

After the outer rotor motor 12 is activated, the inner stator assembly 122 remains stationary, and the rotor assembly 123 rotates around the inner stator assembly 122. The fan wheel 11 is directly connected to the rotor assembly 123, and thus it synchronously rotates under the drive of the rotor assembly 123 to generate airflow. In the embodiments, as shown in FIG. 41, both ends of the inner stator assembly 122 extend axially beyond the rotor assembly 123.

The inner stator assembly 122 is fixedly connected to the light source fixture 221 and the connection method may be, for example, screwing, riveting, or snap-fitting. Exemplarily, the stator assembly includes a stator shaft 1221 and a stator sleeve 1222, and the stator shaft 1221 runs through and connects to the stator sleeve 1222. Moreover, a first assembly hole is formed at one end, close to the light source fixture 221, of the stator sleeve 1222; and a second assembly hole is formed on the light source fixture 221. A third fastener 27 passes through the first assembly hole and the second assembly hole to securely connect the light source fixture 221 to the stator sleeve 1222 of the stator assembly. A second vibration damping member 262 is further provided between the light source fixture 221 and the stator sleeve 1222. The second vibration damping member 262 abuts against an end surface, facing the light source fixture 221, of the stator sleeve 1222 and is configured for improving the stability of the connection between the stator assembly and the light source fixture 221, and also plays the role of vibration damping and anti-shake. Exemplarily, the second vibration damping member 262 is a soft sealing ring.

In summary, in the anti-shake bladeless fan lamp according to the embodiments of the present disclosure, the light-emitting assembly 22 is arranged below the fan wheel 11, and the air duct assembly 132 is arranged to surround the fan wheel 11 and the light-emitting assembly 22. The light-emitting assembly 22 is connected to the second air duct component 1322 within the air duct assembly 132, and both the air duct assembly 132 and the light-emitting assembly 22 are spaced apart from the fan wheel 11. The air duct assembly 132 can form an air duct space 1323 along the circumferential direction of the fan wheel 11, and the air duct space 1323 communicates with the air outlet 112 of the fan wheel 11. The airflow generated by the fan wheel 11 is blown out through the air duct to achieve the blowing function. The lighting mechanism 2 further includes a vibration damping assembly 26, which is configured to separate the fan mechanism 1 and the light-emitting assembly 22. The first vibration damping member 261 is arranged at the place where the light source fixture 221 of the light-emitting assembly 22 and the second air duct component 1322 are connected, and/or at the place where the lampshade 223 and the second air duct component 1322 are connected. For example, the first vibration damping member is arranged between the light source fixture 221 and the positioning member 1326 on the second air duct component 1322; and the second vibration damping member 262 is arranged between the light source fixture 221 and the stator sleeve 1222. The first vibration damping member 261 and the second vibration damping member 262 can play a role of cushioning and vibration damping , and effectively mitigate the overall unit shaking caused by the high-speed rotating fan wheel 11 during the operation of the fan mechanism 1 which reduces the noise of the operational overall unit and ensures the stability of the light when both the blowing function and the lighting function are simultaneously enabled, thereby enhancing the usage performance of the anti-shake bladeless fan lamp.

### (IV) Air outlet structure of the bladeless fan lamp

In related art, a bladeless fan primarily uses a fan wheel to agitate airflow and direct the airflow into an air duct. However, the airflow tends to disperse significantly within the air duct and flows unevenly, resulting in a small air volume at the air outlet. Moreover, the airflow from the air outlet will blow directly onto the surface of the human skin, which is likely to cause discomfort and lead to health issues such as colds.

The embodiments of the present disclosure provide a fan mechanism which is capable of achieving annular airflow and is a bladeless fan mechanism. In normal usage scenarios, the blades 11 of the fan are hidden within the housing, and the fan has a better aesthetics and safety. The fan mechanism is applicable to a heat dissipation apparatus such as a bladeless electric fan or a bladeless fan lamp.

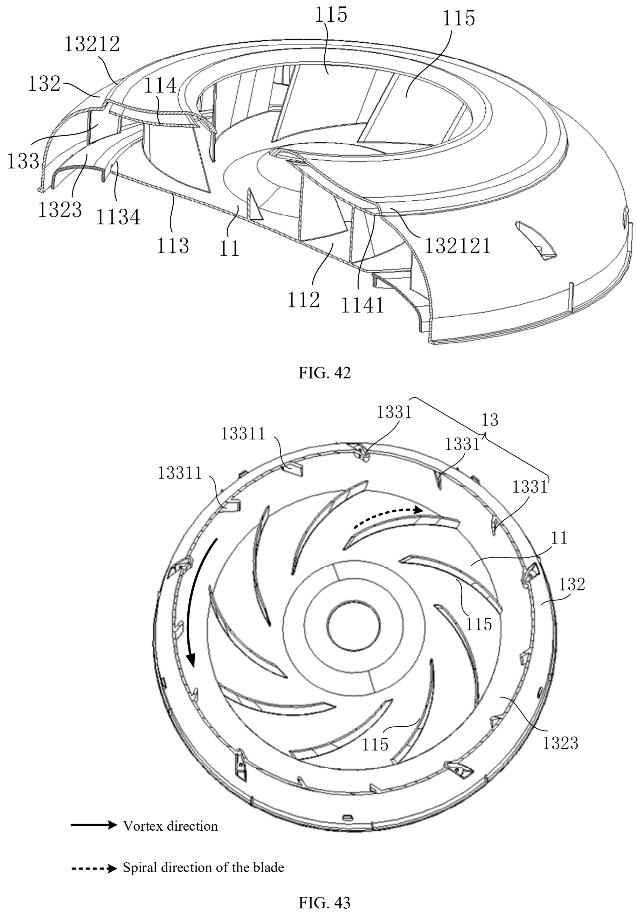

As shown in FIGS. 42 and 43, the fan mechanism 1 according to the embodiments of the present disclosure includes a fan wheel 11, an air duct assembly 132, and a flow guide assembly 133. The fan wheel 11 is provided with a plurality of blades 115, and the plurality of blades 115 are arranged in a vortex pattern; the air duct assembly 132 surrounds the fan wheel 11 and forms an air duct space 1323 along the circumferential direction of the fan wheel 11, and the air duct space 1323 communicates with the air outlet 112 of the fan wheel 11; and the flow guide assembly 133 is located inside the air duct space 1323 and is connected to the air duct assembly 132, and the flow guide assembly 133 is configured to guide the airflow blown out from the fan wheel 11 to flow along a circumferential direction. The guiding direction of the flow guide assembly 133 is opposite to the vortex direction of the plurality of blades 115.

In the embodiments of the present disclosure, "opposite direction" refers to the scenario where an extending direction from the center of the fan wheel (or a leading edge of the blade) towards a trailing edge of the blade and a guiding direction of the flow guide assembly 3 faces different sides. It should not be understood that it indicates the guiding direction and the vortex direction must be exactly 180° opposite.

As shown in FIGS. 42 and 43, the "arranged in a vortex pattern" refers to the scenario where in the direction from the center of the fan wheel 11 towards the edge (direction away from the rotation axis of the fan wheel 11), the distance between two adjacent blades 115 gradually increases; and the direction from the leading edge 1151 of the blade 115 to the trailing edge 1152 thereof intersects with the radial direction of the fan wheel 11. The leading edge 1151 is an edge on one side, close to the rotation axis of the fan wheel 11, of the blade 115, and the trailing edge 1152 is an edge on one side, away from the rotation axis, of the blade 115. This vortex pattern may also be referred to as a spiral pattern. The vortex (or spiral direction) may be determined as the direction from the leading edge 1151 of the blade 115 to the trailing edge 1152 thereof. For example, it is a clockwise direction in FIG. 43. Two connected blades 115 are spaced apart so as to divide the air outlet 112 of the fan wheel 11 into a plurality of air outlet gaps 13241. In the case that the motor 12 rotates, the airflow exits circumferentially through the air outlet 112, and the airflow direction of the air outlet 112 aligns with the vortex direction of the blades 115. In FIG. 43, for example, the air outlet 112 blows air in a clockwise direction.

A guiding direction of the flow guide assembly 133 is determined as a direction from a leading edge 1151 to a trailing edge 1152 of each flow guide member 1331 within the flow guide assembly 133. The leading edge 1151 of the flow guide member 1331 is an edge on one side, close to the rotation axis of the fan wheel 11, of the flow guide member 1331, and the trailing edge 1152 of the flow guide member 1331 is an edge on one side, away from the rotation axis, of the flow guide member 1331. In FIG. 43, the guiding direction of the flow guide assembly 133 is a counter-clockwise direction.

In the fan mechanism according to the embodiments of the present disclosure, the air duct assembly 132 encloses the air duct space 1323 in the circumferential direction of the fan wheel 11. The air duct space 1323 communicates with the air outlet 112 of the fan wheel 11, such that the airflow generated by the rotation of the fan wheel 11 (the fan wheel 11 is, for example, driven by a motor 12 without being shown in the figure) flow out of the air outlet 112, flow through the air duct space 1323, and then be blown out. Since the flow guide assembly 133 is arranged within the air duct space 1323, and the guiding direction of the flow guide assembly 133 is opposite to the vortex direction (spiral direction) of the blades 115 and can guide the airflow within the air duct space 1323 to flow circumferentially, the airflow blown out from the air duct space 1323 is an annular airflow and provides a gentler breeze effect on the surface of human skin. Therefore, compared to fans in the related art that blow air directly, the fan mechanism 1 according to the embodiments of the present disclosure offers better user comfort during use and ensures the user's health.

In the embodiments of the present disclosure, as shown in FIGS. 42 and 43, the blades 115 used in the fan wheel 11 may be spiral blades 115, such that the trailing edge 1152 of the blade 115 is twisted relative to the leading edge 1151 of the blade 115. In some embodiments, a distance between the top of the leading edge 1151 of the blade 115 and the rotation axis of the fan wheel 11 is greater than a distance between the bottom of the leading edge 1151 and the rotation axis of the fan wheel 11. A distance between the top of the trailing edge 1152 of the blade 115 and the rotation axis of the fan wheel 11 is less than a distance between the bottom of the leading edge 1151 and the rotation axis of the fan wheel 11. In some embodiments, the spiral direction of the blade 115 is the same as the vortex direction of the blade 115.

The plurality of blades 115 are arranged in a vortex pattern, and the guiding direction of the flow guide assembly 133 needs to be opposite to the vortex direction of the blades 115. For example, in the case that the vortex direction of the blades 115 of the fan wheel 11 is right-handed which corresponds to a clockwise direction, and the guiding direction of the flow guide assembly 133 is accordingly a counter-clockwise direction. For another example, in the case that the vortex direction of the blades 115 of the fan wheel 11 is left-handed which corresponds to a counter-clockwise direction, and the guiding direction of the flow guide assembly 133 is accordingly a clockwise direction.

Referring to FIG. 43, in some embodiments, the flow guide assembly 133 includes a plurality of flow guide members 1331, and each flow guide member 1331 is provided with a flow guide surface 13311. The arrangement direction of the plurality of flow guide surfaces 13311 is opposite to the vortex direction of the blades 115, and the airflow blown out from the fan wheel 11 is adapted to flow along the arrangement direction of the plurality of flow guide surfaces 13311.

FIG. 43 illustrates the cross-sectional structure of a fan wheel 11 and an air duct assembly 132 (only the first air duct component 1321 is shown) according to some embodiments of the present disclosure. Taking the fan wheel 11 shown in FIG. 43 as an example, the vortex direction of the blades 115 of the fan wheel 11 is right-handed, which corresponds to a clockwise direction. In this case, the flow guide surfaces 13311 of the plurality of flow guide members 1331 are arranged along a counter-clockwise direction. After the airflow generated by the fan wheel 11 enters the air duct space 1323, the airflow flows along a counter-clockwise direction under the flow guide action of each flow guide surface 13311, thereby achieving the guiding function of the flow guide assembly 133 on the airflow within the air duct space 1323.

It should be noted that in the embodiments, for a fan wheel 11 with right-handed blades 115, it is typically chosen to drive the fan wheel 11 to rotate along a counter-clockwise direction, that is, the rotational direction of the fan wheel 11 is opposite to the vortex direction of the blades 115. Accordingly, driven by the fan wheel 11, the airflow blown out from the fan wheel also flows in a counter-clockwise direction. The plurality of flow guide surfaces 13311, which are also arranged along a counter-clockwise direction, will further guide the airflow to flow along a counter-clockwise direction and towards the outlet of the air duct space 1323, thereby ensuring that the airflow blown out from the air duct space 1323 is an annular airflow. For a fan wheel 11 with left-handed blades 115, it is typically chosen to drive the fan wheel 11 to rotate along a clockwise direction. Accordingly, the airflow blown out from the fan wheel 11 flows in a clockwise direction. The plurality of flow guide surfaces 13311, which are also arranged along a clockwise direction, will further guide the airflow to flow along a clockwise direction and towards the outlet of the air duct space 1323, thereby ensuring that the airflow blown out from the air duct space 1323 is an annular airflow. Annular airflow can act relatively gently on the surface of human skin, such that it is less likely to cause discomfort even after prolonged exposure, and thus the comfort of using the fan mechanism 1 is enhanced.

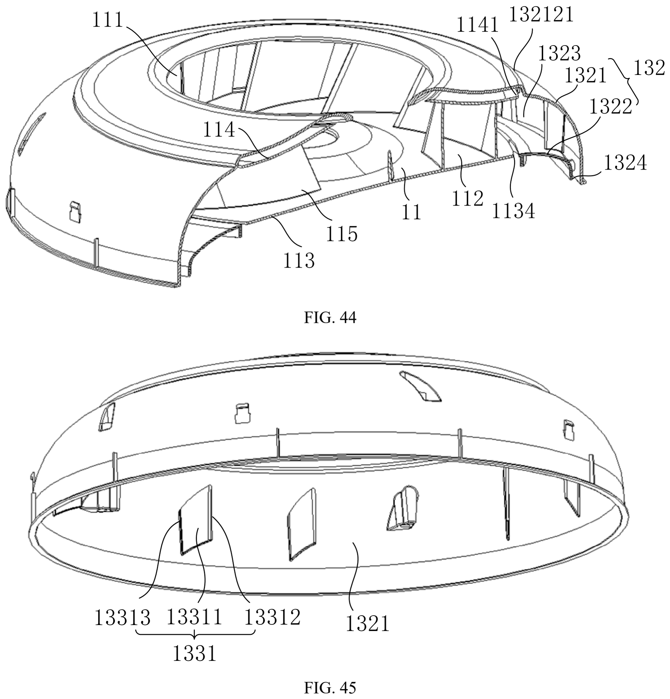

In some embodiments of the present disclosure, as shown in FIG. 44, the air duct assembly 132 includes a first air duct component 1321 and a second air duct component 1322. Both the first air duct component 1321 and the second air duct component 1322 are arranged to surround the air outlet 112 of the fan wheel 11. The first air duct component 1321 is adjacent to the top of the fan wheel 11, and the second air duct component 1322 is adjacent to the bottom of the fan wheel 11; and an air duct space 1323 is formed between the first air duct component 1321 and the second air duct component 1322. One end, away from the fan wheel 11, of the first air duct component 1321 as well as one end, away from the fan wheel, of the second air duct component 1322 are close to each other and a gap is provided therebetween, such that an annular opening 1324 is formed. The annular opening 1324 can serve as the vent of a bladeless fan lamp for discharging the airflow blown out from the fan wheel 11.

In the embodiments of the present disclosure, the air inlet 111 is typically located at the top of the fan wheel 11, while the air outlet 112 is located on the side surface of the fan wheel 11 and is formed circumferentially. The first air duct component 1321 and the second air duct component 1322 are both circumferentially formed on the side surface of the fan wheel 11. The first air duct component 1321 is adjacent to the top of the fan wheel 11 and the second air duct component 1322 is adjacent to the bottom of the fan wheel 11, such that an annular air duct space 1323 is formed between the first air duct component 1321 and the second air duct component 1322, and the entrance of the air duct space 1323 faces and communicates with the air outlet 112 of the fan wheel 11 to ensure that the airflow blown out from the fan wheel 11 enters the air duct space 1323 in the maximum extent. The bottom of the fan wheel 11 is arranged opposite to the top.

As shown in FIGS. 42 and 44, the fan wheel 11 includes a top plate 114 and a bottom plate 113, and blades 115 are fixed between the top plate 114 and the bottom plate 113. The first air duct component 1321 at least partially covers one side, away from the bottom plate 113, of the top plate 114 and bends in the direction towards the second air duct component 1322 at a first circumferential edge 1141 of the top plate 114 to form a bent part 13212. The bent part 13212 includes a vertical bent surface 132121, and the vertical bent surface 132121 is at least partially located on the outer side of the top plate 114. The first circumferential edge 1141 is the edge on one side, away from the rotation axis of the fan wheel 11, of the top plate 114. It is understood that compared to two portions adjacent to the vertical bent surface 132121 in the radial direction of the fan wheel 11, the angle between the vertical bent surface 132121 and the rotation axis of the fan wheel 11 is the smallest, so the vertical bent surface 132121 tends to extend along the height direction (vertical direction). In some embodiments, the vertical bent surface 132121 is parallel to the height direction or intersects with the height direction at a certain angle.

Exemplarily, a lower end of the vertical bent surface 132121 may be not lower than a bottom end of the top plate 114, such that the vertical bent surface 132121 does not block the air outlet 112 of the fan wheel 11.

In some embodiments, the air duct assembly 132 is spaced apart from the fan wheel 11, such that the air duct assembly 132 can remain stationary when the fan wheel 11 rotates. The flow guide member 1331 is arranged within the air duct space 1323 enclosed by the first air duct component 1321 and the second air duct component 1322. The edge, close to the rotation axis of the fan wheel 11, of the flow guide member 1331 does not extend beyond the edges, close to the rotation axis of the fan wheel 11, of the first air duct component 1321 and the second air duct component 1322. The blades 115 are arranged between the top plate 114 and the bottom plate 113, and the edges, away from the rotation axis of the fan wheel 11, of the blades 115 do not extend beyond the edges, away from the rotation axis of the fan wheel 11, of the top plate 114 and bottom plate 113, to avoid interference with the air duct assembly 132 when the fan wheel 11 rotates.

As shown in FIGS. 42 and 44, the vertical bent surface 132121 is spaced apart from the first circumferential edge 1141 of the top plate 114, and a radial distance between the vertical bent surface 132121 and the first circumferential edge 1141 is less than a radial distance between the flow guide member 1331 and the first circumferential edge 1141.

In the height direction from the bottom plate 113 towards the top plate 114, the second air duct component 1322 is not higher than the bottom plate 113. In this way, the second air duct component 1322 does not block the air outlet 112 of the fan wheel 11. In other words, in the height direction, the dimension of the entrance of the air duct space 1323 is greater than or approximately equal to the dimension of the air outlet 112 of the fan wheel 11, and thus it is achieved that the entrance of the air duct space 1323 faces and communicates with the air outlet 112 of the fan wheel 11, such that the airflow from the air outlet 112 can enter the air duct space 1323 in the maximum extent.

In some embodiments, as shown in FIGS. 42 and 44, the second air duct component 1322 is spaced apart from the second circumferential edge 1134 of the bottom plate 113, and a radial distance between the second air duct component 1322 and the second circumferential edge 1134 is less than a distance between the flow guide member 1331 and the second circumferential edge 1134. The second circumferential edge 1134 is an edge on one side, away from the rotation axis of the fan wheel 11, of the bottom plate 113.

It is understood that the flow guide member 1331 may be obliquely arranged relative to the circumferential direction of the fan wheel 11, causing different positions on the flow guide member 1331 to have different radial distances from the rotation axis of the fan wheel 11. As a result, different positions on the flow guide member 1331 have different radial distances to the first circumferential edge 1141 or the second circumferential edge 1134. In the embodiments of the present disclosure, a radial distance between the flow guide member 1331 and the first circumferential edge 1141 is determined as a radial distance between the position, closest to the rotation axis of the fan wheel 11, on the flow guide member 1331 and the first circumferential edge 1141, i.e., the minimum radial distance between the flow guide member 1331 and the first circumferential edge 1141 of the top plate 114. A radial distance between the flow guide member 1331 and the second circumferential edge 1134 is determined as a radial distance between the position, closest to the rotation axis of the fan wheel 11, on the flow guide member 1331 and the first circumferential edge 1141, i.e., the minimum radial distance between the flow guide member 1331 and the first circumferential edge 1141 of the top plate 114.

In some embodiments, as shown in FIGS. 42 and 43, the first circumferential edge 1141 of the top plate 114 and the second circumferential edge 1134 of the bottom plate 113 are substantially flush in the radial direction of the fan wheel 11. The trailing edge 1152 on one side, away from the rotation axis, of the blade 115 is flush with both the first circumferential edge 1141 of the top plate 114 and the second circumferential edge 1134 of the bottom plate 113.

In the case that the fan wheel 11 is in operation, air is drawn in through the air inlet 111 on the top and forms an airflow, which flows through the blades 115 and is blown out through the air outlet 112 and enters the air duct space 1323, and then an annular airflow is formed under the action of the flow guide assembly 133 and is blown out from the air duct space 1323.

As shown in FIG. 44, the farther the first air duct component 1321 and the second air duct component 1322 are from the fan wheel 11, the closer they are to each other . Therefore, the farther the formed air duct space 1323 from the fan wheel 11 in the radial direction, the smaller the cross-sectional area thereof, which helps to concentrate the airflow blown out from the fan wheel 11, and improve the air outlet efficiency and the air delivery distance at the outlet of the air duct space 1323. The outlet of the air duct space 1323 is enclosed by the end, away from the fan wheel 11, of the first air duct component 1321 and the end, away from the fan wheel 11, of the second air duct component 1322.

In some embodiments of the present disclosure, as shown in FIG. 45, the flow guide members 1331 are connected to the first air duct component 1321 and are obliquely arranged relative to the inner wall of the first air duct component 1321. The flow guide surface 13311 is a surface, facing away from the first air duct component 1321, of the flow guide member 1331. A direction from a first end to a second end of the flow guide surface 13311 is parallel to a tangential direction of the arrangement direction of the plurality of flow guide surfaces 13311. The first end is one end away from the first air duct component 1321, and the second end is one end connected to the first air duct component 1321.

Referring to FIGS. 43 and 45, each flow guide member 1331 is obliquely connected to the inner wall of the first air duct component 1321and thus the flow guide member 1331 may be provided with a surface facing the inner wall of the first air duct component 1321 and a flow guide surface 13311 facing away from the inner wall of the first air duct component 1321. In the case that the airflow blown out from the fan wheel 11 impacts on the flow guide surface 13311, in an aspect, the airflow will flow along the flow guide surface 13311 from the first end to the second end, where the first end is opposite the second end, and in another aspect, the airflow will be pressurized by the flow guide member 1331, such that the dispersion degree of the airflow is reduced and the airflow is made more concentrated. Therefore, the flow guide member 1331 can achieve the effect of guiding and concentrating the divergent airflow blown out from the fan wheel 11, and further increase the volume and distance of air delivery at the outlet of the air duct space 1323.

In some embodiments, as shown in FIG. 44, the flow guide member 1331 abuts against the second air duct component 1322. Exemplarily, the top end of the flow guide member 1331 is connected to the first air duct component 1321, one side edge adjacent to the top end is also connected to the first air duct component 1321, and the lower end of the flow guide member 1331 abuts against the second air duct component 1322.

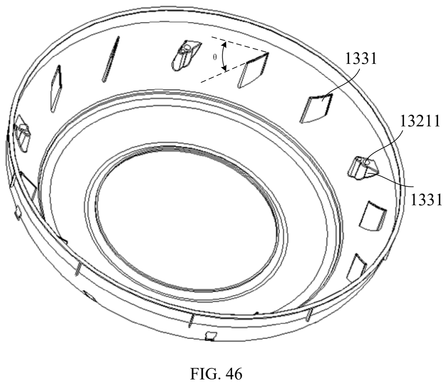

Optionally, each flow guide member 1331 has a chordal tangent angle on the first air duct component 1321 that is greater than a certain degree and less than another degree. The chordal tangent angle refers to the angle between the tangent at the contact point of the first air duct component 1321 and the flow guide member 1331 (or a tangent of the flow guide member 1331 at the contact point) in a defined plane. The defined plane is perpendicular to the rotation axis of the fan wheel 11, and the contact point is an intersection point of the first air duct component 1321 and the flow guide member 1331 on the defined plane. As shown in FIG. 46, the chordal tangent angle of the flow guide member 1331 on the first air duct component 1321 is represented by θ, where 15° < θ < 90°. Exemplarily, the chordal tangent angle θ may be 30°, 40°, 50°, or 60°.

Optionally, the flow guide surface 13311 of at least one flow guide member 1331 is a curved surface, which curves in a direction facing away from the first air duct component 1321.

As shown in FIG. 46, there is at least one flow guide member 1331 among the plurality of flow guide members 1331 which is a curved plate. Therefore, the flow guide surface 13311 of the flow guide member 1331 is a curved surface, and airflow is suitable for flowing over the convex side of the curved surface. Optionally, the shape of the flow guide surface 13311 is arc-shaped.

In some embodiments of the present disclosure, there is at least one flow guide member 1331 among the plurality of flow guide members 1331 that is provided with a first connecting structure 13315. A second connecting structure 13221 is arranged at a position, which corresponds to the first connecting structure 13315, on the second air duct component 1322, and the second connecting structure 13221 connects or cooperates with the first connecting structure 13315.

In one example, the first connecting structure 13315 and the second connecting structure 13221 are connected to each other. The first connecting structure 13315 may be a hook or a slot while the second connecting structure 13221 may accordingly be a slot or a hook. During assembly, the hook snaps into the corresponding slot, such that the first air duct component 1321 and the second air duct component 1322 are connected together.

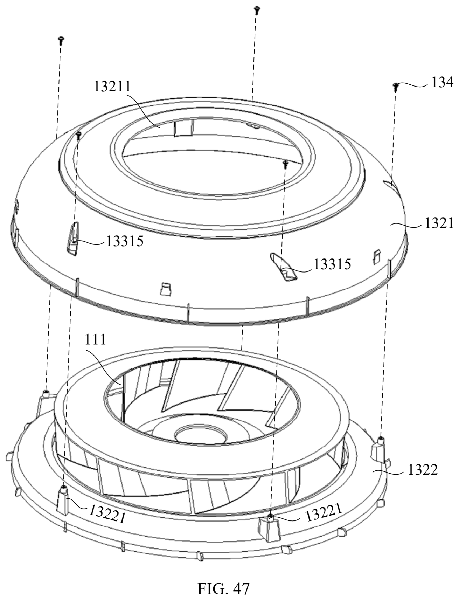

In another example, as shown in FIG. 47, the first connecting structure 13315 and the second connecting structure 13221 cooperate with each other. The first connecting structure 13315 is a screw hole running through the first air duct component 1321 and the flow guide member 1331 along the height direction, and the second connecting structure 13221 is a screw hole formed on the second air duct component 1322. The first air duct component 1321 and the second air duct component 1322 are connected together by a fourth fastener 134 installed in the first connecting structure 13315 and the second connecting structure 13221. The fourth fastener 134 is, for example, a screw. The thickness of the flow guide member 1331 which is provided with the first connecting structure 13315 is greater than the thickness of the other flow guide members 1331 to ensure the strength of the first connecting structure 13315.

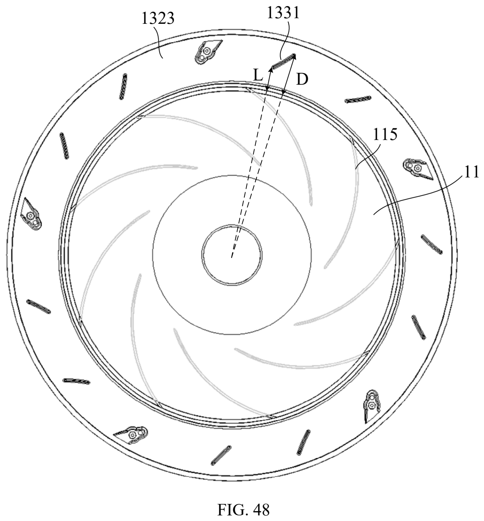

FIG. 48 illustrates a bottom view of a mating structure between the fan wheel 11 and the first air duct component 1321 according to some embodiments of the present disclosure. In the figure, darker (black) solid lines are used to represent the structural features of the fan wheel 11 exposed to the external view, while lighter (gray) solid lines are used to represent the blades 115 hidden inside the fan wheel 11. Moreover, in FIG. 48, L is used to illustrate a distance between the flow guide member 1331 and the blade 115, such as the minimum distance between the flow guide member 1331 and the outer edge of the blade 115; and D is used to illustrate a width of the air duct space 1323, i.e., the minimum distance between the end, which is connected to the first air duct component 1321, of the flow guide member 1331 and the outer edge of the blade 115. In the embodiments of the present disclosure, the distances may use radial distances in the radial direction of the fan wheel 11.

In the embodiments of the present disclosure, the distance L between the flow guide member 1331 and the blade 115 of the fan wheel 11 may be determined based on the diameter of the fan wheel 11 and the dimension of the air duct outlet (annular opening 1324). In the case that the distance L between the flow guide member 1331 and the blade 115 of the fan wheel 11 is too large, the guiding effect is poor. In the case that the distance L between the flow guide member 1331 and the blade 115 of the fan wheel 11 is too small, the amount of air output will be reduced and air output distance will be shortened and thus the airflow effect is affected. Optionally, the distance L between the flow guide member 1331 and the blade 115 of the fan wheel 11 is 0.3 to 0.7 times the width D of the air duct space 1323. Further, the distance L between the flow guide member 1331 and the blade 115 of the fan wheel 11 is 0.5 to 0.6 times the width D of the air duct space 1323. Exemplarily, it is 0.57 times, and tests indicate that at this ratio, the fan mechanism 1 achieves both good guiding and airflow effects.

In some embodiments of the present disclosure, the number of the flow guide member 1331 is greater than or equal to the number of the blade 115 of the fan wheel 11.

Within a certain range, the more flow guide members 1331 there are, the more evenly the airflow from the blades 115 is distributed, and the better guiding effect is. However, in the case that there are too many flow guide members 1331, it is likely to result in the blockage of the airflow within the air duct space 1323, and thus the air amount is decreased, the airflow velocity is reduced, distance of air output is shortened, and the airflow effect is affected. Optionally, the number of flow guide members 1331 is 1.1 to 3 times the number of blades 115. Further, the number of flow guide members 1331 is 1.5 to 2 times the number of blades 115. Exemplarily, the ratio of flow guide members 1331 to blades 115 is 5:3 and tests indicate that at this ratio, the fan mechanism 1 achieves both good guiding and airflow effects.

In summary, the fan mechanism 1 according to the embodiments of the present disclosure is provided with the air duct space 1323 enclosed by the first air duct component 1321 and the second air duct component 1322; and the air duct space 1323 surrounds the outer side of the air outlet 112 of the fan wheel 11. A plurality of flow guide members 1331 are arranged within the air duct space 1323, and the number of the flow guide members 1331 is no less than the number of the blades 115 of the fan wheel 11. Each flow guide member 1331 is obliquely connected to the inner wall of the first air duct component 1321, and the distance between the flow guide member 1331 and the blades 115 is 0.3 to 0.7 times the width of the air duct space 1323. The flow guide members 1331 are provided with flow guide surfaces 13311, and the plurality of flow guide surfaces 13311 cooperate to guide the flow direction of the airflow blown out from the fan wheel 11. The guiding direction is opposite to the vortex direction of the blades 115 of the fan wheel 11, such that the airflow is guided by the flow guide surfaces 13311 within the air duct space 1323, and then an annular airflow with a flow direction opposite to the vortex direction of the blades 115 is formed and blown out. Since the annular airflow provides a gentler breeze effect on the surface of human skin, compared to fans in the related art that blow air directly, the fan mechanism 1 according to the embodiments of the present disclosure offers better user comfort during use and ensures the user's health.

The embodiments of the present disclosure further provide a heat dissipation apparatus, which includes the fan mechanism 1 with annular airflow described in any one of the above embodiments. Exemplarily, the heat dissipation apparatus is a bladeless electric fan, a bladeless fan lamp, or the like.

Optionally, the heat dissipation apparatus further includes a housing which is provided with an air outlet opening (such as the air intake 1311 described above). The fan mechanism 1 is located inside the housing, and an outlet of the air duct space 1323 of the fan mechanism 1 is in communication with a corresponding air outlet opening.

The heat dissipation apparatus according to the embodiments of the present disclosure uses the fan mechanism 1 with annular airflow, so the air duct assembly 132 can enclose an air duct space 1323 in the circumferential direction of the fan wheel 11. The air duct space 1323 communicates with the air outlet 112 of the fan wheel 11, such that the airflow generated by the rotation of the fan wheel 11 flows out through the air outlet 112, passes through the air duct space 1323, and is then blown out. Since the flow guide assembly 133 is arranged within the air duct space 1323, and the guiding direction of the flow guide assembly 133 is opposite to the vortex direction of the blades 115 and can guide the airflow within the air duct space 1323 to flow circumferentially, the airflow blown out from the air duct space 1323 is an annular airflow and provides a gentler breeze effect on the surface of human skin. Therefore, compared to fans in the related art that blow air directly, the heat dissipation apparatus according to the embodiments of the present disclosure offers better user comfort during use, and ensures the user's health.

In the above embodiments, the blade 115 may be a spiral blade 115, and the flow guide member 1331 may be illustrated as a single plate-shaped component. In other embodiments, the blade 115 may be also a single plate-shaped component, and the flow guide member 1331 may be a convex structure provided with at least two intersecting planes.

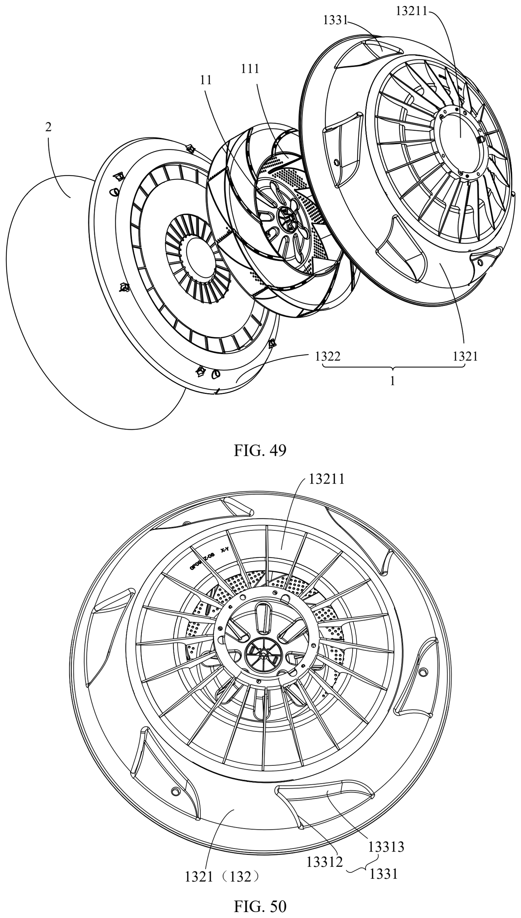

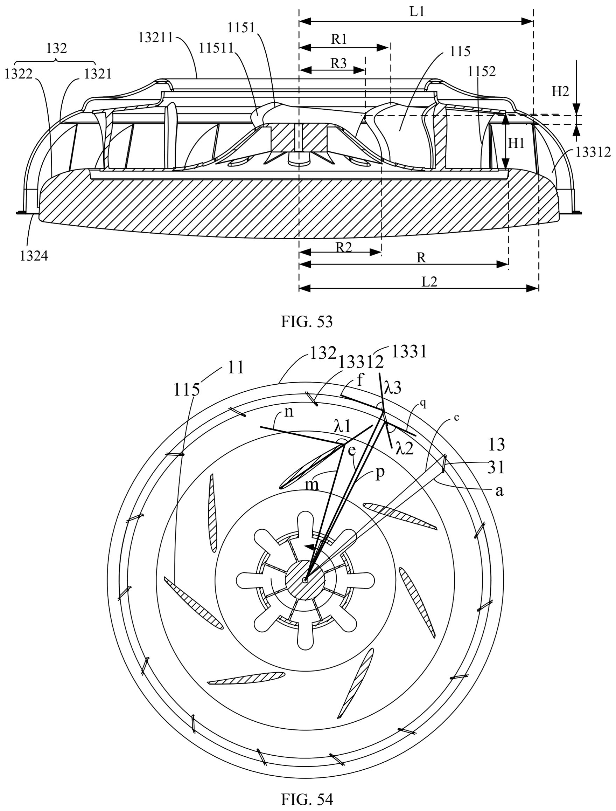

As shown in FIG. 49, the embodiments of the present disclosure provide a fan mechanism 1, which is installed on the ceiling in a suspended manner, and thus the fan mechanism 1 is also referred to as a ceiling fan, and the fan mechanism 1 is applicable to a bladeless fan lamp. As shown in FIGS. 53 and 54, the fan mechanism 1 includes an air duct assembly 132 (which may serve as a casing for the fan wheel), a fan wheel 11, and a plurality of flow guide members 1331.

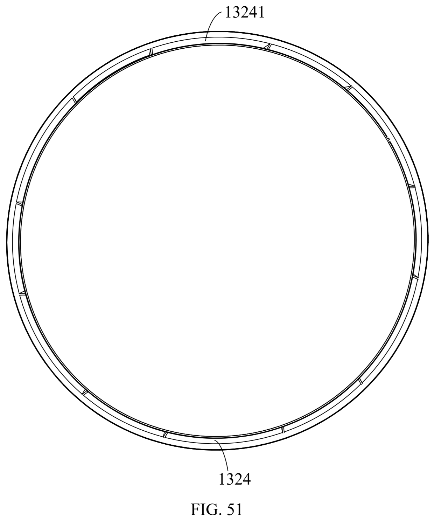

As shown in FIGS. 50 and 51, air inlet gaps 13211 are formed on the top of the air duct assembly 132, and annular openings 1324 are formed on the bottom. The fan wheel 11 is located inside the air duct assembly 132, for example, in the space enclosed on one side, away from the first air duct component 1321, of the second air duct component 1322. Therefore, the air duct component may be also referred to as a casing, which cooperates with the outer housing 131 described above to form the fan housing 13. The first air duct component 1321 located on the outer side may be referred to as the outer casing, and the second air duct casing located on the inner side may be referred to as the inner casing.

The flow guide member 1331 surrounds the fan wheel 11. The flow guide member 1331 is provided with a first air guide part 13312, and the tail end of the first air guide part 13312 is connected to the air duct assembly 132 (for example, the first air duct component 1321). In a reference plane perpendicular to the rotation axis of the fan wheel 11, a connection line between a head end of the first air guide part 13312 and the central axis of the annular opening 1324 is set as a first reference line a, and a connection line between a tail end of the first air guide part 13312 and the rotation axis is set as a second reference line c; and the second reference line c and the first reference line a are arranged sequentially in the circumferential direction along the rotational direction of the fan wheel 11. The first air guide part 13312 is arc-shaped, and the concave surface of the first air guide part 13312 faces away from the fan wheel 11.

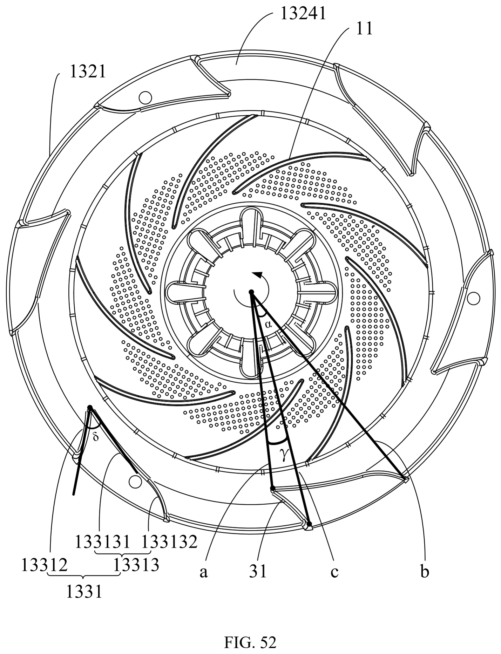

Since the annular opening 1324 on the air duct assembly 132 is formed around the rotation axis of the fan wheel 11, the central axis of the annular opening 1324 may be the rotation axis of the fan wheel 11, such that the reference plane is perpendicular to the central axis of the annular opening 1324. It is understood that the rotational direction of the fan wheel 11 is not limited to the clockwise direction or the counter-clockwise direction, and it can actually indicate the circumferential (annular) direction of the fan wheel 11. Thus, based on FIG. 52, it is evident that the second reference line c and the first reference line a are sequentially arranged along the circumferential direction of the fan wheel 11.

The annular opening 1324 is divided by the flow guide members 1331 into a plurality of air outlet gaps 13241 arranged in an annular configuration. In the case that the flow guide member 1331 (also referred to as the air guide member) only includes the first air guide part 13312, the first air guide part 13312 divides the annular opening 1324 into a plurality of continuously arranged air outlets 112. In the case that the flow guide member 1331 only includes the first air guide part 13312, the surface of one side, facing away from the first air duct casing, of the first air guide part 13312 serves as the flow guide surface 13311 in the above embodiments.

In the fan mechanism (bladeless fan lamp) according to the embodiments of the present disclosure, as shown in FIG. 52, the second reference line c and the first reference line a are arranged along the rotational direction of the fan wheel 11, such that the deflection direction of the first flow guide part can align with the rotational direction of the fan wheel 11, and the deflection direction of the first flow guide part is made to be close to the airflow direction from the fan wheel 11, which can prevent intense collisions between the airflow and the first flow guide part and reduce noise generated by the airflow.

The first air guide part 13312 is arc-shaped. In an aspect, compared to a straight-shaped first air guide part 13312, setting the first air guide part 13312 as arc-shaped can increase the length of the first air guide part 13312, and thus the pressurization path of the airflow is increased which is beneficial for increasing wind pressure. Since the second air guide part 13313 is longer, it can reduce the pressure difference between the tail ends of the second air guide part 13313 and the first air guide part 13312 by increasing the length of the first air guide part 13312, thereby resulting in more even airflow from the annular opening 1324. In another aspect, the first air guide part 13312 can deflect the airflow radially towards the fan wheel 11, such that the airflow has a larger radial component after flowing towards the annular opening 1324, which is beneficial for the airflow to reach a greater distance.

In some examples, as shown in FIG. 54, the fan wheel 11 includes a plurality of blades 115which are arranged in an annular configuration and surround the air inlet 111 on the fan (or the air inlet gap 13211 of the air duct assembly 132). In the reference plane perpendicular to the rotation axis of the fan wheel 11, a connection line between a tail end of a blade 115 and a central axis of the fan wheel 11 is set as the third reference line m; a straight line perpendicular to the third reference line m at the tail end of the blade 115 is set as the fourth reference line n; an obtuse angle formed between the fourth reference line n and a connection line between a head end and the tail end of the blade 115 is set as λ1; a connection line between a head end of the first air guide part 13312 and the rotation axis (central axis) of the fan wheel 11 is set as the fifth reference line p; a straight line perpendicular to the fifth reference line p at the head end of the first air guide part 13312 is set as the sixth reference line q; and an acute angle formed between the sixth reference line q and the tangent at the head end of the first air guide part 13312 is set as λ2, where λ1-90° ≤ λ2 ≤ λ1-80°.

When the airflow passes through the fan wheel 11, the airflow has component velocities in a first direction and a second direction. The first direction is a direction of the third reference line m, and the second direction is a direction of the connection line between the head end and the tail end of the blade 115. Therefore, the absolute velocity of the airflow is between the first direction and the second direction.

By setting λ1-90° ≤ λ2 ≤ λ1-80°, the direction of the tangent at the head end of the first air guide part 13312 can be located between the first direction and the second direction, such that the airflow can be as parallel as possible to the head end of the first air guide part 13312. In this way, the impact of the airflow on the first air guide part 13312 can be reduced, thereby decreasing the noise generated by the airflow.

In some examples, as shown in FIG. 54, a connection line between the tail end of the first air guide part 13312 and the rotation axis of the fan wheel 11 is set as the seventh reference line e; a straight line perpendicular to the seventh reference line e at the tail end of the first air guide part 13312 is set as the eighth reference line f; and an acute angle formed between the eighth reference line f and the tangent at the tail end of the first air guide part 13312 is λ3, where λ2 + 20° ≤ λ3 ≤ λ2 + 40°.

In this way, the tail end of the first air guide part 13312 can be as close as possible to the radial direction of the fan wheel 11, such that the airflow deflects along the radial direction of the fan wheel 11 when flowing from the tail end of the first air guide part 13312. As a result, the airflow becomes more concentrated, which can reduce airflow losses and is beneficial for the airflow to be blown to a greater distance. The farther the airflow is blown, the more easily the air blown from each air outlet gap 13241 is continuous in the circumference, thereby enhancing the uniformity of the annular airflow effect of the ceiling fan (bladeless fan lamp). In the case that the difference between λ3 and λ2 is too large, it may cause the deflection direction at the tail end of the first air guide part 13312 to be opposite to the deflection direction at the head end of the first air guide part 13312, leading to a deviation of the first air guide part 13312 from the radial direction of the fan wheel 11.

In some examples, as shown in FIG. 53, the leading edge 1151 of the blade 115 is provided with a forward protrusion structure 11511which is located between the top and bottom of the leading edge 1151 and protrudes in the direction towards the air inlet 111 (or the air inlet gap 13211). The leading edge 1151 is the edge, close to the air inlet 111, of the blade 115. A distance between the top of the leading edge 1151 and the rotation axis of the fan wheel 11 is set as R1, a distance between the bottom of the leading edge 1151 and the rotation axis is set as R2, and a distance between the forward protrusion structure 11511 and the rotation axis is set as R3, where R1 > R3 and R2 > R3. A height of the top of the head end of the first air guide part 13312 is lower than a height of the forward protrusion structure 11511.

Based on FIG. 53, it is evident that the leading edge 1151 of the blade 115 is the edge, close to the rotation axis of the fan wheel 11, of the blade 115; and the trailing edge 1152 is the edge, away from the rotation axis of the fan wheel 11, of the blade 115.

According to biomimetic principles, it is known that the forward protrusion structure 11511 can mimic the protrusion structure at the leading edge of a bird's wing to reduce vortices at the leading edge 1151 of the blade 115, which makes the airflow smoother such that the air resistance encountered by the leading edge 1151 of the blade 115 is reduced and then the wind noise at the leading edge 1151 is decreased.

In the case that the top of the head end of the first air guide part 13312 is higher than that of the forward protrusion structure 11511, it will result in an overall increased height of the first air guide part 13312 and thus the thickness of the ceiling fan is greater, and the ceiling fan is larger in volume and heavier.

In some examples, as shown in FIG. 53, the air duct assembly 132, which serves as the casing, includes a first air duct component 1321 (also referred to as the outer casing) and a second air duct component 1322 (also referred to as the inner casing). The first air duct component 1321 is sleeved on the second air duct component 1322, the second air duct component 1322 is provided with an air inlet gap 13211, and an annular opening 1324 is formed between the bottom of the first air duct component 1321 and the bottom of the first air duct component 1321. The top of the head end of the first air guide part 13312 is connected to the first air duct component 1321, and the bottom of the head end of the first air guide part 13312 is connected to the second air duct component 1322. The bottom of the head end of the first air guide part 13312 is located below the bottom of the fan wheel 11. In the case that the bottom of the head end of the first air guide part 13312 is located above the bottom of the fan wheel 11, a position where the second air duct component 1322 and the bottom of the head end of the first air guide part 13312 are connected will also be located above the bottom of the fan wheel 11, which obstructs the airflow from the fan wheel 11.

In some examples, as shown in FIG. 53, the height of the trailing edge 1152b of the blade 115 is set as H1, and a height difference between the top of the head end of the first air guide part 13312 and the forward protrusion structure 11511 is set as H2, where H2 ≤ 0.2H1. The trailing edge 1152b is opposite the leading edge 1151a. According to simulation and test data, it is known that in the case that 0 < H2 ≤ 0.2H1, the first air guide part 13312 exhibits the best guiding effect with minimal noise generation. In the case that H2 is too large, the height of the first air guide part 13312 would be too low, such that the airflow cannot be quickly guided by the first air guide part 13312 after flowing from the blade 115. Instead, the airflow is more likely to collide directly with the air duct assembly 132, thereby causing the airflow to generate greater noise.

In some examples, the height of the bottom of the head end of the first air guide part 13312 is higher than the height of the bottom of the tail end of the first air guide part 13312. And/or, the height of the bottom of the head end of the first air guide part 13312 is lower than the height of the fan wheel 11 at the rotation axis. In this way, a downward air duct can be formed within the housing. In the case that the airflow passes through the forward protrusion structure 11511, the main intake portion is directed downward to the first air guide part 13312 and then flows towards the annular opening 1324. Therefore, there is a gradual change in the flow direction of the airflow, which avoids the generation of greater noises caused by sudden changes in the airflow at the annular opening 1324.

In some examples, along the direction from the air inlet 111 towards the annular opening 1324 (i.e., along the height direction from top to bottom), the distance between the head end of the first air guide part 13312 and the rotation axis of the fan wheel 11 (or the central axis of the annular opening 1324) gradually increases or decreases. In this way, it ensures that the airflow does not collide with all positions of the head end of the first air guide part 13312 simultaneously. For example, along the direction from the air inlet 111 towards the annular opening 1324, the distance between the head end of the first air guide part 13312 and the central axis of the annular opening 1324 gradually increases, such that the top of the head end of the first air guide part 13312 is closest to the blade 115. Therefore, after flowing out of the blade 115, the airflow first collides with the top of the head end of the first air guide part 13312 and then with the bottom, thereby reducing the collision intensity between the airflow and the first air guide part 13312 and then lowering the noise generated by the airflow.

In some examples, as shown in FIG. 53, the distance between the top of the head end of the first air guide part 13312 and the rotation axis of the fan wheel 11 is set as L1, and the distance between the bottom of the head end of the first air guide part 13312 and the rotation axis is set as L2; and the maximum radius of the fan wheel 11 is set as R, where L2 > L1, and 0.05L2-R ≤ L2-L1 ≤ 0.2L2-R.

The air duct assembly 132 includes a first air duct component 1321 and a second air duct component 1322. The first air duct component 1321 is sleeved on the second air duct component 1322. The first air duct component 1321 is provided with an air inlet 111, and an annular opening 1324 is formed between the bottom of the first air duct component 1321 and the bottom of the second air duct component 1322. Along the direction from the air inlet 111 towards the annular opening 1324, the distance between the first air duct component 1321 and the central axis of the annular opening 1324 gradually increases, and the distance between the head end of the first air guide part 13312 and the central axis of the annular opening 1324 gradually increases.

Since the distance between the first air duct component 1321 and the central axis of the annular opening 1324 gradually increases along the direction from the air inlet 111 towards the annular opening 1324, in the case that L2 < L1, the distance between the head end of the bottom of the first air guide part 13312 and the first air duct component 1321 would be too large, such that the air guide path at the bottom of the first air guide part 13312 is longer, thereby increasing the pressurization path of the airflow, which would lead to a higher wind pressure at the tail end of the bottom of the first air guide part 13312, and cause the noise generated by the airflow to be increased.

For the condition 0.05L2-R ≤ L2-L1 ≤ 0.2L2-R, in the case that L2-L1 is too large, it will cause the top of the head end of the first air guide part 13312 to be too close to the trailing edge 1152 of the blade 115, such that the airflow velocity is higher when the airflow reaches the top of the head end of the first air guide part 13312, thereby leading to a stronger impact with the first air guide part 13312 and generating more noise. In the case that L2 - L1 is too small, it will cause the bottom of the head end of the first air guide part 13312 to be too far from the trailing edge 1152 of the blade 115, such that the wind velocity is lower when the airflow reaches the bottom of the head end of the first air guide part 13312, thereby leading to a reduced air delivery distance of the ceiling fan.

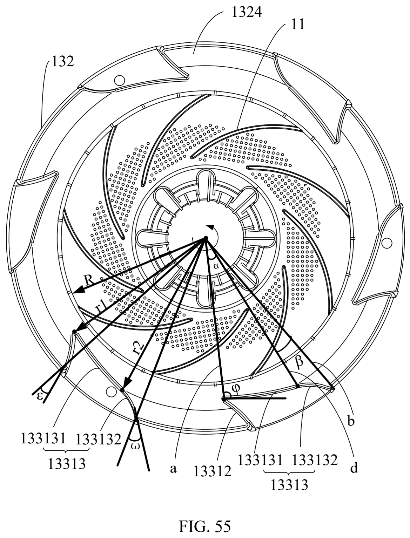

In some examples, as shown in FIG. 55, in the reference plane, an angle between the tangent at the tail end of the first air guide part 13312 and a connection line between the tail end of the first air guide part 13312 and the rotation axis of the fan wheel 11 (or the central axis of the annular opening 1324) is set as ε, where 0° < ε < 20°. In this way, it can make the angle between the wind direction at the tail end of the first air guide part 13312 and the radial direction of the annular opening 1324 to be smaller, such that the first air guide part 13312 can deflect the airflow direction towards the radial direction of the ceiling fan, which is beneficial for increasing the radial air delivery distance of the ceiling fan.

As shown in FIGS. 49 to 52, the ceiling fan (bladeless fan lamp) includes the air duct assembly 132, the fan wheel 11, and the plurality of flow guide members 1331. The fan wheel 11 is provided with the air inlet 111, the air duct assembly 132 is provided with the air inlet gap 13211, and the bottom of the air duct assembly 132 is provided with the annular opening 1324. The fan wheel 11 is located inside the air duct assembly 132, and the plurality of flow guide members 1331 surround the fan wheel 11 and divide the annular opening 1324 into the plurality of air outlet gaps 13241. Each flow guide member 1331 is provided with the second air guide part 13313 and the first air guide part 13312. The second air guide part 13313 faces the fan wheel 11, and the head end of the second air guide part 13313 is connected to the head end of the first air guide part 13312. Moreover, the air outlet gap 13241 is formed between the first air guide part 13312 of one flow guide member 1331 and the second air guide part 13313 of an adjacent flow guide member 1331.

As shown in FIG. 52, in the reference plane perpendicular to the rotation axis (central axis of the annular opening 1324), the connection line between the head end of the second air guide part 13313 or the head end of the first air guide part 13312 and the rotation axis (central axis of the annular opening 1324) is set as the first reference line a, and the connection line between the tail end of the second air guide part 13313 and the rotation axis (central axis of the annular opening 1324) is set as the ninth reference line b. The second reference line c is located between the first reference line a and the ninth reference line b.

The axis of the annular opening 1324, the axis of the fan wheel 11 (rotation axis), and the axis of the entire ceiling fan are collinear. A length of the second air guide part 13313 is greater than a length of the first air guide part 13312.

As shown in FIG. 56, the fan mechanism 1 further includes a motor 12 which is fixed below the air duct assembly 132. The fan wheel 11 is in transmissive connection with the motor 12and the fan wheel 11 is arranged opposite the air inlet gap 13211 of the air duct casing. The fan wheel 11 may be a centrifugal fan or a diagonal fan.

In the case that the flow guide member 1331 includes a first air guide part 13312 and a second air guide part 13313, the first air guide part 13312 may be arc-shaped, straight, or in other shapes.

In the ceiling fan according to the embodiments of the present disclosure, an angle occupied by the second air guide part 13313 of the flow guide member 1331 is an angle between the first reference line a and the ninth reference line b. An angle occupied by the portion shielded by the flow guide member 1331 is an angle between the second reference line c and the ninth reference line b. Since the second reference line c is located between the first reference line a and the ninth reference line b, the angle occupied by the second air guide part 13313 is greater than the angle occupied by the portion shielded by the flow guide member 1331.

In this way, the flow guide member 1331 not only achieves a sufficiently long second air guide part 13313 but also ensures that the length of the shielded portion of the flow guide member 1331 is relatively short such that the ceiling fan delivers air over a long distance and the air blown out from each air outlet 112 can be continuous in the circumferential direction, and the annular airflow from the ceiling fan is more even. Moreover, the above design also allows the first air guide part 13312 to be relatively long, such that the first air guide part 13312 can effectively guide the air.

In some examples, as shown in FIG. 52, the angle between the ninth reference line b and the second reference line c is set as α, where 20° < α < 30°.

As shown in FIG. 57, the x-axis represents α, measured in degrees, and the y-axis represents the wind sensation radius, that is, the radius within which a user can feel the airflow from the ceiling fan provided by the embodiments of the present disclosure, measured in meters.

From FIG. 57, it can be observed that as α increases, the wind sensation radius also gradually increases. Since the wind sensation radius is small when 0° < α < 20°, it is set that α > 20°. In the case that α > 30°, although the wind sensation radius continues to increase, it would lead to excessive blockage of the annular opening 12 by the flow guide members 3, such that the air outlet gap 120 is too small and the airflow from the ceiling fan would be uneven. Therefore, in some examples, 20° < α < 30°.

In some examples, as shown in FIG. 52, the number of the flow guide member 1331 is set as z, then 130°/α < z < 150°/α. That is, the angle occupied by the total portions shielded by the plurality of flow guide members 1331 is a minimum of 130° and a maximum of 150°.

Experiments have shown that in the case that z < 130°/α, i.e., zα < 130°, the angle occupied by the total portions shielded by the plurality of flow guide members 1331 would be too small, an air outlet area for each air outlet gap 13241 would be caused to be larger, and thus it would be difficult for the air outlet gap 13241 to increase the wind pressure and force effectively. Meanwhile, lengths of the second air guide part 13313 and the first air guide part 13312 would also be caused to be shorter, such that the pressure increase path for the airflow in the second air guide part 13313 and the first air guide part 13312 is shortened, which is not conducive to increasing the air pressure at the air outlet gaps 13241.

However, in the case that z > 150°/α, i.e., zα > 150°, the angle occupied by the total portions shielded by the plurality of flow guide members 1331 would be too large which would cause the air outlet gaps 13241 to be too small. Although this would increase the air pressure at the air outlet gaps 13241, there is no air blown out from the flow guide members 1331, which would make it difficult for the air blown out from the plurality of air outlet gaps 13241 to be continuous in the circumferential direction, such that the annular air delivery from the ceiling fan is uneven. In addition, if the air outlet gaps 13241 are too small, the wind velocity at the air outlet gaps 13241 would be too high, resulting in increased wind noise. Moreover, in the case that the angle occupied by the total portions shielded by the plurality of flow guide members 1331 is too large, the collision area between the airflow and the flow guide members 1331 would increase, thereby increasing the collision intensity between the airflow and the flow guide members 1331, which would further cause wind noise to be increased.

In some examples, as shown in FIG. 52, 4 ≤ z ≤ 6. Exemplarily, z = 6. If the number z of the flow guide member 1331 is too small, the air outlet gaps 13241 would become too large, such that the wind velocity at the air outlet gaps 13241 is too low, which is not conducive to increasing the air delivery distance from the air outlet gaps 13241. If the number z of flow guide members 1331 is too large, in an aspect, the collision frequency between the airflow and the flow guide members 1331 would be increased, leading to excessive collision intensity between the airflow and the flow guide members 1331 and thus generating greater noise. In another aspect, the air outlet gaps 13241 would become too small, such that the wind velocity at the air outlet gaps 13241 would be too high, resulting in increased wind noise.

In some examples, as shown in FIG. 52, in the reference plane, the angle between the first reference line a and the second reference line c is set as γ, and 0° < γ < 15°.

In the case that γ is too large, the angle between the second air guide part 13313 and the first air guide part 13312 would become too small, making it difficult to manufacture the flow guide members 1331. Moreover, the air outlet gaps 13241 would be made to be too large, such that the wind velocity and wind pressure at the air outlet gaps 13241 are too low, which is not conducive to increasing the air delivery distance from the air outlet gaps 13241. In the case that γ is too small, in an aspect, the air outlet gaps 13241 would be made to be too small, causing the wind velocity at the air outlet gaps 13241 to be too high and thus generating greater noise. In another aspect, the spacing between adjacent air outlet gaps 13241 would be made to be too large, preventing the achievement of more even annular airflow.

The above technical solutions allow the air blown out from each air outlet gap 13241 to be continuous in the circumferential direction, achieving a more even annular airflow from the ceiling fan. In addition, the evenness of the air blown out from each air outlet gap 13241 also affects the overall evenness of the annular airflow.

An exemplary explanation of how to improve the evenness of air blown out from each air outlet gap 13241 is provided hereinafter.

In some examples, as shown in FIG. 52, in the reference plane, an angle at the place where the second air guide part 13313 and the first air guide part 13312 are connected is set as δ, and δ is an acute angle.

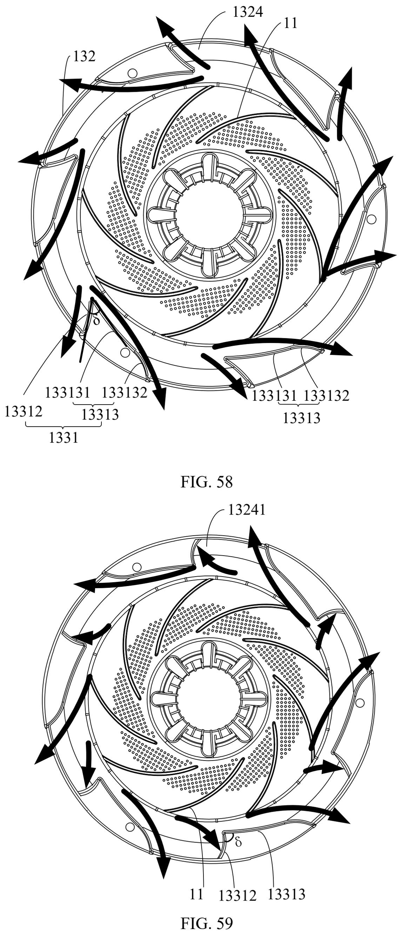

As shown in FIG. 58, setting δ as an acute angle allows a portion of the wind from the fan wheel 11 towards the flow guide member 1331 to flow along the second air guide part 13313 towards the portion, close to the second air guide part 13313, of the air outlet gap 13241, while another portion flows along the first air guide part 13312 towards the portion of, close to the first air guide part 13312, of another air outlet gap 13241. In this way, for an air outlet gap 13241, the portion close to the second air guide part 13313 and the portion close to the first air guide part 13312 both have a large airflow, such that each air outlet gap 13241 achieves more even airflow. Alternatively, it is described as follows: since there is an air outlet gap 13241 provided between the first air guide part 13312 of one flow guide member 1331 and the second air guide part 13313 of an adjacent flow guide member 1331, a portion of the airflow within each air outlet gap 13241 comes from the second air guide part 13313 of one flow guide member 1331, and another portion comes from the first air guide part 13312 of another flow guide member 1331. Therefore, the air blown out from the air outlet gap 13241 is more even.

As shown in FIG. 59, in the case that δ is an obtuse angle, in an aspect, without changing the air guide lengths of the second air guide part 13313 and the first air guide part 13312, an obtuse δ would cause the angle occupied by the portion shielded by the flow guide member 1331 to be greater than the angle occupied by the second air guide part 13313 which results in a longer length of the portion shielded by the flow guide member 1331, and makes annular airflow from the ceiling fan uneven.

In another aspect, it also results in a greater impact between the airflow from the fan wheel 11 and the first air guide part 13312, causing significant airflow impact loss and generating greater wind noise. Since an air outlet gap 13241 is provided between the second air guide part 13313 of a flow guide member 1331 and the first air guide part 13312 of an adjacent flow guide member 1331, in the case that δ is too large, there will be more airflow and stronger wind force at the air outlet gap 13241 close to the second air guide part 13313, while there will be less airflow and weaker wind force at the air outlet gap 13241 close to the first air guide part 13312, leading to uneven airflow at the air outlet gap 13241.

In some examples, as shown in FIG. 52, 9 ° < δ < 38 °. In the case that δ is too small, an effective fillet radius cannot be created at the place where the second air guide part 13313 and the first air guide part 13312 are connected, such that it is difficult to process the flow guide member 1331 and increases the complexity and cost of manufacturing the ceiling fan. Moreover, it would be difficult for the place, where the second air guide part 13313 and the first air guide part 13312 are connected, to guide the airflow, such that the airflow quickly detaches from the place where the second air guide part 13313 and the first air guide part 13312 are connected, thereby causing the airflow to generate greater noise.

In some examples, as shown in FIG. 55, an angle between the tangent at the head end of the second air guide part 13313 and the first reference line a is set as φ, and φ > 145°. In this way, the angle between the air blown out from the fan wheel 11 and the second air guide part 13313 can be reduced, such that the impact of the second air guide part 13313 on the airflow is decreased and thus the airflow loss is reduced. As a result, the wind force at the air outlet gap 13241 close to the second air guide part 13313 becomes close to the wind force close to the first air guide part 13312, such that the air outlet gap 13241 achieves more even airflow. In addition, this setup can also reduce the noise generated when the airflow impacts the second air guide part 13313.

In some examples, as shown in FIGS. 55 and 58, the first air guide part 13312 is arc-shaped, and the concave surface of the first air guide part 13312 faces the second air guide part 13313 of the flow guide member 1331 which is closest to the first air guide part 13312. In the reference plane, along the rotational direction of the fan wheel 11, the angle between the tangent of the first air guide part 13312 and the radial direction of the annular opening 1324 (or fan wheel 11) gradually decreases.

In an aspect, compared to a straight-shaped first air guide part 13312, setting the first air guide part 13312 as arc-shaped can increase the length of the first air guide part 13312, and thus the pressurization path of the airflow is increased which is beneficial for increasing wind pressure. Since the second air guide part 13313 is longer, it can reduce the pressure difference between the tail ends of the second air guide part 13313 and the first air guide part 13312 by increasing the length of the first air guide part 13312, thereby resulting in more even airflow from the air outlet gap 13241. Meanwhile, the central angle occupied by the flow guide member 1331 can be reduced without decreasing the air guide length of the second air guide part 13313, i.e., the central angle occupied by the air outlet gap 13241 is larger. In this way, the air blown out from the annular opening 1324 is continuous, that is, the airflow from the annular opening 1324 is even.

In another aspect, the first air guide part 13312 can deflect the airflow radially towards the fan wheel 11, such that the airflow can have a larger radial component after flowing towards the air outlet gap 13241, which is beneficial for the airflow to reach a greater distance.

In some examples, as shown in FIG. 55, a distance from the head end of the first air guide part 13312 to the rotation axis of the fan wheel 11 (or the central axis of the annular opening 1324) is set as r1, and the maximum radius of the fan wheel 11 is set as R, where r1/R ≥ 1.05, such that the head end of the second air guide part 13313 has ample guiding space, which is beneficial for directing the airflow toward the air outlet gap 13241. Moreover, the wind velocity when the airflow reaches the head end of the second air guide part 13313 can be reduced, such that the collision intensity of the airflow with the head end of the second air guide part 13313 is reduced, thereby reducing wind noise.

In the case that r1 is too small, the gap between the head end of the second air guide part 13313 and the edge of the fan wheel 11 would be smaller, such that the guiding space at the head end of the second air guide part 13313 is smaller, such that it is difficult for the air blown out by the fan wheel 11 to be guided by the flow guide member 1331, and thus causes the airflow to easily flow back. Moreover, when the airflow reaches the head end of the second air guide part 13313, the wind velocity would be too high, such that the collision intensity between the airflow and the head end of the second air guide part 13313 is stronger, thereby generating greater wind noise.

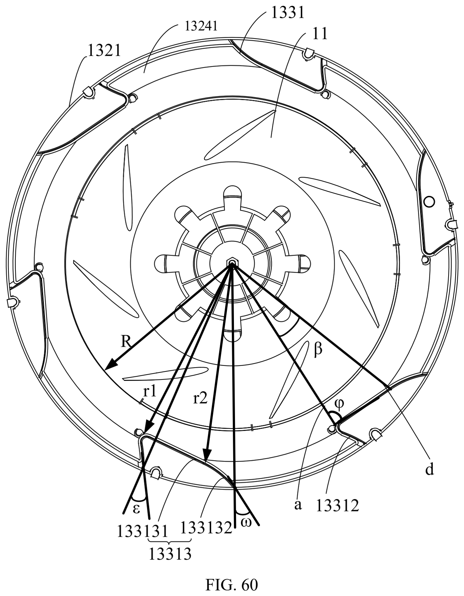

In some examples, as shown in FIG. 60, a distance from the head end of the second air guide part 13313 to the central axis of the annular opening 1324 is set as r1, the maximum radius of the fan wheel 11 is set as the maximum radius R, and the number of the flow guide member 1331 is set as z. According to simulation and test data, it is found that in the case that (0.1+0.01z)R ≤ r1-R ≤ 0.4R, the noise generated by the ceiling fan is minimized.

In the case that r1 - R is too large, the path for the airflow from the fan wheel 11 to the flow guide member 1331 would be too long. The longer the path is, the greater the resistance is encountered by the airflow, and the more energy is lost, thereby causing the airflow to reach the annular opening 1324 at an excessively low speed, and affecting the air delivery distance. In the case that r1-R is too small, the distance between the fan wheel 11 and the flow guide member 1331 would be too short, such that the airflow velocity is higher when the airflow reaches the flow guide member 1331, thereby resulting in a more intense impact on the flow guide member 1331 and causing greater noise.

From the above relationship, it can be observed that r1-R is positively correlated with z, that is, the more flow guide members 1331 there are, the greater the distance between the flow guide members 1331 and the fan wheel 11 is. The airflow would collide with the flow guide members 1331 after flowing out of the fan wheel 11. As the number of the flow guide member 1331 increases, the arrangement of the flow guide members 1331 becomes denser, such that the frequency of collisions between the airflow and the flow guide members 1331 is high, which may result in greater noise generated by the airflow. To reduce the noise of the airflow, as the number z of the flow guide member 1331 increases, r1-R also increases, that is, the distance between the head end of the second air guide part 13313 and the fan wheel 11 becomes larger. In this way, the path from the fan wheel 11 to the head end of the second air guide part 13313 becomes longer, such that the resistance encountered by the airflow is increased, which in turn reduces the airflow velocity when the airflow reaches the head end of the flow guide members 1331. In the case that the airflow velocity is reduced, in an aspect, the lower the airflow velocity, the less wind noise is generated. In another aspect, the lower the airflow velocity, the less intense the collision between the airflow and the flow guide members 1331, thereby reducing the noise generated by the collision between the airflow and the flow guide members 1331. In this way, it can be ensured that even with an increased number of flow guide members 1331, the ceiling fan generates less noise.

From the above relationship, it can also be observed that r1-R is positively correlated with R, that is, the larger the diameter of the fan wheel 11, the greater the distance between the flow guide members 1331 and the fan wheel 11. In the case that the diameter of the fan wheel 11 is increased, the velocity of the airflow flowing out of the fan wheel 11 would be increased. In this case, if the distance between the flow guide members 1331 and the fan wheel 11 is small, the airflow velocity is high when the airflow reaches the flow guide members 1331, such that the collision between the airflow and the flow guide members 1331 is more intense, thereby generating greater noise. Therefore, it is necessary to reduce the airflow velocity when the airflow reaches the flow guide members 1331. According to aerodynamics, it is known that the longer the path the airflow travels, the more resistance the airflow encounters. Thus, it can reduce the airflow velocity when the airflow reaches the flow guide members 1331 by increasing r1-R, such that the intensity of the collision between the airflow and the flow guide members 1331 is decreased, so as to reduce the noise generated by the collision between the airflow and the flow guide members 1331.

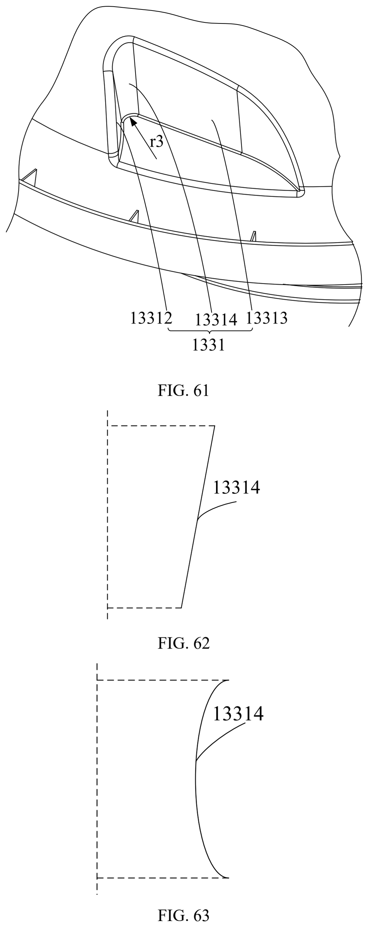

In some examples, as shown in FIGS. 60 and 61, the distance from the head end of the second air guide part 13313 to the rotation axis of the fan wheel 11 (or the central axis of the annular opening 1324) is set as r1, and the radius of the fan wheel 11 is set as R. A transition surface 13314 is provided at the place where the second air guide part 13313 and the first air guide part 13312 are connected, and the radius of the transition surface 13314 is r3. According to simulation and test data, it is found that in the case of 0.5(r1-R) ≤ r3 ≤ 2(r1-R), the noise generated by the ceiling fan is minimized.

In the case that r3 is too small, it would be difficult for the transition surface 13314 to guide the airflow, such that the airflow quickly detaches from the transition surface 13314, and thus causes the airflow to generate greater noise. In the case that r3 is too large, the transition surface 13314 would create more resistance to the airflow, such that greater noise is generated during the collision of the airflow and the flow guide members 1331.

From the above relationship, it can be observed that r3 is positively correlated with r1-R. In the case that r1-R decreases, it indicates that the distance between the flow guide members 1331 and the fan wheel 11 is short, so the velocity of the airflow is high, after flowing out of the fan wheel 11 and reaching the flow guide members 1331, such that the collision between the airflow and the flow guide members 1331 is more intense. In this case, if r3 is increased, the transition surface 13314 would create more resistance to the airflow, thereby further increasing the noise during the collision of the airflow and the flow guide members 1331. Therefore, it should reduce r3 to decrease wind noise.

In some examples, as shown in FIG. 61, a transition surface 13314 is provided at the place where the second air guide part 13313 and the first air guide part 13312 are connected. The transition surface 13314 has at least two positions with different distances to the central axis of the annular opening 1324.

For example, as shown in FIGS. 62 to 64, along the direction from the air inlet 111 towards the annular opening 1324, the distance between the transition surface 13314 and the central axis of the annular opening 1324 gradually increases, or first increases and then decreases, or first decreases and then increases; or at least a portion of the distance gradually increases, or first increases and then decreases, or first decreases and then increases. In this way, it can prevent the airflow from colliding with all positions of the transition surface 13314 simultaneously, and reduce the collision intensity between the airflow and the transition surface 13314, and thus reduces the noise generated by the airflow.

In some examples, as shown in FIGS. 59 and 60, along the rotational direction of the fan wheel 11 (or the circumferential direction of the fan wheel 11), the second air guide part 13313 sequentially includes a first sub-air guide surface 133131 and a second sub-air guide surface 133132. The second sub-air guide surface 133132 is arc-shaped, and a convex surface of the second sub-air guide surface 133132 faces the fan wheel 11.

In an aspect, the second sub-air guide surface 133132 can deflect the airflow direction radially towards the fan wheel 11. Therefore, the airflow can have a larger radial component after flowing towards the air outlet gap 13241, which is beneficial for the airflow to reach a greater distance. Moreover, since the concave surface of the first air guide part 13312 faces the second air guide part 13313 of another flow guide member 1331, an angle between the first air guide part 13312 and the second sub-air guide surface 133132 of the other flow guide member 1331 is small. In this way, the angle between the airflow of the air outlet gap 13241 close to the second sub-air guide surface 133132 and the airflow close to the first air guide part 13312 is small, such that the wind direction across the air outlet gap 13241 is more even, thereby enhancing the evenness of the airflow through the air outlet gap 13241.

In another aspect, the second sub-air guide surface 133132 deflects towards the radial direction of the fan wheel 11, which can reduce the central angle occupied by the flow guide member 1331 without decreasing the air guide length of the second air guide part 13313, so that the central angle occupied by the air outlet gap 13241 is larger. In this way, the air blown out from the annular opening 1324 is continuous, that is, the airflow from the annular opening 1324 is even.

In some examples, as shown in FIG. 55, in the reference plane, the angle between the tangent at the tail end of the second sub-air guide surface 133132 and the connection line between the tail end of the second sub-air guide surface 133132 and the central axis of the annular opening 1324 is set as ω, where 0° < ω < 20°. In this way, the angle between the wind direction at the tail end of the second sub-air guide surface 133132 and the radial direction of the annular opening 1324 is small, which is beneficial for increasing the radial air delivery distance of the ceiling fan. Meanwhile, it ensures that the wind direction at the tail end of the second sub-air guide surface 133132 is close to the wind direction at the tail end of the first air guide part 13312, such that the airflow of the air outlet gap 13241 is more even.

In some examples, as shown in FIG. 55, the first sub-air guide surface 133131 is tangential to the second sub-air guide surface 133132 at a place where they are connected, such that the airflow can smoothly flow from a first sub-air guide surface to a second sub-air guide surface 133132, thereby reducing airflow loss. It also prevents the airflow from detaching too quickly from the first sub-air guide surface 133131, thereby reducing the noise generated by the airflow.

In some examples, the concave surface of the first sub-air guide surface 133131 faces the fan wheel 11, which is beneficial for gathering the airflow and guiding the airflow to the second sub-air guide surface 133132.

In some examples, as shown in FIG. 55, the distance from the tail end of the first sub-air guide surface 133131 to the axis of the fan wheel 11 is set as r2, and 1.015 < r2/r1 < 1.2, which is beneficial for the first sub-air guide surface 133131 to gather the airflow and also beneficial for the first sub-air guide surface 133131 to guide the airflow to the second sub-air guide surface 133132. In the case that r2/r1 is too small (e.g., r2/r1 < 1), it would cause the first sub-air guide surface 133131 to create more resistance to the airflow, thereby leading to airflow loss and generating greater noise when the airflow impacts the first sub-air guide surface 133131. In the case that r2/r1 is too large, the angle change of the first sub-air guide surface 133131 would be too rapid, thereby causing the airflow to easily detach from the first sub-air guide surface 133131 and resulting in greater noise from the airflow.

In some examples, as shown in FIG. 55, in the reference plane, a connection line between the tail end of the first sub-air guide surface 133131 and the central axis of the annular opening 1324 is set as the tenth reference line d, an angle between the ninth reference line b and the tenth reference line d is set as β, and β < α.

In the case that β > α, the length of the second sub-air guide surface 133132 would increase, such that the impact between the airflow and the second sub-air guide surface 133132 is great, such that the airflow from the fan wheel 11 is subjected to greater resistance and thus the load on the fan wheel 11 is increased.

In some examples, as shown in FIGS. 55 and 56, the duct assembly 132 includes a first air duct component 1321 and a second air duct component 1322, and the first air duct component 1321 is sleeved on the second air duct component 1322. An air inlet gap 13211 is formed on the top of the first air duct component 1321, and an annular opening 1324 is formed between the bottom of the first air duct component 1321 and the bottom of the second air duct component 1322. The flow guide member 1331 is connected to the inner wall of the housing.

In some examples, the air inlet gap 13211 may be also located on the side of the first air duct component 1321, or at the bottom of the second air duct component 1322.

In some examples, as shown in FIGS. 52 and 53, the top of the flow guide member 1331 abuts against the first air duct component 1321, and/or the bottom of the flow guide member 1331 abuts against the second air duct component 1322. Moreover, along the airflow direction, as shown in FIGS. 55 and 56, the dimension of the flow guide member 1331 in the vertical direction gradually decreases. Therefore, the space between the portions of the first air duct component 1321, the second air duct component 1322, and the flow guide member 1331 that abut against each other also decreases. Since the total air output of the fan wheel 11 remains constant, and the space between the first air duct component 1321 and the second air duct component 1322 gradually decreases along the airflow direction, the air pressure of the airflow will gradually increase, thereby enhancing the fan's air delivery distance.

In some examples, as shown in FIG. 56, the first air duct component 1321 includes a first arc-shaped part 13213, and the second air duct component 1322 includes a second arc-shaped part 13222. The concave surface of the first arc-shaped part 13213 faces the convex surface of the second arc-shaped part 13222, and a plurality of flow guide members 1331 are located between the first arc-shaped part 13213 and the second arc-shaped part 13222. In this way, the airflow blown out from the fan wheel 11 can flow along the curved path, such that the airflow flows smoothly and the airflow loss caused by the sudden change of the airflow direction is avoided.

In some examples, as shown in FIG. 56, both the top and bottom of the flow guide member 1331 are arc-shaped and fit respectively with the first arc-shaped part 13213 and the second arc-shaped part 13222. An angle between the top of the flow guide member 1331 and the horizontal plane, and/or an angle between the bottom of the flow guide member 1331 and the horizontal plane gradually increases along the airflow direction. Since the airflow blown out from the fan wheel 11 is directed along the horizontal direction and the ceiling fan needs to blow air downward, the angle between the bottom of the flow guide member 1331 and the horizontal plane gradually increases along the airflow direction, such that the airflow can be guided gradually closer to the vertical direction.

In some examples, as shown in FIG. 56, the maximum dimension of the flow guide member 1331 in the vertical direction is d1, and the width of the air outlet gap 13241 is d2, where 2.5 < d1/d2 < 7. Further, 4 < d1/d2 < 6.

Since the diameter of the first air duct component 1321 and the diameter of the second air duct component 1322 are larger than the diameter of the fan wheel 11, in the case that d1/d2 is too small, it may result in that a ventilation area of the annular opening 1324 (a ventilation area between the tail ends of the first arc-shaped part 13213 and the second arc-shaped part 13222) is greater than the ventilation area of the edge of the fan wheel 11, such that the velocity of the airflow within the air duct gradually decreases and the airflow is likely to form vortices within the air duct, thereby shortening the air delivery distance of the annular opening 1324.

In the case that d1/d2 is too large, although it would result in that the ventilation area of the annular opening 1324 is smaller than the ventilation area of the edge of the fan wheel 11, it would result in that the ventilation area of the annular opening 1324 obstructs the airflow, such that the amount of air output at the annular opening 1324 is too small, which is not conducive to increasing the air delivery distance and may also generate greater noise.

In some examples, the transition surface 13314 is provided at the place where the second air guide part 13313 and the first air guide part 13312 are connected. The transition surface 13314 has at least two positions with different radii. Therefore, the airflow does not collide with the entire second air guide part 13313 simultaneously, thereby reducing the collision intensity between the airflow and the second air guide part 13313 and thus reducing the noise generated by the airflow.

Exemplarily, along the direction from the air inlet 111 towards the annular opening 1324, the radius of the transition surface 13314 gradually decreases.

In some examples, the transition surface 13314 is a chamfer between the second air guide part 13313 and the first air guide part 13312, and the radius of the transition surface 13314 refers to the chamfer radius. Along the direction from the air inlet 111 towards the annular opening 1324, the radius of the transition surface 13314 gradually increases or decreases, or at least partially increases or decreases gradually.

In this way, in an aspect, along the direction towards the air inlet 111, the distance r1 from the head end of the second air guide part 13313 to the central axis of the annular opening 1324 gradually increases, such that the airflow does not collide with the entire second air guide part 13313 simultaneously, but first collides with one end, away from the annular opening 1324, of the second air guide part 13313, and then with one end, close to the annular opening 1324, of the first air guide surface. This reduces the collision intensity between the airflow and the second air guide part 13313, thereby reducing the noise generated by the airflow. Correspondingly, along the direction away from the bottom of the flow guide member 1331, the distance from the head end of the first air guide part 13312 to the central axis of the annular opening 1324 gradually decreases, such that the airflow does not collide with the entire first air guide part 13312 simultaneously, but first collides with one end, close to the annular opening 1324, of the first air guide part 13312, and then with one end, away from the annular opening 1324, of the first air guide part 13312. This reduces the collision intensity between the airflow and the first air guide part 13312, thereby reducing the noise generated by the airflow.

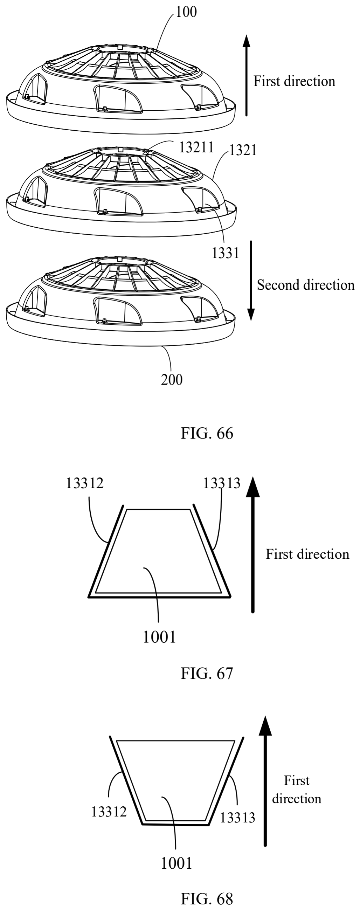

In another aspect, in the case that the flow guide member 1331 and the first air duct component 1321 are integrally molded by injection molding, as shown in FIG. 66, the flow guide member 1331 and the first air duct component 1321 are formed between an upper mold and a lower mold. The upper mold is located on the outer side of the first air duct component 1321, and the lower mold is located on the inner side of the first air duct component 1321. After the flow guide member 1331 and the first air duct component 1321 are molded, the upper mold and the lower mold need to be pulled out.

As shown in FIG. 66, when pulling the mold, the upper mold needs to be pulled out along the first direction, where the first direction is the direction in which the first air duct component 1321 gradually approaches the air inlet gap 13211 along the axial direction. A position, opposite the flow guide member 1331, on an inner side of the upper mold forms a protrusion, and the protrusion is located on an inner side of an outer surface of the flow guide member 1331.

As shown in FIG. 67, in the case that the radius r3 of the transition surface 13314 gradually decreases along the direction towards the air inlet gap 13211 (towards the rotation axis), the distance between the second air guide part 13313 and the first air guide part 13312 of the flow guide member 1331 will gradually decrease along the first direction. In this way, when pulling out the upper mold, the protrusion will be obstructed by the second air guide part 13313 and the first air guide part 13312, and thus it cannot release the mold. As shown in FIG. 68, in the case that the radius r3 of the transition surface 13314 gradually increases along the direction towards the air inlet gap 13211, the distance between the second air guide part 13313 and the first air guide part 13312 of the flow guide member 1331 will gradually increase along the first direction. In this way, during the demolding process, the protrusion can be smoothly pulled out from the second air guide part 13313 and the first air guide part 13312.

As shown in FIG. 66, when pulling the mold, the lower mold needs to be pulled out along the second direction, where the second direction is the direction in which the first air duct component 1321 gradually moves away from the air inlet gap 13211 along the axial direction. The position, opposite the flow guide member 1331, of the lower mold forms a groove, and the groove is located on the outer side of the inner surface of the flow guide member 1331.

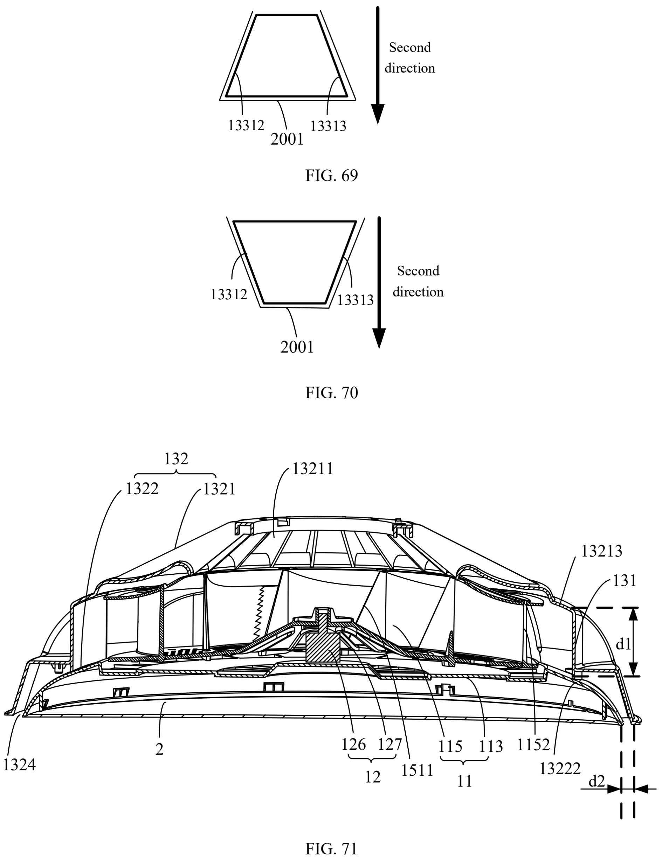

As shown in FIG. 69, in the case that the radius r3 of the transition surface 13314 gradually decreases along the direction towards the air inlet 111, the distance between the second air guide part 13313 and the first air guide part 13312 of the flow guide member 1331 will gradually increase along the second direction. In this way, when pulling out the lower mold, the groove will be obstructed by the second air guide part 13313 and the first air guide part 13312, and thus it cannot release the mold. As shown in FIG. 70, in the case that the radius r3 of the transition surface 13314 gradually increases along the direction towards the air inlet 111, the distance between the second air guide part 13313 and the first air guide part 13312 of the flow guide member 1331 will gradually decrease along the second direction. In this way, during the demolding process, the protrusion can be smoothly pulled out from between the second air guide part 13313 and the first air guide part 13312.

In other examples, the flow guide member 1331 is integrated with the second air duct component 1322. Alternatively, the flow guide member 1331 is a separate part connected to the first air duct component 1321 and the second air duct component 1322 via connecting parts 1132.

In some examples, as shown in FIG. 56, the second air duct component 1322 is connected to the bottom of the flow guide member 1331, thereby achieving the connection between the second air duct component 1322 and the first air duct component 1321. Since the airflow generated by the fan wheel 11 does not flow out from a position of the flow guide member 1331opposite the annular opening 1324 , the connecting parts 1132 (such as a bolt and a screw) are arranged at the bottom of the flow guide member 1331, so as to not obstruct the airflow.

In some examples, sound-absorbing cotton is attached to the outer wall surface of the first air duct component 1321 to reduce noise generated during airflow.

It should be noted that in some embodiments, terms such as "concave surface" and "convex surface" herein refer to the general direction of the surfaces. In other embodiments, a local convex surface may be arranged within a concave surface for other effects.

The embodiments of the present disclosure further provide a fan lamp, which includes the ceiling fan and the lighting mechanism 2 mentioned above. The lighting mechanism 2 is also referred to as a lamp module, which is arranged at the bottom of the air duct assembly 132 of the ceiling fan.

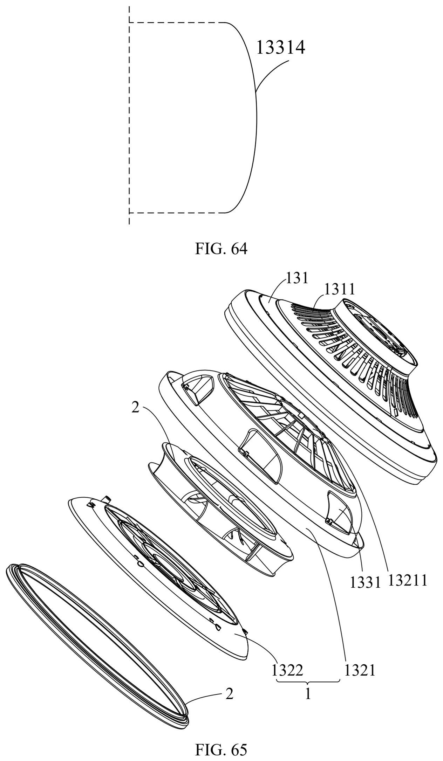

In some examples, as shown in FIG. 65, the fan lamp further includes an outer housing 131, and the outer housing 131 is sleeved on the first air duct component 1321. The outer housing 131 is provided with an air intake 1311, and the air intake 1311 is aligned with the air inlet 111 on the fan wheel 11 and the air inlet gap 13211 on the air duct assembly 132.

In some examples, as shown in FIGS. 49 and 56, the second air duct component 1322 is provided with a receiving slot. The lighting mechanism 2 can directly arrange the light source in the receiving slot, and in this case the second air duct component 1322 may be considered as installation base for the light source. Alternatively, the lamp module is an integrated piece that is detachably connected to the bottom of the second air duct component 1322.

An exemplary description of the implementation of the fan wheel is provided hereinafter.

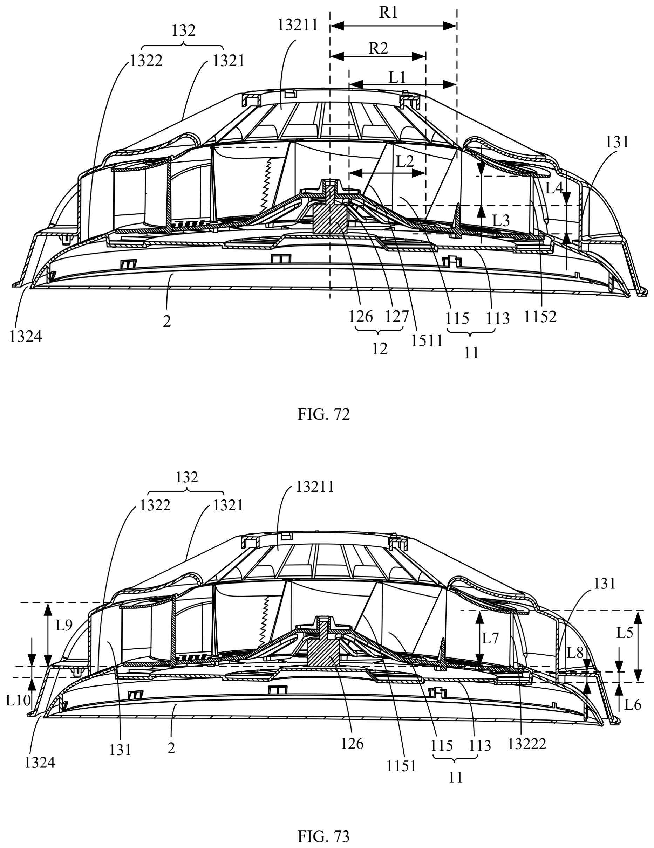

In some examples, as shown in FIGS. 71 and 72, the fan mechanism 1 includes a fan wheel 11 and a motor 12. The fan wheel 11 includes a bottom plate 113 and a plurality of blades 115, the plurality of blades 115 are fixed to the bottom plate 113, and the plurality of blades 115 surround the air inlet gap 13211. The motor 12 includes a main body part 126 and an output shaft 127, and the output shaft 127 is rotatably connected to the main body part 126. The main body part 126 is located below the bottom plate 113, and the output shaft 127 passes through the bottom plate 113. In some embodiments, the motor 12 is an outer rotor motor 12; and the main body part 126 includes a rotor assembly 123, such as a rotor sleeve 1231 and a flange 1232. The output shaft 127 is a stator shaft 1221. Alternatively, the motor 12 is an inner rotor motor 12, the main body part 126 is an outer stator assembly 125, and the output shaft 127 is a rotor shaft 124.

A radial distance between the top of the leading edge 1151 of the blade 115 and the top of the main body part 126 is set as L1, and a radial distance between the bottom of the leading edge 1151 and the top of the main body part 126 is set as L2, where L1 > L2. The leading edge 1151 is the edge, close to the air inlet gap 13211, of the blade 115.

According to the technical solutions provided by the embodiments of the present disclosure, the greater the radial distance between the leading edge 1151 and the top of the main body part 126, the farther the leading edge 1151 is from the air inlet gap 13211, and the less air intake at the leading edge 1151. By setting L1 > L2, the top of the leading edge 1151 can be made farther from the air inlet gap 13211, thereby reducing the amount of air intake at the top of the leading edge 1151. Since the closer to the top of the leading edge 1151, the higher the wind velocity, and the more noise is generated , it can reduce the noise of the fan lamp by reducing the amount of air intake at the top of the leading edge 1151.

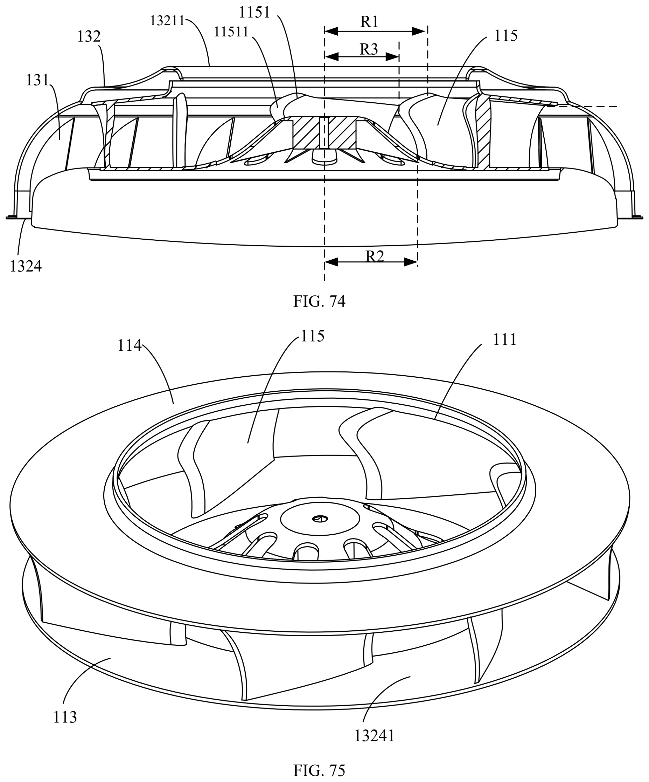

In some examples, as shown in FIGS. 74 to 76, the leading edge 1151 of the blade 115 is provided with a forward protrusion structure 11511 which is located between the top and bottom of the leading edge 1151.

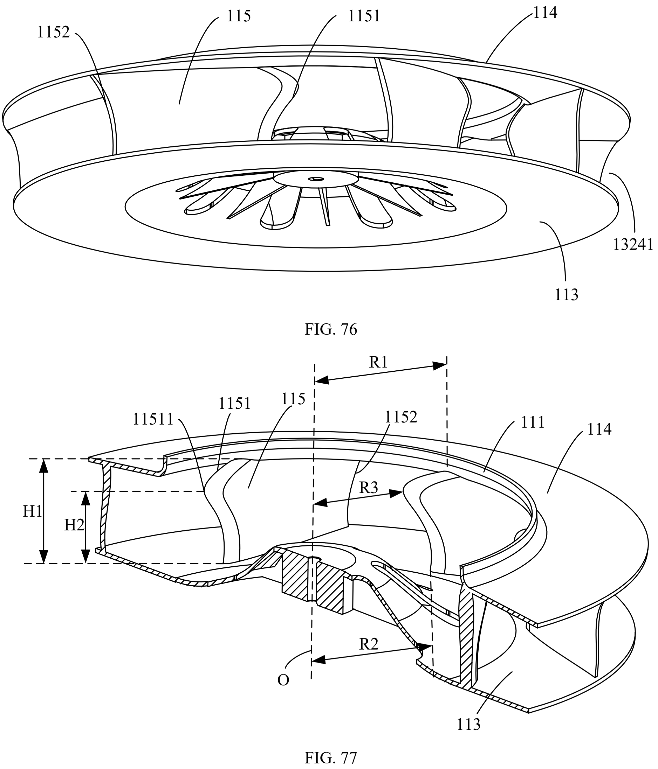

In some examples, as shown in FIGS. 77 and 77, a distance between the top of the leading edge 1151 and the central axis of the annular opening 1324 is set as R1, a distance between the bottom of the leading edge 1151 and the central axis of the annular opening 1324 is set as R2, and a distance between the forward protrusion structure 11511 and the central axis of the annular opening 1324 is set as R3, where R1 > R2 > R3. Since the forward protrusion structure 11511 is located at the foremost side of the leading edge 1151, the distance R3 between the forward protrusion structure 11511 and the central axis of the annular opening 1324 is the smallest, thus R1 and R2 are both greater than R3. In this way, the forward protrusion structure 11511 can change the airflow direction earlier, thereby reducing vortices and thus lowering wind noise.

The greater the distance between the leading edge 1151 and the central axis of the annular opening 1324, the farther the leading edge 1151 is from the air inlet gap 13211, and the less air intake at the leading edge 1151. By setting R1 > R2, the amount of air intake at the top of the leading edge 1151 is reduced. Since the higher the wind velocity, the closer to the top of the leading edge 1151, and the more noise is generated, and thus it can lower the noise of the fan lamp by reducing the amount of air intake at the top of the leading edge 1151.

In some examples, as shown in FIG. 77, the height of the leading edge 1151 is set as H1, and the height of the forward protrusion structure 11511 from the bottom plate 113 is set as H2, where 0.5H1 < H2 ≤ 0.8H1. According to simulation and test data, it is found that in the case of 0.5H1 < H2 ≤ 0.8H1, the noise reduction effect of the leading edge 1151 is optimal. In the case that the height H2 of the forward protrusion structure 11511 from the bottom plate 113 is too high, the distance between the forward protrusion structure 11511 and the top of the leading edge 1151 will be too small. According to aerodynamics, it is known that the smaller the cross-sectional area of the space through which the airflow passes, the faster the airflow velocity. Therefore, in the case that the distance between the forward protrusion structure 11511 and the top of the leading edge 1151 is too small, the airflow velocity between the forward protrusion structure 11511 and the top of the leading edge 1151 would be faster, such that the wind noise there is greater, which is not conducive to reducing the wind noise of the fan wheel 11.

In some examples, as shown in FIGS. 71 and 72, the top of the main body part 126 is higher than the bottom of the trailing edge 1152 of the blade 115, where the trailing edge 1152 is opposite the leading edge 1151. In this way, the main body part 126 can fully utilize the internal space of the fan wheel 11, such that the height of the fan wheel 11 is small and thus the volume of the fan lamp is small.

In some examples, as shown in FIG. 72, an axial distance between the top of the trailing edge 1152 of the blade 115 and the top of the main body part 126 is set as L3, and an axial distance between the bottom of the trailing edge 1152 and the top of the main body part 126 is set as L4, where L3 > L4, such that the trailing edge 1152 of the blade 115 can guide the airflow as much as possible. In the case that L4 > L3, it would cause a large portion of the trailing edge 1152 to be lower than the top of the main body part 126, which may cause the air flowing from the leading edge 1151 of the blade 115 to concentrate in the top area of the trailing edge 1152. In an aspect, it would lead to uneven airflow at the trailing edge 1152. In another aspect, it would result in a stronger impact of the airflow on the top area of the trailing edge 1152,and thus generate greater noise.

Alternatively, as shown in FIGS. 72 and 73, the fan lamp further includes a plurality of flow guide members 1331, and the plurality of flow guide members 1331 surround the fan wheel 11. An axial distance between the top of the trailing edge 1152 of the blade 115 and the bottom of the head end of the flow guide member 1331 is set as L5, and an axial distance between the bottom of the trailing edge 1152 and the bottom of the head end of the flow guide member 1331 is set as L6, where L5 > L6.

The shape of the flow guide member 1331 is not specifically limited in the embodiments of the present disclosure. As shown in FIG. 50, the flow guide member 1331 is in the shape of a shielding tongue. Alternatively, as shown in FIG. 74, the flow guide member 1331 is sheet-shaped.

In some examples, as shown in FIG. 73, an axial distance between the top of the trailing edge 1152 of the blade 115 and a first side of the main body part 126 is set as L7, and a distance between the bottom of the trailing edge 1152 and the bottom of the first side of the main body part 126 is set as L8, where L7 > L8. The first side of the main body part 126 refers to one side, away from the bottom plate 113, of the main body part 126. Alternatively, the fan lamp further includes a plurality of flow guide members 1331, and the plurality of flow guide members 1331 surround the fan wheel 11. An axial distance between the top of the head end of the flow guide member 1331 and the bottom of the main body part 126 is set as L9, and an axial distance between the bottom of the head end of the flow guide member 1331 and the bottom of the main body part 126 is set as L10, where L9 > L10. In the case that the main body part 126 extends into the interior of the fan wheel 11, the first side of the main body part 126 is the top of the main body part 126. In the case that the main body part 126 is located below the fan wheel 11, the first side of the main body part 126 is the bottom of the main body part 126.

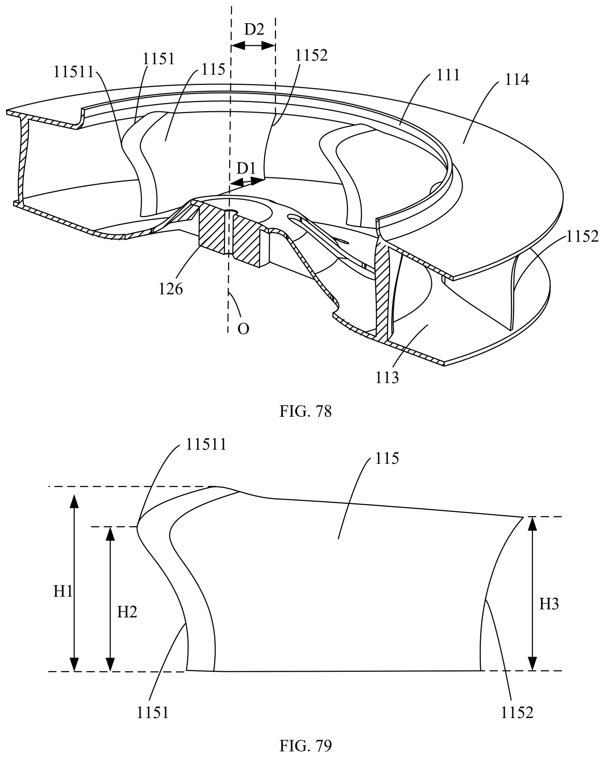

In some examples, as shown in FIGS. 77 and 79, along the direction towards the bottom plate 113, the distance between the trailing edge 1152 of the blade 115 and the central axis of the annular opening 1324 gradually decreases, where the trailing edge 1152 is opposite the leading edge 1151. In this way, it is possible to prevent the airflow distributed along the axial direction of the trailing edge 1152 from detaching simultaneously from the trailing edge 1152. Airflow detachment from the trailing edge 1152 is one of the main causes of wind noise generated by the blade 115. Therefore, it can reduce the wind noise at the trailing edge 1152 by preventing simultaneous detachment of airflow from the trailing edge 1152.

In some examples, as shown in FIG. 79, along the direction towards the bottom plate 113, the rate at which the distance between the trailing edge 1152 of the blade 115 and the central axis of the annular opening 1324 decreases gradually slows down. In the case that the rate of decrease in distance between the position of the trailing edge 1152 close to the bottom and the central axis of the annular opening 1324 remains high, it would result in the bottom of the blade 115 being too short, such that the airflow acceleration path is too short, leading to an excessively low wind velocity at the bottom of the trailing edge 1152, which is not conducive to increasing the air delivery distance of the fan lamp.

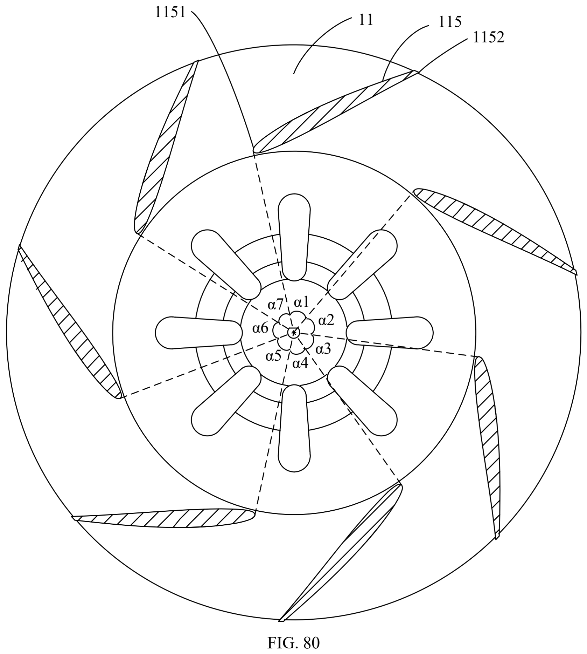

In some examples, as shown in FIG. 80, on the same reference cross-section, angles between the leading edges 1151 of every two adjacent blades 115 and the central axis of the annular opening 1324 are not entirely the same, where the reference cross-section is perpendicular to the central axis of the annular opening 1324.

In the related art, the reason why the fan wheel 11 generates strong discrete noise is that a plurality of blades 115 are evenly distributed in the circumferential direction, such that pulsation frequencies generated when the airflow impacts any blade 115 are identical, thereby enhancing the pulsation frequency of the fan wheel 11 and thus resulting in greater noise of the fan wheel 11. Therefore, in the embodiments of the present disclosure, the angles between lines connecting the leading edges 1151 of every two adjacent blades 115 to the central axis are configured to be not entirely the same, which can prevent the airflow from colliding with the leading edges 1151 of a plurality of blades 115 simultaneously, thus reducing the wind noise of the fan wheel 11.

The embodiments of the present disclosure further provide a fan wheel 11. As shown in FIGS. 75 and 76, the fan wheel 11 includes a bottom plate 113 and a plurality of blades 115, and the plurality of blades 115 are fixed to the bottom plate 113. As shown in FIGS. 74 and 75, the leading edge 1151 of the blade 115 is provided with a forward protrusion structure 11511, where the leading edge 1151 is the edge, close to the central axis O of the fan wheel 11, of the blade 115. As shown in FIG. 77, the height of the leading edge 1151 is set as H1, and the height of the forward protrusion structure 11511 from the bottom plate 113 is set as H2, where 0.5H1 < H2 ≤ 0.8H1.

In some examples, as shown in FIGS. 75 and 76, the fan wheel 11 further includes a top plate 114, and the plurality of blades 115 are fixed between the top plate 114 and the bottom plate 113. The top plate 114 is provided with an air inlet 111, and the plurality of blades 115 surround the air inlet 111. An air outlet 112 is formed between the edges of the top plate 114 and the bottom plate 113, and the trailing edges 1152 of the blades 115 divide the air outlet 112 into a plurality of air outlet gaps 13241. In the case that the fan wheel 11 rotates, airflow enters the interior of the fan wheel 11 through the air inlet 111, accelerates within the blades 115, and then flows out through the air outlet 112.

According to the technical solutions provided by the embodiments of the present disclosure, in the case that the fan wheel 11 is in operation, airflow enters the interior of the fan wheel 11 and flows towards the leading edge 1151 of the blade 115. The leading edge 1151 is provided with a forward protrusion structure 11511, and the forward protrusion structure 11511 is a biomimetic design of a protrusion structure at the leading edge of a bird wing. The protrusion structure at the leading edge of a bird wing can alter the direction of airflow, thereby reducing vortices in the airflow and thus decreasing air resistance during flight. According to biomimetic principles, it is known that the forward protrusion structure 11511 can mimic the protrusion structure at the leading edge of a bird's wing to reduce vortices at the leading edge 1151 of the blade 115, which allows for smoother airflow and thus reduces the air resistance encountered by the leading edge 1151 of the blade 115, thereby decreasing wind noise at the leading edge 1151. Moreover, it can increase the local mass of the leading edge 1151 by arranging the forward protrusion structure 11511 at the leading edge 1151, thereby reducing the flutter of the blade 115 caused by aerodynamic forces and thus lowering noise.

In addition, since the upper half region of the leading edge 1151 of the blade 115 is closer to the air inlet gap 13211, the wind velocity in the upper half region of the leading edge 1151 is greater. According to aerodynamics, it is known that higher wind velocities are more likely to generate vortices, thereby leading to greater wind noise. Therefore, reducing the vortex in the upper half region of the leading edge 1151 can effectively reduce noise for the fan wheel 11. Therefore, it can allow the forward protrusion structure 11511 to be closer to the upper half region of the leading edge 1151 by setting H2 > 0.5H1, and thus reduce the air resistance in the upper half region of the leading edge 1151 and decrease the wind noise at the upper half region of the leading edge 1151.

According to simulation and test data, it is found that in the case of 0.5H1 < H2 ≤ 0.8H1, the noise reduction effect of the leading edge 1151 is optimal. In the case that the height H2 of the forward protrusion structure 11511 from the bottom plate 113 is too high, the distance between the forward protrusion structure 11511 and the top of the leading edge 1151 will be too small. According to aerodynamics, it is known that the smaller the cross-sectional area of the space through which the airflow passes, the faster the airflow velocity. Therefore, in the case that the distance between the forward protrusion structure 11511 and the top of the leading edge 1151 is too small, the airflow velocity between the forward protrusion structure 11511 and the top of the leading edge 1151 would be faster, such that the wind noise there is greater, which is not conducive to reducing the wind noise of the fan wheel 11.

In some examples, as shown in FIG. 77, the distance between the forward protrusion structure 11511 and the central axis O of the fan wheel 11 is set as R3, the distance between the bottom of the leading edge 1151 and the central axis O is set as R2, and the distance between the top of the leading edge 1151 and the central axis O is set as R1, where R1 > R2 > R2.

Since the forward protrusion structure 11511 is located at the foremost side of the leading edge 1151, the distance R3 between the forward protrusion structure 11511 and the central axis O is the smallest, thus R1 and R2 are both greater than R3. In this way, the forward protrusion structure 11511 can change the airflow direction earlier, thereby reducing vortices and thus lowering wind noise.

The closer the leading edge 1151 is to the central axis O, the closer the leading edge 11511 is to the air inlet gap 13211, the sooner the leading edge guides the airflow, and the more air intake at the leading edge 11511. Therefore, setting R1 > R2 allows for a greater amount of air intake at the bottom of the leading edge 11511 and a smaller amount of air intake at the top. In the case that the amount of air intake at the air inlet gap 11511 is the same, the greater the amount of air intake at the bottom of the leading edge 11511, the smaller the amount of air intake at the top of the leading edge 11511. Since the wind velocity at the bottom of the leading edge 1151 is lower, the noise generated is also lower, thus the more amount of air intake at the bottom of the leading edge 1151, the less noise is generated by the blade 115.

In some examples, as shown in FIGS. 78 and 79, along the direction towards the bottom plate 113, the distance between the trailing edge 1152 of the blade 115 and the central axis O of the fan wheel 11 gradually decreases, where the trailing edge 1152 is opposite the leading edge 1151. In this way, it is possible to prevent the airflow distributed along the axial direction of the trailing edge 1152 from detaching simultaneously from the trailing edge 1152. Airflow detachment from the trailing edge 1152 is one of the main causes of wind noise generated by the blade 115. Therefore, it can reduce the wind noise at the trailing edge 1152 by preventing simultaneous detachment of airflow from the trailing edge 1152.

In some examples, as shown in FIGS. 78 and 79, the distance between the bottom of the trailing edge 1152 and the central axis O is set as D1, the distance between the top of the trailing edge 1152 and the central axis O is set as D2, and the height of the trailing edge 1152 is set as H3, where 0.05H3 ≤ D2-D1 ≤ 0.1H3.

Given ΔD = D2-D1, in the case that ΔD is too small, the airflow easily detaches simultaneously from both the top and bottom of the trailing edge 1152, which is not conducive to reducing wind noise at the trailing edge 1152. Since the blade 115 cannot extend beyond the outer edge of the bottom plate 113, in the case that ΔD is too large, the bottom of the trailing edge 1152 would be too short. This would cause the airflow path at the bottom of the trailing edge 1152 to be too small, making the airflow velocity and pressure at the bottom of the trailing edge 1152 significantly lower than those at the top of the trailing edge 1152. This leads to an uneven pressure distribution at the trailing edge 1152, which can affect the stable operation of the fan wheel 11 and may lead to increased noise of the fan wheel 11. According to simulation and test data, it is found that in the case that 0.05H3 ≤ ΔD ≤ 0.1H3, the noise generated by the fan wheel 11 is minimized.

In some examples, as shown in FIG. 79, the trailing edge 1152 is concave on the longitudinal section of the blade 115. Since the wind velocity of the airflow is higher in the middle portion and lower half of the trailing edge 1152, setting the trailing edge 1152 as a concave surface allows the airflow in the middle portion and the lower half to detach from the trailing edge 1152 sooner which reduces the acceleration path of the airflow in the middle portion and lower half of the trailing edge 1152, and thus decreases the airflow velocity in the regions and is beneficial for reducing wind noise at the trailing edge 1152.

In some examples, as shown in FIG. 80, on the same reference cross-section, the angles between lines connecting the leading edges 1151 of every two adjacent blades 115 to the central axis O of the fan wheel 11 are not entirely the same. The reference cross-section is perpendicular to the central axis O.

In the related art, the reason why the fan wheel 11 generates strong discrete noise is that a plurality of blades 115 are evenly distributed in the circumferential direction, such that pulsation frequencies generated when the airflow impacts any blade 115 are identical, thereby enhancing the pulsation frequency of the fan wheel 11 and thus resulting in greater noise of the fan wheel 11. Therefore, in the embodiments of the present disclosure, the angles between lines connecting the leading edges 1151 of every two adjacent blades 115 to the central axis O of the fan wheel 11 are configured to be not entirely the same, which can prevent the airflow from colliding with the leading edges 1151 of a plurality of blades 115 simultaneously, thus reducing the wind noise of the fan wheel 11.

Through the above design, the plurality of blades 115 are distributed unevenly and thus it may cause the center of mass of the fan wheel 11 to deviate from the geometric center of the fan wheel 11, such that it is difficult for the fan wheel 11 to achieve dynamic balance during rotation, thereby leading to vibration when the fan wheel 11 rotates. Therefore, to ensure that the blades 115 can reduce noise and can also align the center of mass with the geometric center of the fan wheel 11, the embodiments of the present disclosure use a sinusoidal frequency-modulated non-equidistant angular distribution formula for calculation to determine the angles between lines connecting the leading edges 1151 of every two adjacent blades 115 to the central axis O of the fan wheel 11.

In some examples, as shown in FIG. 80, the fan wheel 11 includes seven blades 115.

The angles between lines connecting the leading edges 1151 of every two adjacent blades 115 to the central axis O of the fan wheel are determined based on the formula αi = αi' + Δαsin (Kαi'). K represents the number of groups, and K is set as 1 in the present disclosure; αi' represents the circumferential arrangement angle of the i-th blade 115 when the blades 115 are evenly arranged (the angle between a connecting line of the i-th blade 115 and the central axis O of the fan wheel and another connecting line of the (i+1)-th blade 115 and the central axis O of the fan wheel); αi represents the circumferential arrangement angle of the i-th blade 115 when the blades 115 are unevenly arranged; and Δα represents the phase modulation amount. Here, Δα = 360°× nonuniform coefficient/number of blades, where the nonuniform coefficient is defined as desired (e.g., 0.44).

On the same reference cross-section, the angles formed by the leading edges 1151 of every two adjacent blades 115 and the central axis O of the fan wheel are respectively α1, α2, α3, α4, α5, α6, and α7. After calculation, α1, ... and α7 are 57.22°, 47.42°, 47.42°, 57.22°, 52.86°, 45° and 52.86°, respectively.

Taking into account the precision and tolerances during the injection molding of the fan wheel, the angles formed by the leading edges 1151 of every two adjacent blades 115 and the central axis O of the fan wheel are 56.5°-57.5°, 47.0°-48.0°, 47.0°-48.0°, 56.5°-57.5°, 52.5°-53.5°, 44.5°-45.5° and 52.5°-53.5°, respectively. In this way, the wind noise of the fan wheel can be reduced, and the alignment of the center of mass with the geometric center of the fan wheel can be maximized.

In some examples, as shown in FIG. 78, on the longitudinal section of the blade 115, the area between the forward protrusion structure 11511 and the top of the leading edge 1151 is convex, and the area between the forward protrusion structure 11511 and the bottom of the leading edge 1151 is concave. According to simulation and test data, it is known that setting the leading edge 1151 into the above shape is beneficial for reducing wind noise at the leading edge 1151.

In some examples, as shown in FIG. 80, on the cross-section of the blade 115, the end surface of the leading edge 1151 is arc-shaped. Compared to the leading edge 1151 with a plane-shaped end surface, the arc shape produces less resistance to airflow and improves the cutting and guiding effects on the airflow, which is beneficial for reducing the wind noise of the fan wheel.

In some examples, as shown in FIG. 80, the thickness of the blade 115 first increases and then decreases along the direction towards the trailing edge 1152. The cross-section of the blade 115 can adopt a NACA6508 airfoil, such that the surface of the blade 115 is less prone to boundary layer separation. According to aerodynamics, it is known that boundary layer separation is one of the main causes of wind noise generated by blades. Therefore, reducing boundary layer separation on the surface of the blade 115 can lower the aerodynamic noise of the fan wheel.

According to the technical solutions provided by the embodiments of the present disclosure, since the noise generated during the rotation of the fan wheel in the fan lamp is small, the fan lamp can produce less noise during operation, thereby providing a better user experience.

It should be noted that in some embodiments, terms such as "concave surface" and "convex surface" herein refer to the general direction of the surfaces. In other embodiments, a local convex surface may be arranged within a concave surface for other effects.

The present disclosure further provides a fan lamp, which includes an air duct assembly 132 and a fan wheel 11, with the fan wheel 11 located inside the air duct assembly 132.

In some examples, as shown in FIG. 73, the fan wheel 2 includes a bottom plate 22 and a plurality of blades 23, and the plurality of blades 23 are fixed to the bottom plate 22. As shown in FIGS. 74 and 75, the leading edge 1151 of the blade 115 is provided with a forward protrusion structure 11511, where the leading edge 1151 is the edge, close to the central axis O of the fan wheel 11, of the blade 115. As shown in FIG. 77, the height of the leading edge 1151 is set as H1, and the height of the forward protrusion structure 11511 from the bottom plate 113 is set as H2, where 0.5H1 < H2 ≤ 0.8H1.

The forward protrusion structure 11511 is a biomimetic design of the protrusion structure at the head edge of a bird wing. The protrusion structure at the head edge of a bird wing can alter the direction of airflow, thereby reducing vortices in the airflow and thus decreasing air resistance during flight. According to biomimetic principles, it is known that the forward protrusion structure 11511 can mimic the protrusion structure at the leading edge of a bird's wing to reduce vortices at the leading edge 1151 of the blade 115, which allows for smoother airflow and thus reduces the air resistance encountered by the leading edge 1151 of the blade 115, thereby decreasing wind noise at the leading edge 1151. Moreover, arranging the forward protrusion structure 11511 at the leading edge 1151 can increase the local mass of the leading edge 1151, thereby reducing the flutter of the blade 115 caused by aerodynamic forces and thus lowering noise.

In addition, since the upper half region of the leading edge 1151 of the blade 115 is closer to the air inlet gap 13211, the wind velocity in the upper half region of the leading edge 1151 is greater. According to aerodynamics, it is known that higher wind velocities are more likely to generate vortices, thereby leading to greater wind noise. Therefore, reducing the vortex in the upper half region of the leading edge 1151 can effectively reduce noise for the fan wheel 11. Setting H2 > 0.5H1 can allow the forward protrusion structure 11511 to be closer to the upper half region of the leading edge 1151, thereby reducing air resistance in the upper half region of the leading edge 1151 and thus decreasing the wind noise at the upper half region of the leading edge 1151.

According to simulation and test data, it is found that in the case of 0.5H1 < H2 ≤ 0.8H1, the noise reduction effect of the leading edge 1151 is optimal. In the case that the height H2 of the forward protrusion structure 11511 from the bottom plate 113 is too high, the distance between the forward protrusion structure 11511 and the top of the leading edge 1151 will be too small. According to aerodynamics, it is known that the smaller the cross-sectional area of the space through which the airflow passes, the faster the airflow velocity. Therefore, in the case that the distance between the forward protrusion structure 11511 and the top of the leading edge 1151 is too small, the airflow velocity between the forward protrusion structure 11511 and the top of the leading edge 1151 would be faster, such that the wind noise there is greater, which is not conducive to reducing the wind noise of the fan wheel 11.

In some examples, as shown in FIG. 77, the distance between the forward protrusion structure 11511 and the central axis O of the fan wheel 11 is set as R3, the distance between the bottom of the leading edge 1151 and the central axis O is set as R2, and the distance between the top of the leading edge 1151 and the central axis O is set as R1, with R1 > R2 > R2.

Since the forward protrusion structure 11511 is located at the foremost side of the leading edge 1151, the distance R3 between the forward protrusion structure 11511 and the central axis O is the smallest and thus R1 and R2 are both greater than R3. In this way, the forward protrusion structure 11511 can change the airflow direction earlier, thereby reducing vortices and thus lowering wind noise.

The closer the leading edge 1151 is to the central axis O, the closer the leading edge 11511 is to the air inlet gap 13211, the sooner the leading edge guides the airflow, and the more air intake at the leading edge 11511. Therefore, setting R1 > R2 allows for a greater amount of air intake at the bottom of the leading edge 11511 and a smaller amount of air intake at the top. In the case that the amount of air intake at the air inlet gap 11511 is the same, the greater the amount of air intake at the bottom of the leading edge 11511, the smaller the amount of air intake at the top of the leading edge 11511. Since the wind velocity at the bottom of the leading edge 1151 is lower, the noise generated is also lower, thus the more amount of air intake at the bottom of the leading edge 1151, the less noise is generated by the blade 115.

In some examples, as shown in FIGS. 78 and 79, along the direction towards the bottom plate 113, the distance between the trailing edge 1152 of the blade 115 and the central axis O of the fan wheel 11 gradually decreases, where the trailing edge 1152 is opposite the leading edge 1151. In this way, it is possible to prevent the airflow distributed along the axial direction of the trailing edge 1152 from detaching simultaneously from the trailing edge 1152. Airflow detachment from the trailing edge 1152 is one of the main causes of wind noise generated by the blade 115. Therefore, it can reduce the wind noise at the trailing edge 1152 by preventing simultaneous detachment of airflow from the trailing edge 1152.

In some examples, as shown in FIGS. 78 and 79, the distance between the bottom of the trailing edge 1152 and the central axis O is set as D1, the distance between the top of the trailing edge 1152 and the central axis O is set as D2, and the height of the trailing edge 1152 is set as H3, where 0.05H3 ≤ D2-D1 ≤ 0.1H3.

Given ΔD = D2-D1, in the case that ΔD is too small, the airflow easily detaches simultaneously from both the top and bottom of the trailing edge 1152, which is not conducive to reducing wind noise at the trailing edge 1152. Since the blade 115 cannot extend beyond the outer edge of the bottom plate 113, in the case that ΔD is too large, the bottom of the trailing edge 1152 would be too short. This would cause the airflow path at the bottom of the trailing edge 1152 to be too small, making the airflow velocity and pressure at the bottom of the trailing edge 1152 significantly lower than those at the top of the trailing edge 1152. This leads to an uneven pressure distribution at the trailing edge 1152, which can affect the stable operation of the fan wheel 11 and may lead to increased noise of the fan wheel 11. According to simulation and test data, it is found that in the case that 0.05H3 ≤ ΔD ≤ 0.1H3, the noise generated by the fan wheel 11 is minimized.

In some examples, as shown in FIG. 80, on the same reference cross-section, the angles between lines which respectively connect the leading edges 1151 of every two adjacent blades 115 to the central axis O of the fan wheel 11 are not entirely the same. The reference cross-section is perpendicular to the central axis O.

In the related art, the reason why the fan wheel 11 generates strong discrete noise is that a plurality of blades 115 are evenly distributed in the circumferential direction, such that pulsation frequencies generated when the airflow impacts any blade 115 are identical, thereby enhancing the pulsation frequency of the fan wheel 11 and thus resulting in greater noise of the fan wheel 11. Therefore, in the embodiments of the present disclosure, the angles between lines connecting the leading edges 1151 of every two adjacent blades 115 to the central axis O of the fan wheel 11 are configured to be not entirely the same, which can prevent the airflow from colliding with the leading edges 1151 of a plurality of blades 115 simultaneously, thus reducing the wind noise of the fan wheel 11.

Through the above design, the plurality of blades 115 are distributed unevenly and thus it may cause the center of mass of the fan wheel 11 to deviate from the geometric center of the fan wheel 2, such that it is difficult for the fan wheel 11 to achieve dynamic balance during rotation, thereby leading to vibration when the fan wheel 2 rotates. Therefore, to ensure that the blades 115 can reduce noise and can also align the center of mass with the geometric center of the fan wheel, the embodiments of the present disclosure use a sinusoidal frequency-modulated non-equidistant angular distribution formula for calculation, to determine the angles between lines connecting the leading edges 11511 of every two adjacent blades 115 to the central axis O of the fan wheel.

In some examples, as shown in FIG. 80, the fan wheel includes seven blades 115.

The angles between lines connecting the leading edges 1151 of every two adjacent blades 115 to the central axis O of the fan wheel are determined based on the formula αi = αi' + Δαsin (Kαi'). K represents the number of groups, and K is set as 1 in the present disclosure; αi' represents the circumferential arrangement angle of the i-th blade 115 when the blades 115 are evenly arranged (the angle between a connecting line of the i-th blade 115 and the central axis O of the fan wheel and another connecting line of the (i+1)-th blade 115 and the central axis O of the fan wheel); αi represents the circumferential arrangement angle of the i-th blade 115 when the blades 115 are unevenly arranged; and Δα represents the phase modulation amount. Here, Δα = 360°× nonuniform coefficient/number of blades, where the nonuniform coefficient being defined as desired (e.g., 0.44).

On the same reference cross-section, the angles formed by the leading edges 1151 of every two adjacent blades 115 and the central axis O of the fan wheel are respectively α1, α2, α3, α4, α5, α6, and α7. After calculation, α1, ... and α7 are 57.22°, 47.42°, 47.42°, 57.22°, 52.86°, 45°, and 52.86°, respectively.

Taking into account the precision and tolerances during the injection molding of the fan wheel, the angles formed by the leading edges 1151 of every two adjacent blades 115 and the central axis O of the fan wheel are 56.5°-57.5°, 47.0°-48.0°, 47.0°-48.0°, 56.5°-57.5°, 52.5°-53.5°, 44.5°-45.5° and 52.5°-53.5°, respectively. In this way, the wind noise of the fan wheel can be reduced, and the alignment of the center of mass with the geometric center of the fan wheel can be maximized.

In the present disclosure, it should be understood that the terms "first", "second", "third", etc., are only used for descriptive purposes and should not be interpreted as indicating or implying relative importance or implicitly specifying the quantity of the indicated technical features.

Other embodiments of the present disclosure are apparent to those skilled in the art from consideration of the specification and practice of the present disclosure disclosed herein. The present disclosure is intended to cover any variations, uses, or adaptations of the present disclosure following the general principles of the present disclosure and including known common knowledge or customary technical means undisclosed in the art of the present disclosure. The specification and embodiments are only considered exemplary.

It should be understood that the present disclosure is not limited to the precise arrangements that have been described above and shown in the accompanying drawings, and that various modifications and changes may be made without departing from the scope thereof. The scope of the present disclosure is limited only by the appended claims.

## Claims

1. A bladeless fan lamp, comprising a fan mechanism (1), wherein the fan mechanism (1) comprises a fan wheel (11) and a motor (12),
an air inlet (111) is formed on a top of the fan wheel (11), an air outlet (112) is formed on a side surface of the fan wheel (11), and the air outlet (112) is arranged along a circumferential direction of the fan wheel (11); and
the motor (12) is connected to the fan wheel (11) to drive the fan wheel (11) to rotate.

2. The bladeless fan lamp according to claim 1, wherein the fan mechanism (1) further comprises a fan housing (13), the fan wheel (11) and the motor (12) are located within the fan housing (13), the fan wheel (11) is spaced apart from the fan housing (13), and the motor (12) is provided with a hollow shaft (121); and
wherein the bladeless fan lamp further comprises a lighting mechanism (2), the lighting mechanism (2) comprises a control assembly (21), a light-emitting assembly (22), and conductive members (23), and the conductive members (23) pass through the hollow shaft (121) and are electrically connected to the control assembly (21) and the light-emitting assembly (22).

3. The bladeless fan lamp according to claim 2, wherein the hollow shaft (121) of the motor (12) is a stator shaft (1221) or a rotor shaft (124).

4. The bladeless fan lamp according to claim 3, wherein the motor (12) is an outer rotor motor (12), and the hollow shaft (121) is a stator shaft (1221), and
the outer rotor motor (12) comprises a rotor assembly (123), and the rotor assembly (123) surrounds an outer side of the stator shaft (1221) and is connected to the fan wheel (11) to drive the fan wheel (11) to rotate.

5. The bladeless fan lamp according to claim 4, wherein the fan wheel (11) comprises a bottom plate (113), the bottom plate (113) is opposite the air inlet (111), and the rotor assembly (123) is connected to the bottom plate (113);
wherein the rotor assembly (123) is partially located within a height space of the fan wheel (11); or the rotor assembly (123) is located on one side, close to the light-emitting assembly (22), of the bottom plate (113), and the stator shaft (1221) extends into the height space, and
wherein a height direction is parallel to a rotation axis of the fan wheel (11).

6. The bladeless fan lamp according to claim 5, wherein in a case that the rotor assembly (123) is located within the height space, a height dimension of a portion of the rotor assembly (123) located within the height space is greater than a height dimension of a portion of the rotor assembly (123) located outside the height space.

7. The bladeless fan lamp according to claim 5, wherein the bottom plate (113) comprises a hub part (1131), the rotor assembly (123) comprises a rotor sleeve (1231) and a flange (1232), and the flange (1232) is connected to the rotor sleeve (1231) and arranged along a circumferential direction of the rotor sleeve (1231); and
the hub part (1131) is provided with an installation shaft hole (11311), at least a portion of the flange (1232) is connected to or abuts against one side, facing the light-emitting assembly (22), of the hub part (1131), and a portion of the rotor sleeve (1231) passes through the installation shaft hole (11311) and is located inside the fan wheel (11); or, at least a portion of the flange (1232) is connected to or abuts against one side, facing away from the light-emitting assembly (22), of the hub part (1131) and the entire rotor sleeve (1231) is located inside the fan wheel (11).

8. The bladeless fan lamp according to claim 7, wherein the bottom plate (113) further comprises a plurality of annular strengthening ribs (116), the plurality of annular strengthening ribs (116) are connected to the hub part (1131), arranged around the installation shaft hole (11311) and concentrically arranged with the installation shaft hole (11311), and two adjacent annular strengthening ribs (116) are connected by a reinforcement rib (117).

9. The bladeless fan lamp according to claim 4, comprising a suspension mechanism (3), wherein the suspension mechanism (3) is connected to the stator shaft (1221), and an interior of the suspension mechanism (3) communicates with an interior of the stator shaft (1221).

10. The bladeless fan lamp according to claim 9, wherein the suspension mechanism (3) is located above the air inlet (111); a dimension, in a radial direction of the fan wheel (11), of the suspension mechanism (3) is smaller than a diameter of the air inlet (111); and/or,
a bottom of the suspension mechanism (3) passes through the air inlet (111) and is accommodated within a height space of the fan wheel (11).

11. The bladeless fan lamp according to claim 9, wherein the control assembly (21) is installed inside the suspension mechanism (3), and the control assembly (21) and the light-emitting assembly (22) are located on opposite sides of the motor (12), respectively.

12. The bladeless fan lamp according to claim 9, wherein one end, close to the suspension mechanism (3), of the stator shaft (1221) is provided with an external thread (12211), and the suspension mechanism (3) is provided with an internal thread (312); and
the stator shaft (1221) and the suspension mechanism (3) are cooperatively connected through the external thread (12211) and the internal thread (312).

13. The bladeless fan lamp according to any one of claims 4 to 12, wherein the light-emitting assembly (22) comprises a light source fixture (221) and a light-emitting element (222),
the light source fixture (221) is connected to the stator shaft (1221) and spaced apart from the rotor assembly (123), wherein a through opening (2211) is formed at a middle position of the light source fixture (221), and the stator shaft (1221) is located within the through opening (2211); and
the light-emitting element (222) is installed on one side, facing away from the fan wheel (11), of the light source fixture (221).

14. The bladeless fan lamp according to claim 13, further comprising a fixing assembly (25) which is connected to at least one of the stator shaft (1221) and the light source fixture (221), wherein,
a first opening (25111) is formed on the fixing assembly (25); and
the stator shaft (1221) runs through the first opening (25111), or the conductive members (23) extending from an interior of the stator shaft (1221) pass through the first opening (25111).

15. The bladeless fan lamp according to claim 14, wherein the fixing assembly (25) comprises at least one connecting member (251) and at least one first fastener (252),
each connecting member (251) is provided with one first opening (25111) and sleeved on an outer side of the stator shaft (1221) through the first opening (25111); and
each first fastener (252) is cooperatively connected to the stator shaft (1221) to fix the at least one connecting member (251) to the stator shaft (1221), and
wherein the first fastener (252) is located on one side, away from the rotor assembly (123), of one of the at least one connecting member (251) and abuts against the connecting member (251); or, one of the at least one connecting member (251), the light source fixture (221) and the first fastener (252) are sequentially arranged along a direction away from the rotor assembly (123), and the first fastener (252) abuts against the light source fixture (221).

16. The bladeless fan lamp according to claim 15, wherein the at least one connecting member (251) is located between the light source fixture (221) and the fan wheel (11); and/or
the at least one connecting member (251) is located on one side, away from the fan wheel (11), of the light source fixture (221).

17. The bladeless fan lamp according to claim 15 or 16, wherein the fixing assembly (25) comprises two connecting members (251),
the two connecting members (251) are adjacent to the light source fixture (221) and abut against two opposite sides of the light source fixture (221), respectively, and the light source fixture (221) is connected to the two connecting members (251), respectively.

18. The bladeless fan lamp according to claim 15, wherein the motor (12) further comprises a stator sleeve (1222), the stator shaft (1221) runs through and is connected to the stator sleeve (1222), and the rotor assembly (123) surrounds an outer side of the stator sleeve (1222);
one end, close to the light source fixture (221), of the stator shaft (1221) is provided with an external thread (12211); and
at least one first fastener (252) is a nut, the nut and the stator shaft (1221) are in thread fit such that at least one of the connecting member (251) and the light source fixture (221) is fastened between the stator sleeve (1222) and the nut.

19. The bladeless fan lamp according to claim 3, wherein the motor (12) is an inner rotor motor (12), the hollow shaft (121) is a rotor shaft (124), and the rotor shaft (124) is connected to the fan wheel (11); and
the inner rotor motor (12) comprises an outer stator assembly (125), the outer stator assembly (125) surrounds an outer side of the rotor shaft (124), and a gap is provided between the outer stator assembly and the fan wheel (11).

20. The bladeless fan lamp according to claim 1, wherein the fan wheel (11) comprises a bottom plate (113) and a first reinforcement structure (118), a first through hole (11312) is formed on the bottom plate (113), and the first reinforcement structure (118) is connected to the bottom plate (113) and surrounds at least a portion of the first through hole (11312);
the motor (12) comprises a rotor assembly (123), and a second through hole (12341) is formed on the rotor assembly (123); and
the fan wheel (11) and the rotor assembly (123) are securely connected through a second fastener (14) passing through the first through hole (11312) and the second through hole (12341), and an installation area of the rotor assembly (123) on the bottom plate (113) is located within an area enclosed by the first reinforcement structure (118) on the bottom plate (113).

21. The bladeless fan lamp according to claim 20, wherein at least a portion of the first reinforcement structure (118) is located between the bottom plate (113) and the rotor assembly (123) and abuts against the rotor assembly (123).

22. The bladeless fan lamp according to claim 20, wherein the bottom plate (113) is opposite the air inlet (111); and
an installation shaft hole (11311) is formed on the bottom plate (113), and the installation shaft hole (11311) is spaced apart from the first through hole (11312), the rotor subassembly (123) is connected to one side, away from the air inlet (111), of the bottom plate (113), and a portion of the rotor assembly (123) runs through the installation shaft hole (11311) to be located inside the fan wheel (11).

23. The bladeless fan lamp according to claim 22, wherein the first reinforcement structure (118) comprises a first reinforcement part (1181) and a second reinforcement part (1182),
the first reinforcement part (1181) is connected to an edge of the installation shaft hole (11311);
the second reinforcement part (1182) is located on one side, away from the installation shaft hole (11311), of the first through hole (11312) and is arranged to surround the installation shaft hole (11311), and a center of the second reinforcement part (1182) is located on an axis of the installation shaft hole (11311); and
the second reinforcement part (1182) abuts against a portion of the rotor assembly (123) outside the installation shaft hole (11311).

24. The bladeless fan lamp according to claim 23, wherein the rotor assembly comprises a rotor core (1233) and a rotor flange (1234), the rotor core (1233) and the rotor flange (1234) are fixedly connected, and the second through hole (12341) is formed on the rotor flange (1234);
the rotor core (1233) is located within the installation shaft hole (11311), and the first reinforcement part (1181) surrounds the rotor core (1233); and
the rotor flange (1234) is located on one side, away from the bottom plate (113), of the first reinforcement part (1181), and a circumferential edge of the rotor flange (1234) is located on one side, close to the first reinforcement part (1181), of the second reinforcement part (1182).

25. The bladeless fan lamp according to claim 23 or 24, wherein a dimension of the first reinforcement part (1181) is smaller than a dimension of the second reinforcement part (1182) in a height direction; and/or, a dimension of the first reinforcement structure (118) gradually increases in the height direction from the first reinforcement part (1181) towards the second reinforcement part (1182), and
wherein the height direction is parallel to the axis of the installation shaft hole (11311).

26. The bladeless fan lamp according to any one of claims 20 to 25, wherein the first reinforcement structure (118) is any one of a reinforcement rib or a reinforcement plate.

27. The bladeless fan lamp according to any one of claims 22 to 26, wherein the bottom plate (113) comprises a hub part (1131) and a connecting part (1132), and the hub part (1131) and the connecting part (1132) are sequentially arranged from a center to an edge of the bottom plate (113);
the hub part (1131) is configured to install the motor (12), and the installation shaft hole (11311) and the first reinforcement structure (118) are located on the hub part (1131); and
the connecting part (1132) is configured to connect blades (115) of the fan wheel (11),
wherein a height of the hub part (1131) is higher than a height of the connecting part (1132), and a height direction is parallel to a rotation axis of the fan wheel (11).

28. The bladeless fan lamp of claim 27, wherein the bottom plate (113) further comprises a transition part (1133), and the transition part (1133) is connected between the hub part (1131) and the connecting part (1132); and
the bladeless fan lamp further comprises a second reinforcement structure (119), and the second reinforcement structure (119) is arranged on the transition part (1133) and connected to the first reinforcement structure (118).

29. The bladeless fan lamp according to claim 28, wherein the second reinforcement structure (119) and the first reinforcement structure (118) are respectively located on one side, facing away from the air inlet (111), of the bottom plate (113); and/or,
the second reinforcement structure (119) is located outside the area enclosed by the first reinforcement structure (118) on the bottom plate (113).

30. The bladeless fan lamp according to claim 20, wherein the bottom plate (113) is opposite the air inlet (111); and
the rotor assembly (123) is located on one side, away from the air inlet (111), of the bottom plate (113) and connected to the bottom plate (113); or, the rotor assembly (123) is connected to one side, facing the air inlet (111), of the bottom plate (113), and the rotor assembly (123) is located within the fan wheel (11).

31. The bladeless fan lamp according to claim 24, wherein the fan assembly further comprises a rotational vibration damping member (15) which is sandwiched between the first reinforcement structure (118) of the fan wheel (11) and the rotor assembly (123) of the motor (12).

32. The bladeless fan lamp according to claim 31, wherein the rotational vibration damping member (15) is arranged between the first reinforcement structure (118) and the rotor flange (1234) and is located between the first through hole (11312) and the second through hole (12341), and the second fastener (14) passes through the rotational vibration damping member (15);
the first reinforcement structure (118) further comprises a plurality of arc-shaped third reinforcement parts (1183), extending directions of the plurality of third reinforcement parts (1183) are located on a concentric circle of the installation shaft hole (11311), and the concentric circle passes through the first through hole (11312); and
the rotational vibration damping member (15) abuts against one side, away from the bottom plate (113), of the third reinforcement part (1183), and a circumferential edge of the rotational vibration damping member (15) is located between one side, close to the first reinforcement part (1181), of the second reinforcement part (1182) and the circumferential edge of the rotor flange (1234).

33. The bladeless fan lamp according to claim 1, wherein the fan mechanism (1) further comprises an air duct assembly (132), the air duct assembly (132) is arranged to surround the fan wheel (11) and configured to enclose an air duct space (1323), and the air duct space (1323) communicates with the air outlet (112) of the fan wheel (11); and
the bladeless fan lamp further comprises a lighting mechanism (2) comprising a light-emitting assembly (22) and a vibration damping assembly (26), the light-emitting assembly (22) is located outside the air duct space (1323) and connected to the air duct assembly (132), and the light-emitting assembly (22) is spaced apart from the fan wheel (11); and the vibration damping assembly (26) is located between the light-emitting assembly (22) and the air duct assembly (132), and/or between the light-emitting assembly (22) and the fan wheel (11).

34. The anti-shake bladeless fan lamp according to claim 33, wherein the light-emitting assembly (22) is located on one side, close to the fan wheel (11), of the air duct assembly (132) and is below the fan wheel (11).

35. The bladeless fan lamp according to claim 34, wherein the light-emitting assembly (22) comprises a light source fixture (221), a light-emitting element (222), and a lampshade (223),
an edge portion of the light source fixture (221) is connected to the air duct assembly (132);
the light-emitting element (222) is installed on one side, away from the fan wheel (11), of the light source fixture (221); and
the lampshade (223) is located on one side, away from the light source fixture (221), of the light-emitting element (222) and connected to the air duct assembly (132).

36. The bladeless fan lamp according to claim 35, wherein the vibration damping assembly (26) comprises a first vibration damping member (261) which is sandwiched at a place where the lampshade (223) and the air duct assembly (132) are connected.

37. The bladeless fan lamp according to claim 35 or 36, wherein the air duct assembly (132) comprises a first air duct component (1321) and a second air duct component (1322) which are spaced apart and enclose the air duct;
the first air duct component (1321) is located on one side, away from the fan wheel (11), of the second air duct component (1322), and the second air duct component (1322) is spaced apart from the fan wheel (11); and
the light source fixture (221) is connected to one end, adjacent to the fan wheel (11), of the second air duct component (1322), and the lampshade (223) is connected to one end, away from the fan wheel (11), of the second air duct component (1322).

38. The bladeless fan lamp according to claim 37, wherein the first vibration damping member (261) is further sandwiched at a place where the light source fixture (221) and the second air duct component (1322) are connected; or
the light source fixture (221) and the second air duct component (1322) are an integrated component.

39. The bladeless fan lamp according to claim 35, wherein the motor (12) is an outer rotor motor (12), and the outer rotor motor (12) is located inside the fan wheel (11) and comprises an inner stator assembly (122) and a rotor assembly (123),
the inner stator assembly (122) is connected to the light source fixture (221);
the rotor assembly (123) is sleeved on an outer side of the inner stator assembly (122) and connected to the fan wheel (11) to drive the fan wheel (11) to rotate; and
the vibration damping assembly (26) comprises a second vibration damping member (262) which is sandwiched between the inner stator assembly (122) and the light source fixture (221).

40. The bladeless fan lamp according to claim 1, wherein the fan mechanism (1) further comprises an air duct assembly (132) and a flow guide assembly (133),
the fan wheel (11) is provided with a plurality of blades (115), and the plurality of blades (115) are arranged in a vortex pattern;
the air duct assembly (132) surrounds the fan wheel (11) and forms an air duct space (1323) along the circumferential direction of the fan wheel (11), and an entrance of the air duct space (1323) faces and communicates with the air outlet (112) of the fan wheel (11); and
the flow guide assembly (133) is located inside the air duct space (1323), connected to the air duct assembly (132), and is configured to guide an airflow blown out from the fan wheel (11) to flow along a circumferential direction, wherein a guiding direction of the flow guide assembly (133) is opposite to a vortex direction of the plurality of blades (115).

41. The bladeless fan lamp according to claim 40, wherein the flow guide assembly (133) comprises a plurality of flow guide members (1331), and each flow guide member (1331) is provided with a flow guide surface (13311), and
an arrangement direction of a plurality of the flow guide surfaces (13311) is opposite to the vortex direction of the plurality of blades (115), and the airflow blown out from the fan wheel (11) is adapted to flow along the arrangement direction of the plurality of flow guide surfaces (13311).

42. The bladeless fan lamp according to claim 40, wherein the air duct assembly (132) comprises a first air duct component (1321) and a second air duct component (1322),
both the first air duct component (1321) and the second air duct component (1322) are arranged to surround the air outlet (112) of the fan wheel (11), wherein the first air duct component (1321) is adjacent to the top of the fan wheel (11), the second air duct component (1322) is adjacent to a bottom of the fan wheel (11), and the air duct space (1323) is formed between the first air duct component (1321) and the second air duct component (1322); and
one end, away from the fan wheel (11), of the first air duct component (1321) as well as one end, away from the fan wheel, of the second air duct component (1322) are close to each other and a gap is provided therebetween to form an annular opening (1324), and the annular opening (1324) is configured to discharge the airflow blown out from the fan wheel (11).

43. The bladeless fan lamp according to claim 42, wherein the fan wheel (11) comprises a top plate (114) and a bottom plate (113), and the blades (115) is fixed between the top plate (114) and the bottom plate (113), and
the first air duct component (1321) at least partially covers one side, away from the bottom plate (113), of the top plate (114) and bends in a direction towards the second air duct component (1322) at a first circumferential edge (1141) of the top plate (114) to form a bent part (13212), and the bent part (13212) comprises a vertical bent surface (132121)which is at least partially located on an outer side of the top plate (114), wherein the first circumferential edge (1141) is an edge on one side, away from a rotation axis of the fan wheel (11), of the top plate (114).

44. The bladeless fan lamp according to claim 43, wherein the vertical bent surface (132121) is spaced apart from the first circumferential edge (1141), and a radial distance between the vertical bent surface (132121) and the first circumferential edge (1141) is less than a radial distance between the flow guide member (1331) and the first circumferential edge (1141).

45. The bladeless fan lamp according to claim 43, wherein in a height direction from the bottom plate (113) to the top plate (114), the second air duct component (1322) is not higher than the bottom plate (113).

46. The bladeless fan lamp according to claim 45, wherein the second air duct component (1322) is spaced apart from a second circumferential edge (1134) of the bottom plate (113), and a radial distance between the second air duct component (1322) and the second circumferential edge (1134) is smaller than a distance between the flow guide member (1331) and the second circumferential edge (1134), wherein the second circumferential edge (1134) is an edge on one side, away from the rotation axis of the fan wheel (11), of the bottom plate (113).

47. The bladeless fan lamp according to claim 42, wherein the farther from the fan wheel (11), the closer the first air duct component (1321) and the second air duct component (1322) are to each other, such that the farther from the fan wheel (11) in a radial direction of the fan wheel (11), the smaller the cross-sectional area of the air duct space (1323).

48. The bladeless fan lamp according to any one of claims 42 to 47, wherein the flow guide member (1331) is connected to the first air duct component (1321) and obliquely arranged relative to an inner wall of the first air duct component (1321); and
the flow guide surface (13311) is a surface, facing away from the first air duct component (1321), of the flow guide member (1331), and a direction from a first end to a second end of the flow guide surface (13311) is parallel to a tangential direction of an arrangement direction of the plurality of flow guide surfaces (13311), wherein the first end is one end away from the first air duct component (1321), and the second end is one end connected to the first air duct component (1321).

49. The bladeless fan lamp according to claim 42, wherein the flow guide member (1331) abuts against the second air duct component (1322).

50. The bladeless fan lamp according to claim 48, wherein each flow guide member (1331) has a chordal tangent angle on the first air duct component (1321) that is greater than 15 degrees and less than 90 degrees.

51. The bladeless fan lamp according to claim 48, wherein the flow guide surface (13311) of at least one flow guide member (1331) is a curved surface, and the curved surface curves in a direction facing away from the first air duct component (1321).

52. The bladeless fan lamp according to any one of claims 41 to 51, wherein a distance between the flow guide member (1331) and the blade (115) of the fan wheel (11) is 0.3 to 0.7 times a width of the air duct space (1323).

53. The bladeless fan lamp according to any one of claims 41 to 51, wherein a number of the flow guide member (1331) is greater than or equal to a number of the blade (115) of the fan wheel (11).

54. The bladeless fan lamp according to any one of claims 40 to 53, wherein the flow guide member (1331) is provided with a first air guide part (13312), a tail end of the first air guide part (13312) is connected to the air duct assembly (132), and a bottom of the air duct assembly (132) forms an annular opening (1324),
wherein in a reference plane perpendicular to a central axis of the annular opening (1324), a connection line between a head end of the first air guide part (13312) and the central axis of the annular opening (1324) is set as a first reference line, and a connection line between the tail end of the first air guide part (13312) and the central axis of the annular opening (1324) is set as a second reference line, the second reference line and the first reference line are arranged sequentially along the circumferential direction of the fan wheel (11); and the first air guide part (13312) is arc-shaped, and a concave surface of the first air guide part (13312) faces away from the fan wheel (11).

55. The bladeless fan lamp according to claim 54, wherein the plurality of blades (115) are arranged in an annular configuration and surround the air inlet (111); and
in the reference plane perpendicular to the central axis of the annular opening (1324), a connection line between a tail end of the blade (115) and the rotation axis of the fan wheel (11) is set as a third reference line, a straight line perpendicular to the third reference line at the tail end of the blade (115) is set as a fourth reference line, an obtuse angle formed between the fourth reference line and a connection line between a head end and the tail end of the blade (115) is set as λ1, a connection line between the head end of the first air guide part (13312) and the rotation axis of the fan wheel (11) is set as a fifth reference line, a straight line perpendicular to the fifth reference line at the head end of the first air guide part (13312) is set as a sixth reference line, and an acute angle formed between the sixth reference line and a tangent at the head end of the first air guide part (13312) is set as λ2, and λ1 - 90° ≤ λ2 ≤ λ1 - 80°.

56. The bladeless fan lamp according to claim 55, wherein a connection line between the tail end of the first air guide part (13312) and the rotation axis of the fan wheel (11) is set as a seventh reference line, a straight line perpendicular to the seventh reference line at the tail end of the first air guide part (13312) is set as an eighth reference line, and an acute angle formed between the eighth reference line and a tangent at the tail end of the first air guide part (13312) is set as λ3, and λ2 + 20° ≤ λ3 ≤ λ2 + 40°.

57. The bladeless fan lamp according to claim 54, wherein the plurality of blades (115) are arranged in an annular configuration and surround the air inlet (111),
a leading edge (1151) of the blade (115) is provided with a forward protrusion structure (11511) which is located between a top and a bottom of the leading edge (1151), and protrudes in a direction towards the air inlet (111), wherein the leading edge (1151) is an edge, close to the air inlet (111), of the blade (115); and
a height of a top of the head end of the first air guide part (13312) is lower than a height of the forward protrusion structure (11511).

58. The bladeless fan lamp according to claim 57, wherein a height of a trailing edge (1152) of the blade (115) is set as H1, and a height difference between the top of the head end of the first air guide part (13312) and the forward protrusion structure (11511) is set as H2, and 0 < H2 ≤ 0.2H1, wherein the trailing edge (1152) is opposite the leading edge (1151).

59. The bladeless fan lamp according to claim 54, wherein a height of a bottom of the head end of the first air guide part (13312) is higher than a height of a bottom of the tail end of the first air guide part (13312); and/or
the height of the bottom of the head end of the first air guide part (13312) is lower than a height of the fan wheel (11) at the rotation axis.

60. The bladeless fan lamp according to claim 54, wherein along a direction from the air inlet (111) towards the annular opening (1324) of the air duct assembly (132), a distance between the head end of the first air guide part (13312) and the central axis of the annular opening (1324) gradually increases or gradually decreases.

61. The bladeless fan lamp according to claim 60, wherein a distance between a top of the head end of the first air guide part (13312) and the central axis of the annular opening (1324) is set as L1, a distance between a bottom of the head end of the first air guide part (13312) and the central axis of the annular opening (1324) is set as L2, and a maximum radius of the fan wheel (11) is set as R, and L2 > L1, and 0.05 ≤ L2 - L1 ≤ 0.2.

62. The bladeless fan lamp according to claim 60, wherein in the reference plane, an angle between a tangent at the tail end of the first air guide part (13312) and a connection line between the tail end of the first air guide part (13312) and the central axis of the annular opening (1324) is set as ε, and 0° < ε < 20°.

63. The bladeless fan lamp according to claim 60, wherein the flow guide member (1331) further comprises a second air guide part (13313), a head end of the second air guide part (13313) is connected to the head end of the first air guide part (13312), and the second air guide part (13313) faces the fan wheel (11),
wherein in the reference plane perpendicular to the central axis of the annular opening (1324), a connection line between a tail end of the second air guide part (13313) and the central axis of the annular opening (1324) is set as a ninth reference line, and the second reference line is located between the first reference line and the ninth reference line.

64. The bladeless fan lamp according to claim 63, wherein an angle between the ninth reference line and the second reference line is set as α, and 20° < α < 30°.

65. The bladeless fan lamp according to claim 63, wherein in the reference plane, an angle between the first reference line and the second reference line is set as γ, and 0° < γ < 15°.

66. The bladeless fan lamp according to claim 63, wherein in the reference plane, an angle at a place, where the first air guide part (13312) and the second air guide part (13313) are connected, is set as δ, and δ is an acute angle.

67. The bladeless fan lamp according to claim 66, wherein 9° < δ < 38°.

68. The bladeless fan lamp according to claim 63, wherein an angle between a tangent at the head end of the second air guide part (13313) and the first reference line is set as φ, and φ > 145°.

69. The bladeless fan lamp according to claim 63, wherein in the reference plane, a distance from the head end of the first air guide part (13312) to the central axis of the annular opening (1324) is set as r1, a maximum radius of the fan wheel (11) is set as R and a number of the flow guide member (1331) is set as z, and R ≤ r1 - R ≤ 0.4R.

70. The bladeless fan lamp according to claim 63, wherein a transition surface (13314) is provided at a place where the second air guide part (13313) and the first air guide part (13312) are connected, and
in the reference plane, a distance from the head end of the second air guide part (13313) to the central axis of the annular opening (1324) is set as r1, a maximum radius of the fan wheel (11) is set as R and a radius of the transition surface (13314) is set as r3, and 0.5 ≤ r3 ≤ 2.

71. The bladeless fan lamp according to claim 63, wherein a transition surface (13314) is provided at a place where the second air guide part (13313) and the first air guide part (13312) are connected, and
the transition surface (13314) has at least two positions with different distances to the central axis of the annular opening (1324).

72. The bladeless fan lamp according to claim 63, wherein along the direction from the air inlet (111) towards the annular opening (1324) of the air duct assembly (132), a distance between the transition surface (13314) and the central axis of the annular opening (1324) gradually increases, or gradually decreases, or first increases and then decreases, or first decreases and then increases.

73. The bladeless fan lamp according to claim 63, wherein along the circumferential direction of the fan wheel (11), the second air guide part (13313) sequentially comprises a first sub-air guide surface (133131) and a second sub-air guide surface (133132), and
the second sub-air guide surface is arc-shaped, and a convex surface of the second sub-air guide surface faces the fan wheel (11).

74. The bladeless fan lamp according to claim 73, wherein in the reference plane, an angle between a tangent at a tail end of the second sub-air guide surface and a connection line between the tail end of the second sub-air guide surface and the central axis of the annular opening (1324) is set as ω, and 0° < ω < 20°.

75. The bladeless fan lamp according to claim 63, wherein a transition surface (13314) is provided at a place where the second air guide part (13313) and the first air guide part (13312) are connected, and the transition surface (13314) has at least two positions with different radii.

76. The bladeless fan lamp according to claim 75, wherein along the direction from the air inlet (111) towards the annular opening (1324) of the air duct assembly (132), the radius of the transition surface (13314) gradually decreases.

77. The bladeless fan lamp according to any one of claims 40 to 76, wherein the fan mechanism (1) further comprises a motor (12), the motor (12) is connected to the fan wheel (11) to drive the fan wheel (11) to rotate, and the plurality of blades (115) surround the motor (12), and
a distance between a top of the leading edge (1151) of the blade (115) and the rotation axis of the fan wheel (11) is greater than a distance between a bottom of the leading edge (1151) and the rotation axis of the fan wheel (11); and/or, a distance between a top of the trailing edge (1152) of the blade (115) and the rotation axis of the fan wheel (11) is less than a distance between the bottom of the leading edge (1151) and the rotation axis of the fan wheel (11);
wherein the leading edge (1151) is an edge on one side, close to the rotation axis, of the blade (115), and the trailing edge (1152) is an edge on one side, away from the rotation axis, of the blade (115).

78. The bladeless fan lamp according to any one of claims 40 to 77, wherein the bottom of the air duct assembly (132) is provided with an annular opening (1324); the fan mechanism (1) further comprises a motor (12), the fan wheel (11) comprises a bottom plate (113), the plurality of blades (115) are fixed on the bottom plate (113), and the plurality of blades (115) surround the air inlet (111),
the motor (12) comprises a main body part (126) and an output shaft (127), the output shaft (127) is rotatably connected to the main body part (126), the main body part (126) is located below the bottom plate (113), and the output shaft (127) passes through the bottom plate (113); and
a top of the main body part (126) is higher than the bottom of the leading edge (1151) of the blade (115), a radial distance between the top of the leading edge (1151) and the top of the main body part (126) is set as L1, and a radial distance between the bottom of the leading edge (1151) and the top of the main body part (126) is set as L2, and L1 > L2, wherein the leading edge (1151) is an edge, close to the first air inlet (111), of the blade (115).

79. The fan lamp according to claim 78, wherein the leading edge (1151) of the blade (115) is provided with a forward protrusion structure (11511), and the forward protrusion structure (11511) is located between the top and the bottom of the leading edge (1151).

80. The bladeless fan lamp according to claim 79, wherein the leading edge (1151) of the blade (115) is provided with a forward protrusion structure (11511) which is located between the top and the bottom of the leading edge (1151), and
a distance between the top of the leading edge (1151) and the central axis of the annular opening (1324) is set as R1, a distance between the bottom of the leading edge (1151) and the central axis of the annular opening (1324) is set as R2, and a distance between the forward protrusion structure (11511) and the central axis of the annular opening (1324) is set as R3, and R1 > R2 > R3.

81. The bladeless fan lamp according to claim 79, wherein a height of the leading edge (1151) is set as H1, and a height of the forward protrusion structure (11511) from the bottom plate (113) is set as H2, and 0.5H1 < H2 ≤ 0.8H1.

82. The fan lamp according to claim 78, wherein the top of the main body part (126) is higher than a bottom of the trailing edge (1152) of the blade (115), and the trailing edge (1152) is opposite the leading edge (1151).

83. The bladeless fan lamp according to claim 82, wherein an axial distance between the top of the trailing edge (1152) of the blade (115) and the top of the main body part (126) is set as L3, and an axial distance between the bottom of the trailing edge (1152) and the top of the main body part (126) is set as L4, and L3 > L4; or
the fan lamp further comprises a plurality of flow guide members (1331), the plurality of flow guide members (1331) surround the fan wheel (11), an axial distance between the top of the trailing edge (1152) of the blade (115) and a bottom of a head end of the flow guide member (1331) is set as L5, and an axial distance between the bottom of the trailing edge (1152) and the bottom of the head end of the flow guide member (1331) is set as L6, and L5 > L6.

84. The bladeless fan lamp according to claim 82, wherein an axial distance between the top of the trailing edge (1152) of the blade (115) and a first side of the main body part (126) is set as L7, and an axial distance between the bottom of the trailing edge (1152) and the first side of the main body part (126) is set as L8, and L7 > L8, wherein the first side of the main body part (126) is one side, away from the bottom plate (113), of the main body part (126); or,
the fan lamp further comprises a plurality of flow guide members (1331)which surround the fan wheel (11), an axial distance between a top of a head end of the flow guide member (1331) and the first side of the main body part (126) is set as L9, and an axial distance between a first side of the head end of the flow guide member (1331) and the bottom of the main body part (126) is set as L10, and L9 > L10.

85. The bladeless fan lamp according to claim 78, wherein along a direction towards the bottom plate (113), a distance between the trailing edge (1152) of the blade (115) and the central axis of the annular opening (1324) gradually decreases, and the trailing edge (1152) is opposite the leading edge (1151).

86. The bladeless fan lamp according to claim 85, wherein along the direction towards the bottom plate (113), a rate at which the distance between the trailing edge (1152) of the blade (115) and the central axis of the annular opening (1324) decreases gradually slows down.

87. The bladeless fan lamp according to claim 78, wherein on a same reference cross-section, angles between leading edges (1151) of every two adjacent blades (115) and the central axis of the annular opening (1324) are not entirely the same, and the reference cross-section is perpendicular to the central axis of the annular opening (1324).

88. The bladeless fan lamp according to any one of claims 78 to 87, wherein along the direction towards the bottom plate (113), a distance between the trailing edge (1152) of the blade (115) and the rotation axis of the fan wheel (11) gradually decreases, and the trailing edge (1152) is opposite the leading edge (1151).

89. The bladeless fan lamp according to claim 88, wherein a distance between the bottom of the trailing edge (1152) and the central axis is set as D1, a distance between the top of the trailing edge (1152) and the rotation axis is set as D2, and a height of the trailing edge (1152) is set as H3, and 0.05H3 ≤ D2 - D1 ≤ 0.1H3.

90. The bladeless fan lamp according to any one of claims 78 to 87, wherein the trailing edge (1152) of the blade (115) is concave on a longitudinal section of the blade (115).

91. The bladeless fan lamp according to any one of claims 78 to 87, wherein the fan wheel (11) comprises seven blades (115), and
on the same reference cross-section, angles between lines connecting the leading edges (1151) of every two adjacent blades (115) to the rotation axis of the fan wheel (11) are 56.5°-57.5°, 47.0°-48.0°, 47.0°-48.0°, 56.5°-57.5°, 52.5°-53.5°, 44.5°-45.5°, and 52.5°-53.5°, respectively.

92. The bladeless fan lamp according to any one of claims 78 to 91, wherein on the longitudinal section of the blade (115), an area between the forward protrusion structure (11511) and the top of the leading edge (1151) is convex, and an area between the forward protrusion structure (11511) and the bottom of the leading edge (1151) is concave.

93. The bladeless fan lamp according to any one of claims 78 to 92, wherein a thickness of the blade (115) first increases and then decreases along a direction away from the leading edge (1151).
